(19) Europäisches Patentamt
European Patent Office
Office européen des brevets

(11) **EP 4 692 905 A1**

(12) **EUROPEAN PATENT APPLICATION**
published in accordance with Art. 153(4) EPC

(43) Date of publication:
**11.02.2026 Bulletin 2026/07**

(21) Application number: **24780797.7**

(22) Date of filing: **29.03.2024**

(51) International Patent Classification (IPC):
*G02C 7/00* (2006.01)    *G02B 1/115* (2015.01)
*G02C 7/02* (2006.01)    *G02C 7/10* (2006.01)

(52) Cooperative Patent Classification (CPC):
**G02B 1/113; G02B 1/115; G02C 7/00; G02C 7/02; G02C 7/10**

(86) International application number:
**PCT/JP2024/013022**

(87) International publication number:
**WO 2024/204702 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058667**

(71) Applicant: **Hoya Lens Thailand Ltd.**
**Pathumthani 12130 (TH)**

(72) Inventors:
• **KAWAJI Munenori**
  **Tokyo 160-8347 (JP)**
• **UEDA Kyosuke**
  **Tokyo 160-8347 (JP)**

(74) Representative: **Hoffmann Eitle**
**Patent- und Rechtsanwälte PartmbB**
**Arabellastraße 30**
**81925 München (DE)**

(54) **EYEGLASS LENS AND EYEGLASSES**

(57)    Provided is a spectacle lens including a lens substrate, and multilayer films respectively located on an object-side surface and an object-side surface of the lens substrate. A maximum value in a wavelength band of 380 nm to 780 nm on the object-side surface or an eyeball-side surface of the spectacle lens exceeds 2.00%, a surface where the maximum value exceeds 2.00% is defined as a surface 1, and the other surface is defined as a surface 2, Rb1 is an average reflectance in a wavelength band of 420 nm to 440 nm on the surface 1, Rb2 is an average reflectance in the wavelength band of 420 nm to 440 nm on the surface 2, Rg1 is an average reflectance in a wavelength band of 530 nm to 540 nm on the surface 1, Rg2 is an average reflectance in the wavelength band of 530 nm to 540 nm on the surface 2, Rr1 is an average reflectance in a wavelength bands of 440 nm to 460 nm and 560 nm to 580 nm on the surface 1, Rr2 is an average reflectance in the wavelength bands of 440 to 460 nm and 560 to 580 nm on the surface 2, Rb2, Rg2, and Rr2 are each 2.00% or less, and the spectacle lens satisfies all of Expressions 1 to 3 below.

Expression 1: Rb1*Rb2<2.0

Expression 2: Rg1*Rg2<2.0

Expression 3: Rr1*Rr2<2.0

**Description**

Technical Field

The present invention relates to a spectacle lens and spectacles.

Background Art

A spectacle lens is normally manufactured by forming a functional film for providing a desired function to the spectacle lens on the surface of a lens substrate. As such a functional film, a multilayer film may be provided on the surface of a lens substrate (for example, see PTL 1).

Citation List

Patent Literature

PTL 1: Japanese Patent No. 6073355

Summary of Invention

Technical Problem

In recent years, various products featuring various functions have been proposed and sold in the market of spectacle lenses. As a desirable matter for providing a spectacle lens having a higher added value in the market, good visibility can be mentioned.
An object of one aspect of the present invention is to provide a spectacle lens having good visibility.

Solution to Problem

Conventional multilayer films for spectacles have generally been designed to reflect light in a manner that either cuts blue light or matches a color suited to the wearer's preferences. Since spectacle lenses having such multilayer films inevitably exhibit high reflectance in certain wavelength bands, ghost light, which is light that has undergone multiple reflections within the spectacle lens, enters the spectacle wearer's eye while maintaining its intensity, thereby reducing visibility.
In contrast, Japanese Patent No. 6073355 (PTL 1) discloses a spectacle lens having a ghost light intensity that is evaluated by a stimulus value Y a predetermined value or less. Specifically, in the spectacle lens disclosed in Japanese Patent No. 6073355 (PTL 1), the ghost light intensity is reduced by configuring the lens such that one surface exhibits a maximum value of the reflection near a certain wavelength, while the other surface exhibits a minimum reflectance near the same wavelength.
However, in Japanese Patent No. 6073355 (PTL 1), the ghost light intensity is defined only with respect to the stimulus value Y, and from the viewpoint of color perception, the wearing evaluation is limited to evaluation mainly with respect to green light (evaluation of ghost light under fluorescent lighting).
In contrast, the present inventors considered that, from the viewpoint of color perception, it is desirable to reduce the ghost light intensity in terms of the XYZ tristimulus values in order to improve the visibility in spectacle lenses, since ghost light should be reduced in accordance with the response characteristics of human cone cells. Further extensive studies by the present inventors have newly revealed that, in a spectacle lens in which the maximum value of reflectance in the visible light region exceeds 2.00% on one surface, the ghost light intensity in terms of the XYZ tristimulus values can be effectively suppressed by controlling the reflection characteristics of each surface through the design of multilayer films so as to satisfy all of Expressions 1 to 3 below.
One aspect of the present invention is as follows.

[1] A spectacle lens including a lens substrate, and multilayer films respectively located on an object-side surface and an object-side surface of the lens substrate, in which

a maximum value in a wavelength band of 380 nm to 780 nm on the object-side surface or an eyeball-side surface of the spectacle lens exceeds 2.00%,
when a surface where the maximum value exceeds 2.00% is defined as a surface 1, and the other surface is defined as a surface 2,

Rb1 is an average reflectance in a wavelength band of 420 nm to 440 nm on the surface 1,

Rb2 is an average reflectance in the wavelength band of 420 nm to 440 nm on the surface 2,

Rg1 is an average reflectance in a wavelength band of 530 nm to 540 nm on the surface 1,

Rg2 is an average reflectance in the wavelength band of 530 nm to 540 nm on the surface 2,

Rr1 is an average reflectance in a wavelength bands of 440 nm to 460 nm and 560 nm to 580 nm on the surface 1, and

Rr2 is an average reflectance in the wavelength band of 440 nm to 460 nm and 560 nm to 580 nm on the surface 2,

Rb2, Rg2, and Rr2 are each 2.00% or less, and

the spectacle lens satisfies all of Expressions 1 to 3 below:

$$\text{Expression 1: } Rb1*Rb2 < 2.0$$

$$\text{Expression 2: } Rg1*Rg2 < 2.0$$

$$\text{Expression 3: } Rr1*Rr2 < 2.0.$$

[2] The spectacle lens according to [1], in which a difference in principal wavelength between the surface 1 and the surface 2 is 70 nm or less.

[3] The spectacle lens according to [1] or [2], in which excluding light that has been transmitted without being reflected even once, when an integrated ghost light intensity caused by multiple reflections is evaluated in terms of tristimulus values X, Y, and Z, each of the values X, Y, and Z (hereinafter, it is also referred to as "XYZ stimulus values of ghost light") is 1.50 E-02 or less.

[4] The spectacle lens according to [3], in which each of the values X, Y, and Z is 5.00 E-03 or less.

[5] The spectacle lens according to any one of [1] to [4], in which the multilayer film on the surface 2 side includes one or more layers having a refractive index of 1.20 or more and 1.38 or less.

[6] The spectacle lens according to any one of [1] to [5], in which the multilayer film on the surface 2 side includes one or more layers having a refractive index of 2.00 or more and 2.40 or less.

[7] The spectacle lens according to any one of [1] to [6], in which the multilayer film on the surface 2 side includes one or more layers having a refractive index of 1.44 or more and 1.49 or less.

[8] The spectacle lens according to any one of [1] to [7], in which a total number of layers of a high-refractive index layer and a low-refractive index layer of the multilayer film on the surface 2 side is 7 or more.

[9] The spectacle lens according to any one of [1] to [8], in which the difference in principal wavelength between the surface 1 and the surface 2 is 70 nm or less,

excluding light that has been transmitted without being reflected even once, when an integrated ghost light intensity caused by n-times reflections is evaluated in terms of tristimulus values X, Y, and Z, each of the values X, Y, and Z is 1.50 E-02 or less,

the multilayer film on the surface 2 side includes one or more layers having a refractive index of 1.20 or more and 1.38 or less, one or more layers having a refractive index of 2.00 or more and 2.40 or less, and one or more layers having a refractive index of 1.44 or more and 1.49 or less, and

a total number of layers of a high-refractive index layer and a low-refractive index layer of the multilayer film on the surface 2 side is 7 or more.

[10] The spectacle lens according to [9], in which each of the values X, Y, and Z is 5.00 E-03 or less.

[11] Spectacles including the spectacle lens according to any one of [1] to [10].

Advantageous Effects of Invention

According to one aspect of the present invention, it is possible to provide a spectacle lens in which the ghost light intensity at XYZ tristimulus values is suppressed to be low. In addition, according to one aspect of the present invention, it is possible to provide spectacles including the spectacle lens.

Brief Description of Drawings

[Fig. 1]

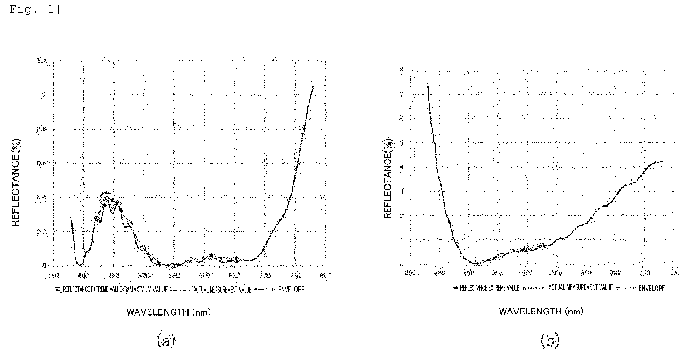

Fig. 1 illustrates a specific example of an envelope for obtaining a maximum value.
[Fig. 2]

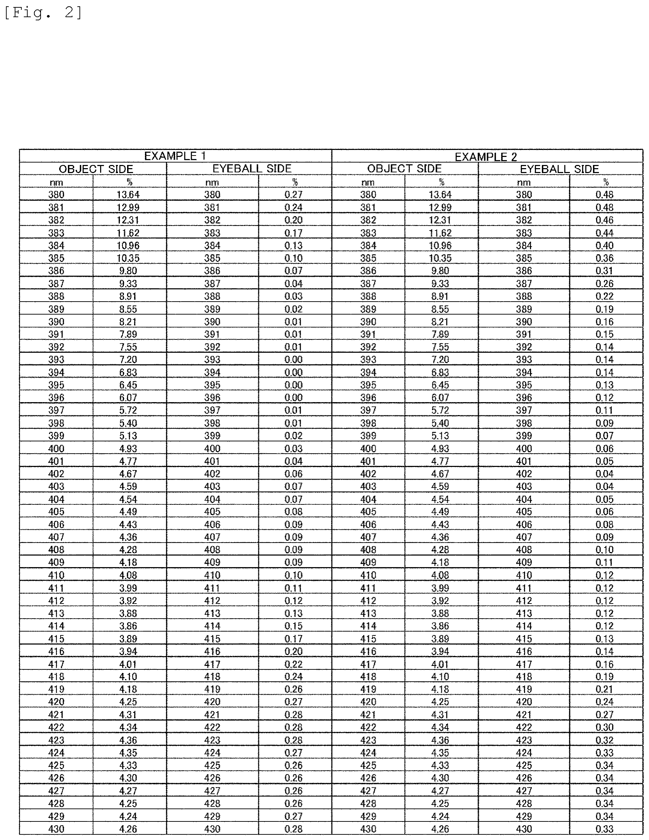

Fig. 2 illustrates a reflectance of an object-side surface and a reflectance of an eyeball-side surface at each wavelength of each of the spectacle lenses of Example 1 and Example 2.
[Fig. 3]

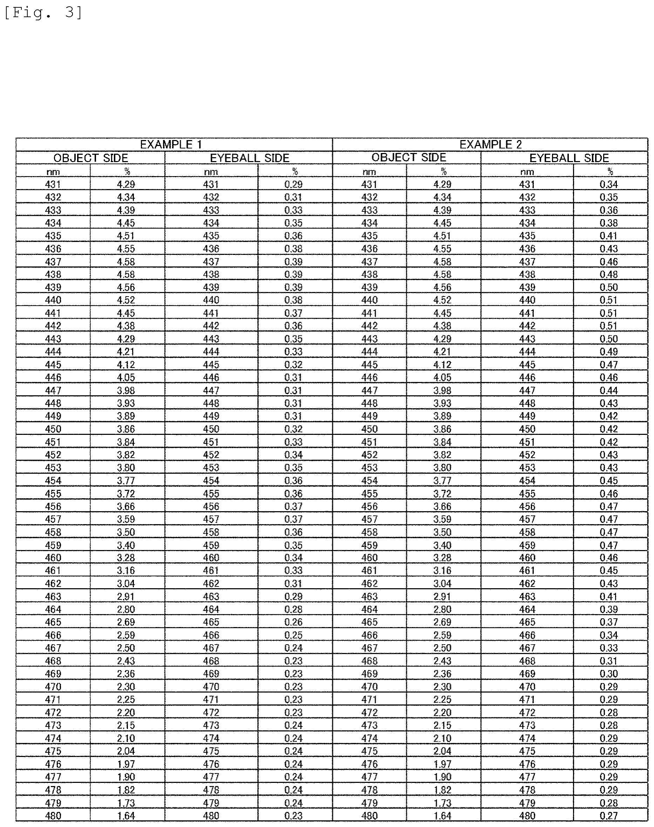

Fig. 3 illustrates the reflectance of the object-side surface and the reflectance of the eyeball-side surface at each wavelength of each of the spectacle lenses of Example 1 and Example 2.
[Fig. 4]

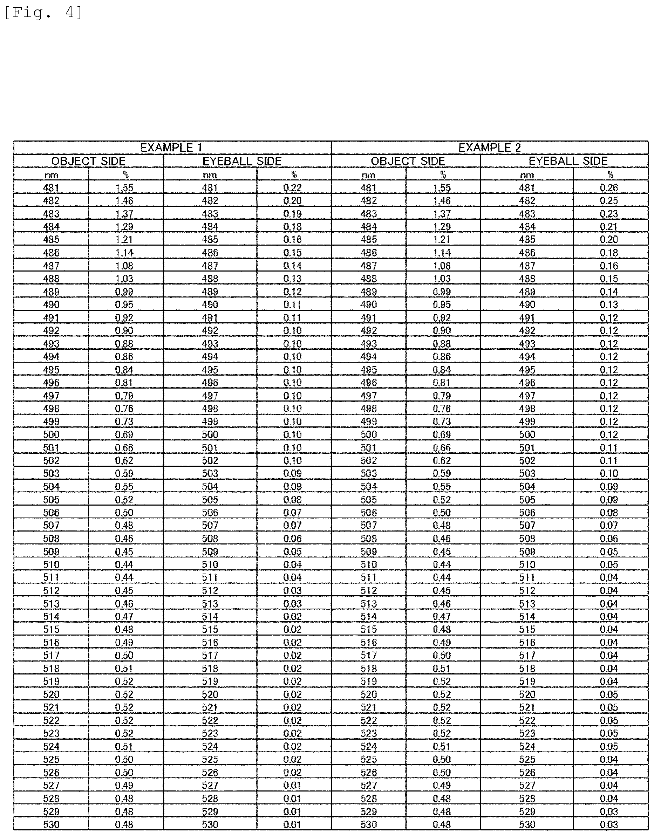

Fig. 4 illustrates the reflectance of the object-side surface and the reflectance of the eyeball-side surface at each wavelength of each of the spectacle lenses of Example 1 and Example 2.
[Fig. 5]

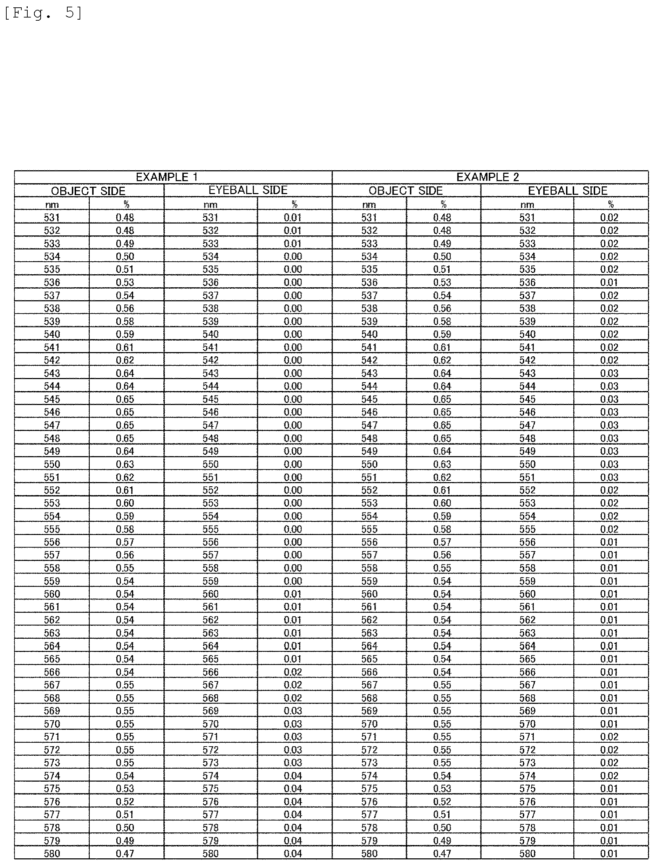

Fig. 5 illustrates the reflectance of the object-side surface and the reflectance of the eyeball-side surface at each wavelength of each of the spectacle lenses of Example 1 and Example 2.
[Fig. 6]

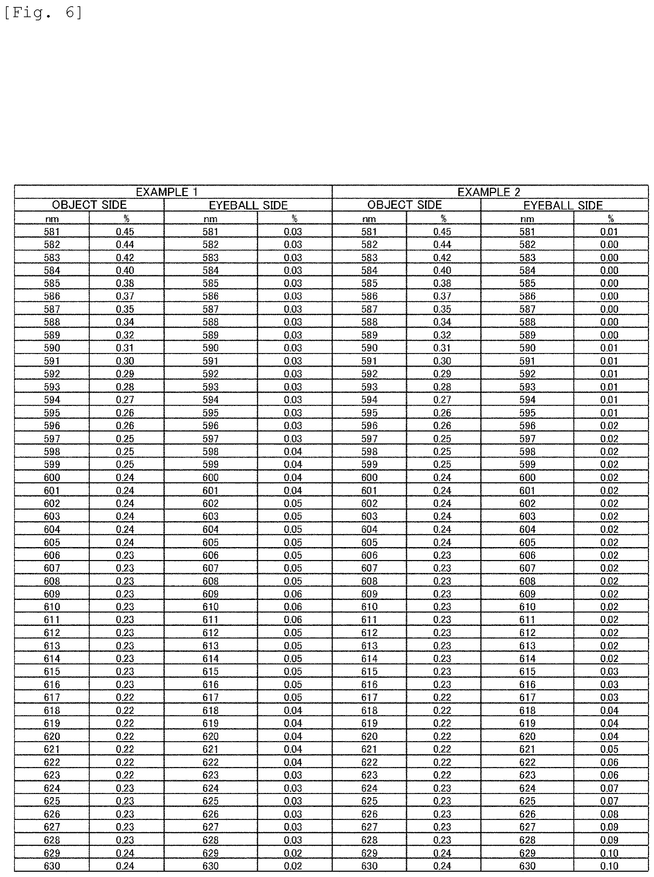

Fig. 6 illustrates the reflectance of the object-side surface and the reflectance of the eyeball-side surface at each wavelength of each of the spectacle lenses of Example 1 and Example 2.
[Fig. 7]

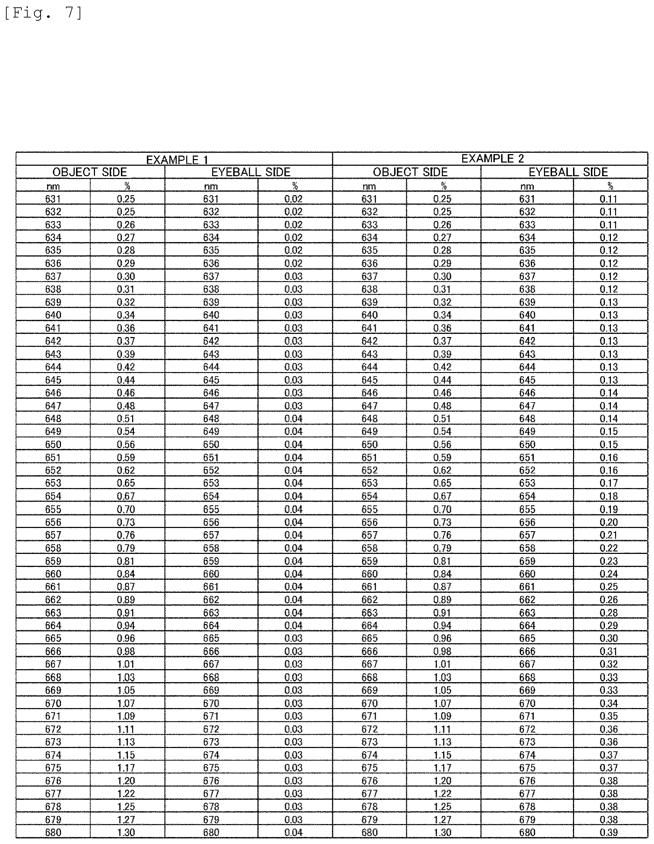

Fig. 7 illustrates the reflectance of the object-side surface and the reflectance of the eyeball-side surface at each wavelength of each of the spectacle lenses of Example 1 and Example 2.
[Fig. 8]

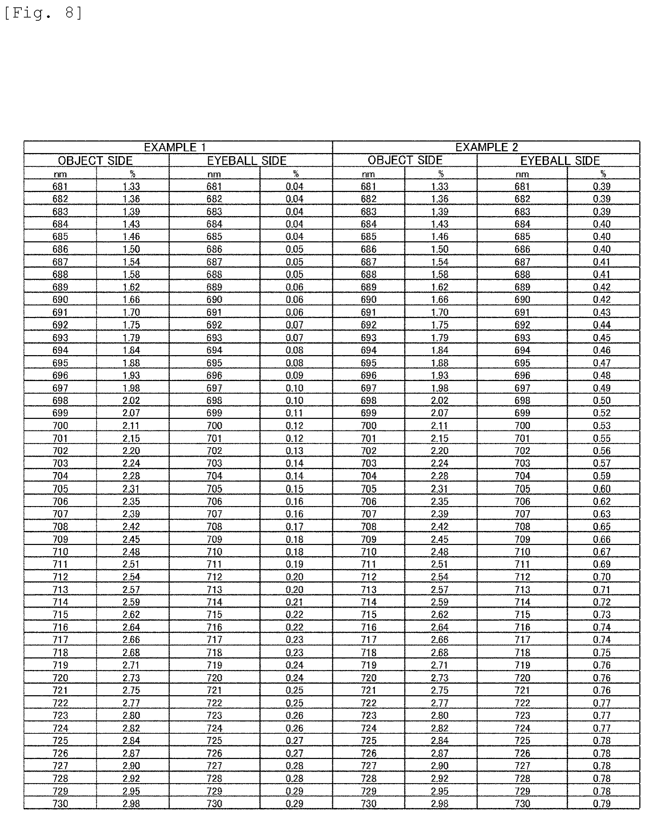

Fig. 8 illustrates the reflectance of the object-side surface and the reflectance of the eyeball-side surface at each wavelength of each of the spectacle lenses of Example 1 and Example 2.
[Fig. 9]

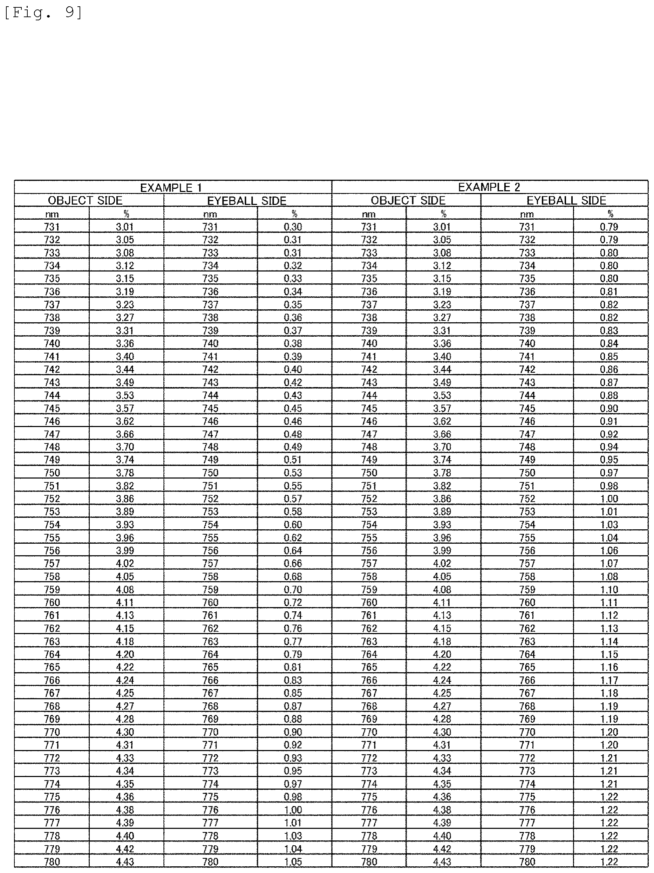

Fig. 9 illustrates the reflectance of the object-side surface and the reflectance of the eyeball-side surface at each wavelength of each of the spectacle lenses of Example 1 and Example 2.
[Fig. 10]

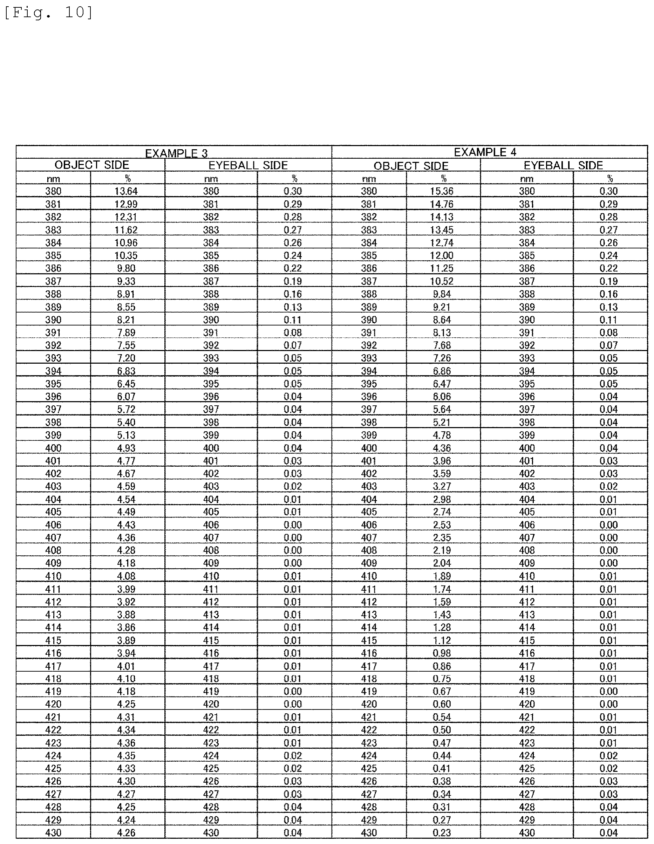

Fig. 10 illustrates a reflectance of an object-side surface and a reflectance of an eyeball-side surface at each wavelength of each of spectacle lenses of Example 3 and Example 4.
[Fig. 11]

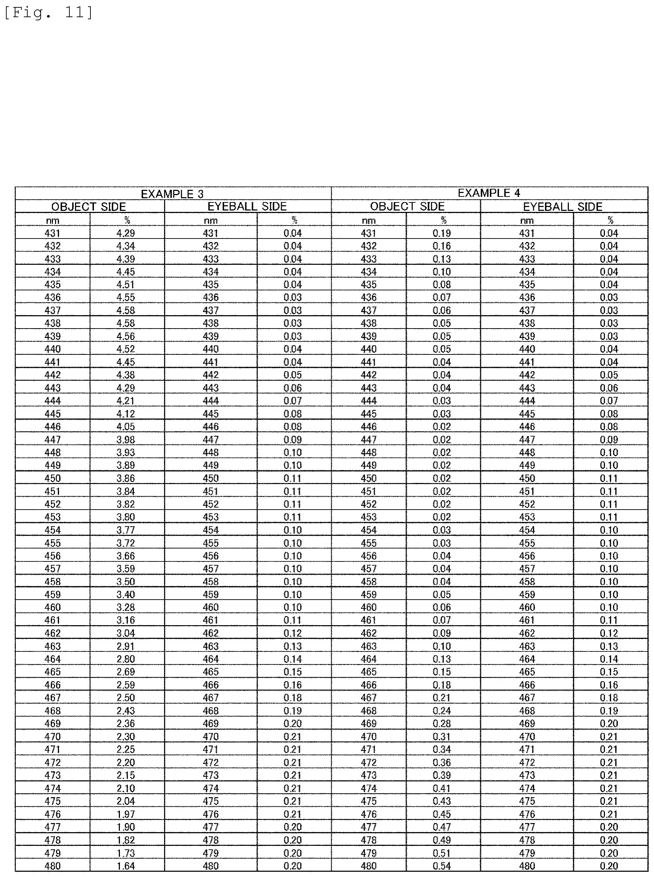

Fig. 11 illustrates the reflectance of the object-side surface and the reflectance of the eyeball-side surface at each wavelength of each of the spectacle lenses of Example 3 and Example 4.
[Fig. 12]

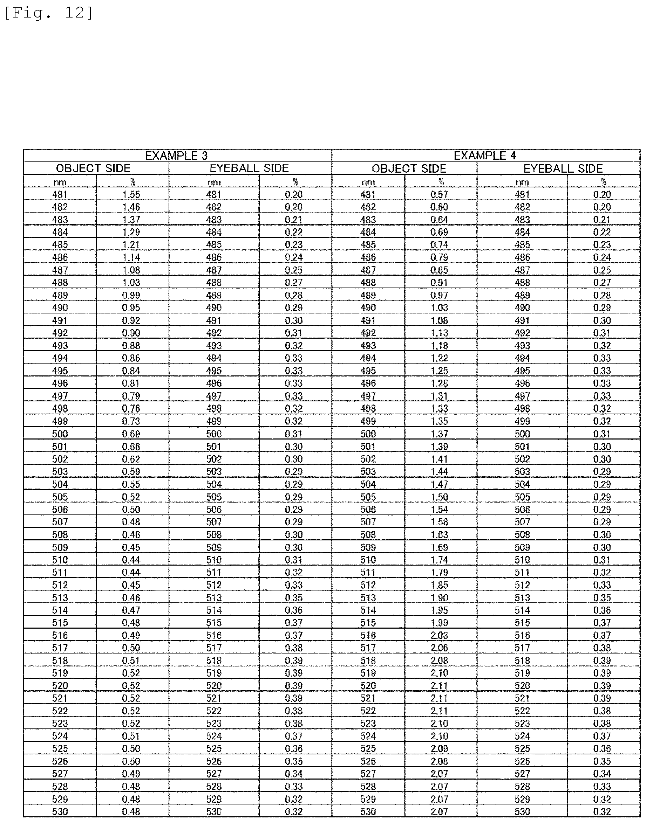

Fig. 12 illustrates the reflectance of the object-side surface and the reflectance of the eyeball-side surface at each wavelength of each of the spectacle lenses of Example 3 and Example 4.
[Fig. 13]

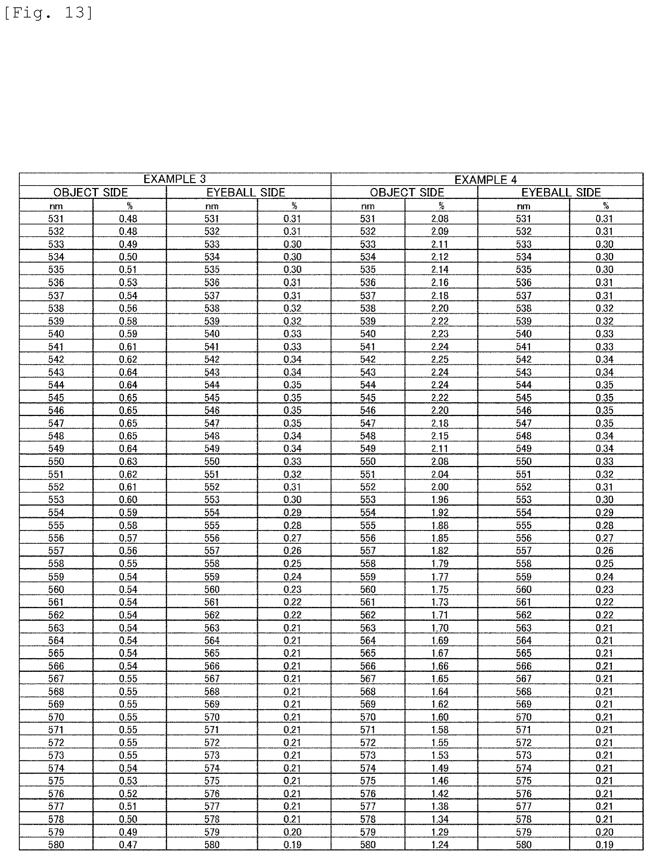

Fig. 13 illustrates the reflectance of the object-side surface and the reflectance of the eyeball-side surface at each wavelength of each of the spectacle lenses of Example 3 and Example 4.
[Fig. 14]

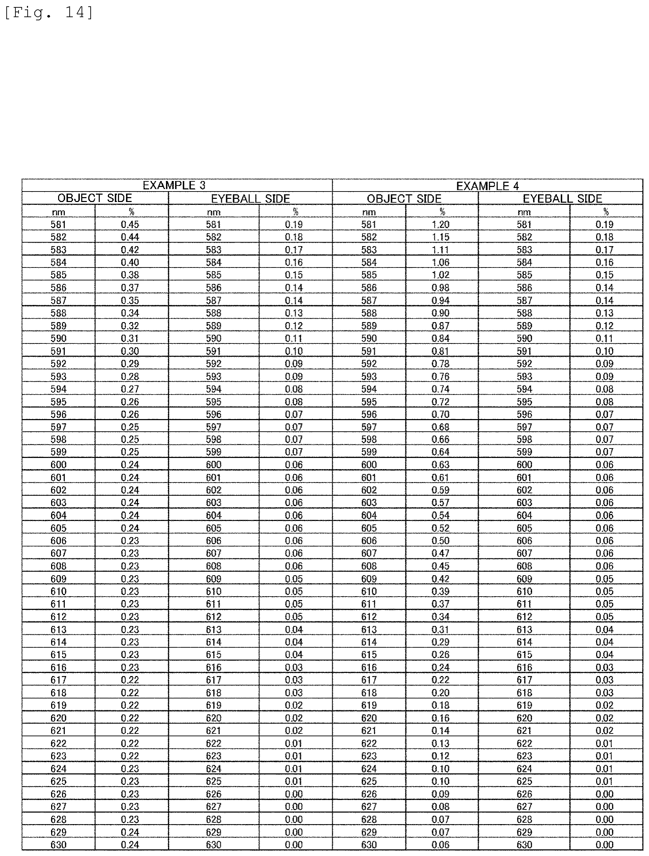

Fig. 14 illustrates the reflectance of the object-side surface and the reflectance of the eyeball-side surface at each wavelength of each of the spectacle lenses of Example 3 and Example 4.
[Fig. 15]

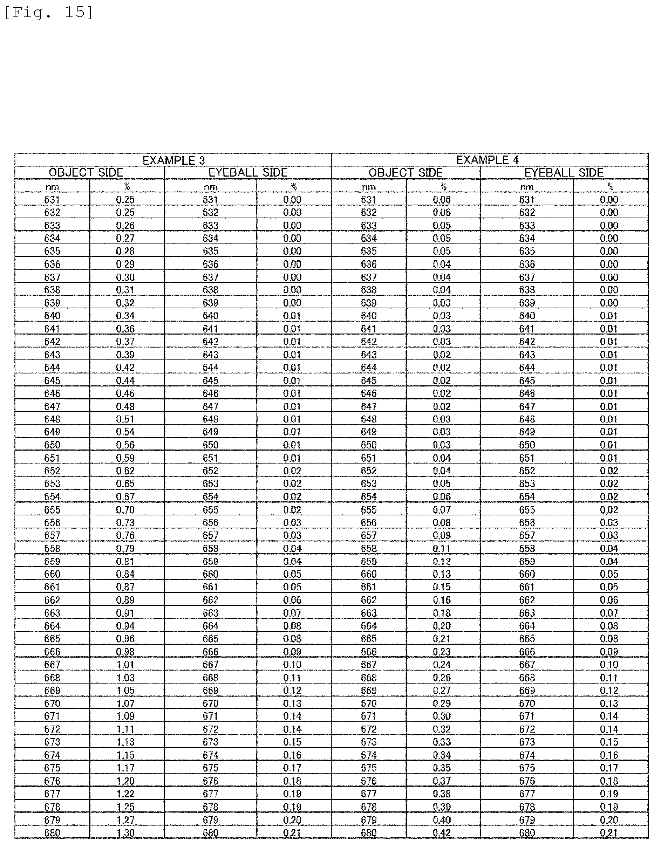

Fig. 15 illustrates the reflectance of the object-side surface and the reflectance of the eyeball-side surface at each wavelength of each of the spectacle lenses of Example 3 and Example 4.
[Fig. 16]

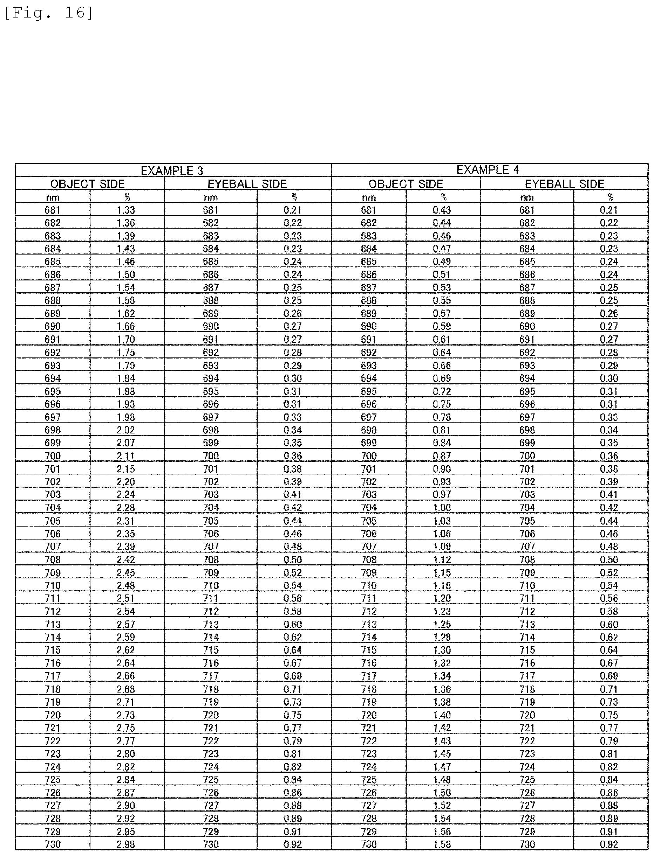

Fig. 16 illustrates the reflectance of the object-side surface and the reflectance of the eyeball-side surface at each wavelength of each of the spectacle lenses of Example 3 and Example 4.
[Fig. 17]

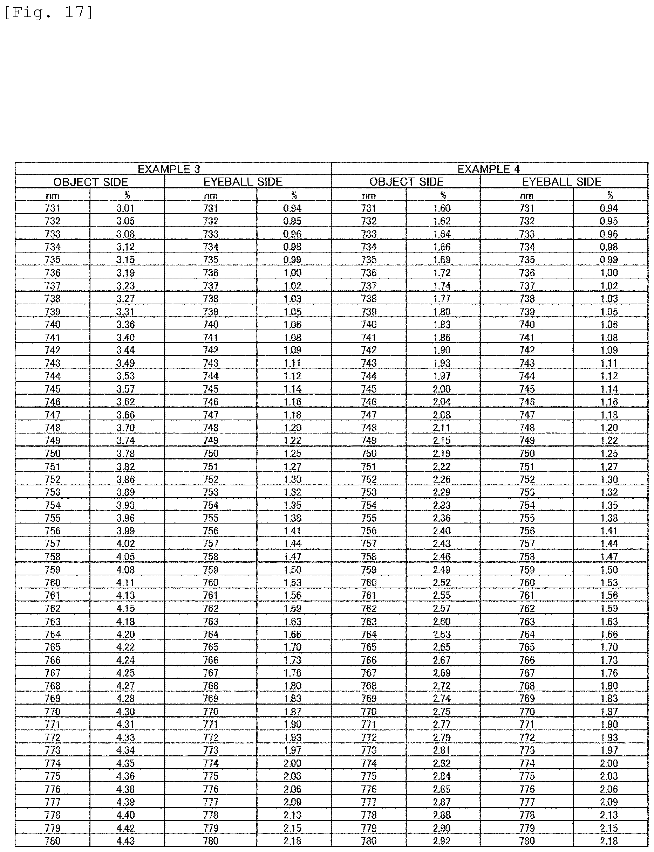

Fig. 17 illustrates the reflectance of the object-side surface and the reflectance of the eyeball-side surface at each wavelength of each of the spectacle lenses of Example 3 and Example 4.
[Fig. 18]

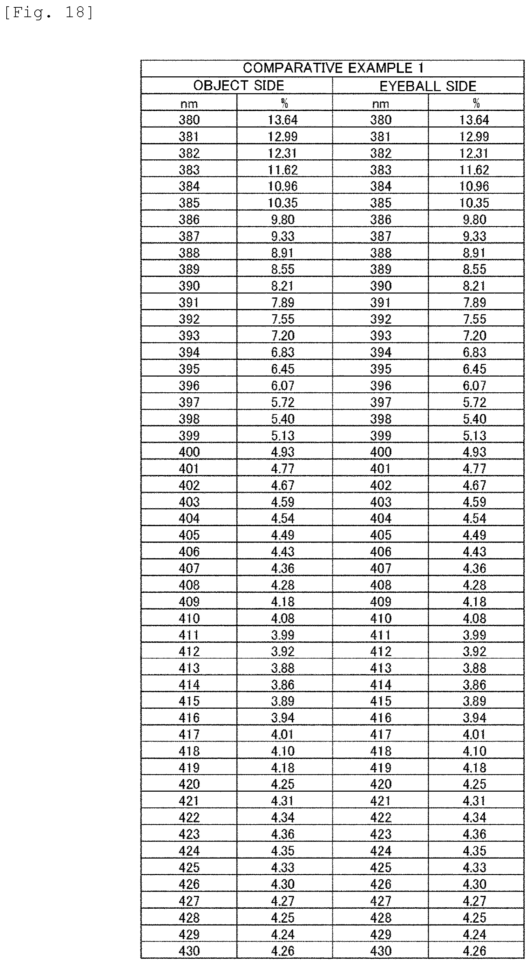

Fig. 18 illustrates a reflectance of an object-side surface and a reflectance of an eyeball-side surface at each wavelength of a spectacle lens of Comparative Example 1.
[Fig. 19]

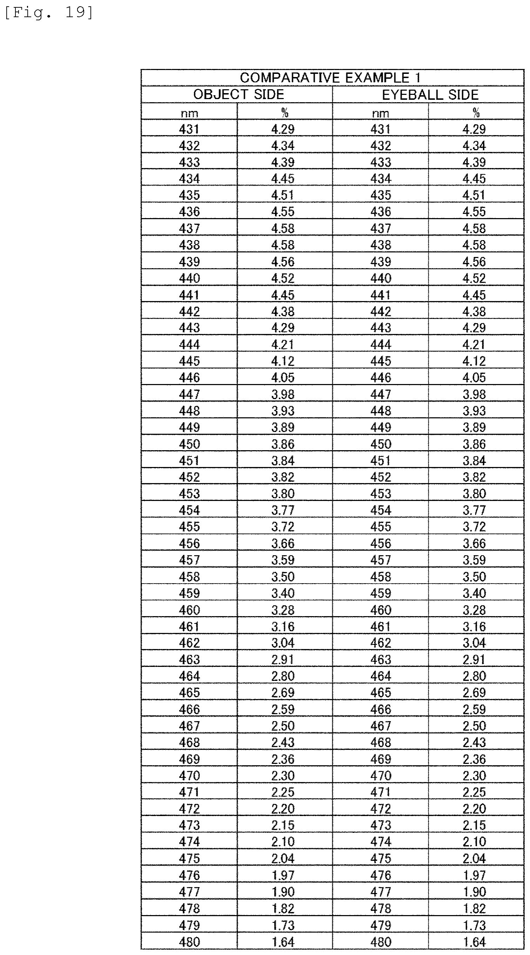

Fig. 19 illustrates the reflectance of the object-side surface and the reflectance of the eyeball-side surface at each wavelength of the spectacle lens of Comparative Example 1.
[Fig. 20]

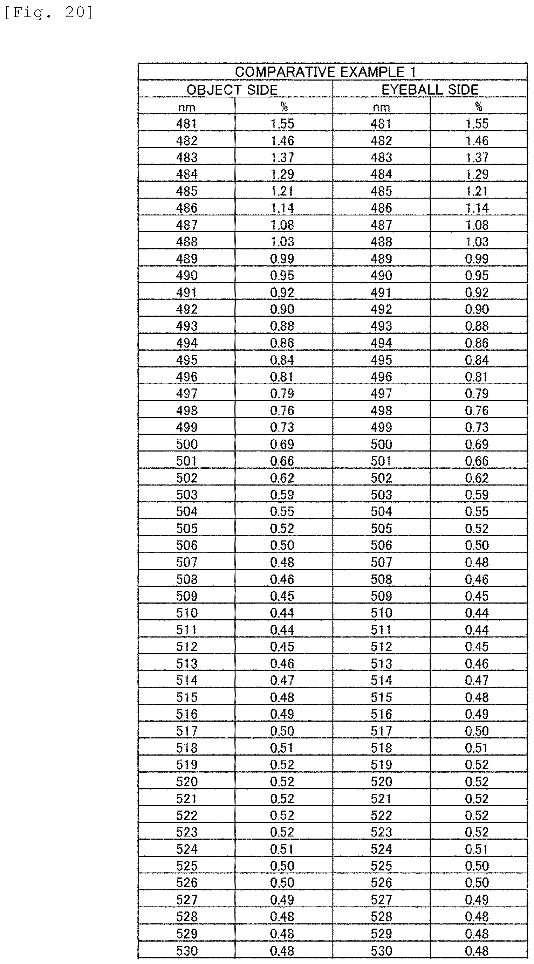

Fig. 20 illustrates the reflectance of the object-side surface and the reflectance of the eyeball-side surface at each wavelength of the spectacle lens of Comparative Example 1.
[Fig. 21]

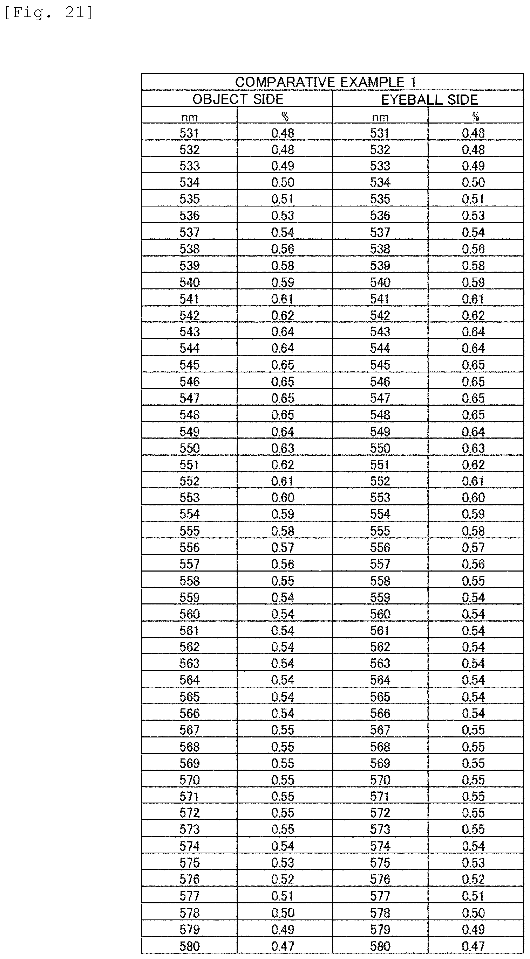

Fig. 21 illustrates the reflectance of the object-side surface and the reflectance of the eyeball-side surface at each wavelength of the spectacle lens of Comparative Example 1.
[Fig. 22]

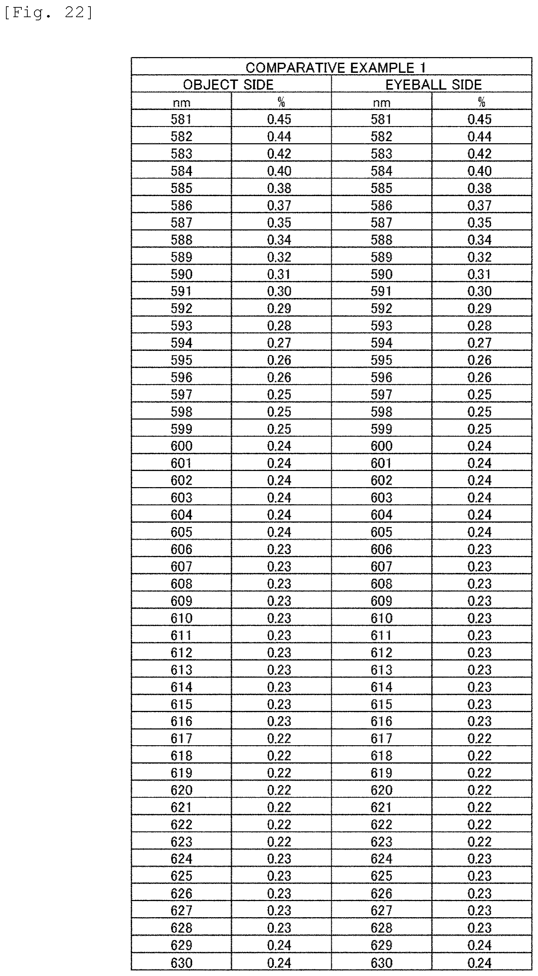

Fig. 22 illustrates the reflectance of the object-side surface and the reflectance of the eyeball-side surface at each wavelength of the spectacle lens of Comparative Example 1.
[Fig. 23]

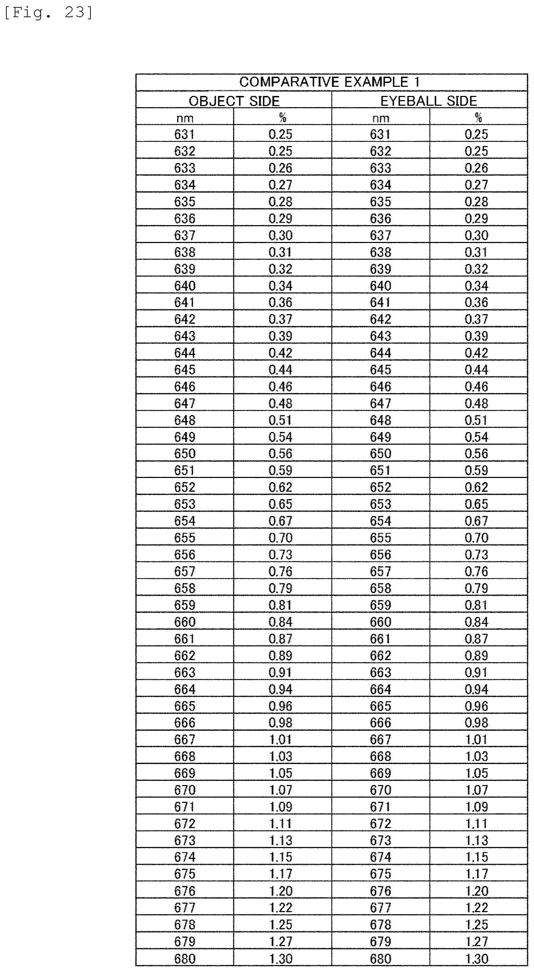

Fig. 23 illustrates the reflectance of the object-side surface and the reflectance of the eyeball-side surface at each wavelength of the spectacle lens of Comparative Example 1.
[Fig. 24]

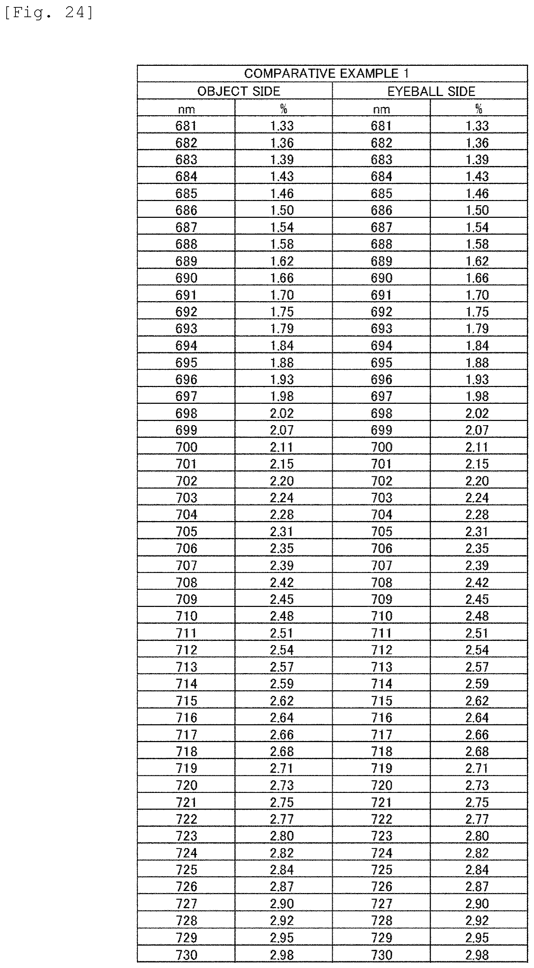

Fig. 24 illustrates the reflectance of the object-side surface and the reflectance of the eyeball-side surface at each wavelength of the spectacle lens of Comparative Example 1.
[Fig. 25]

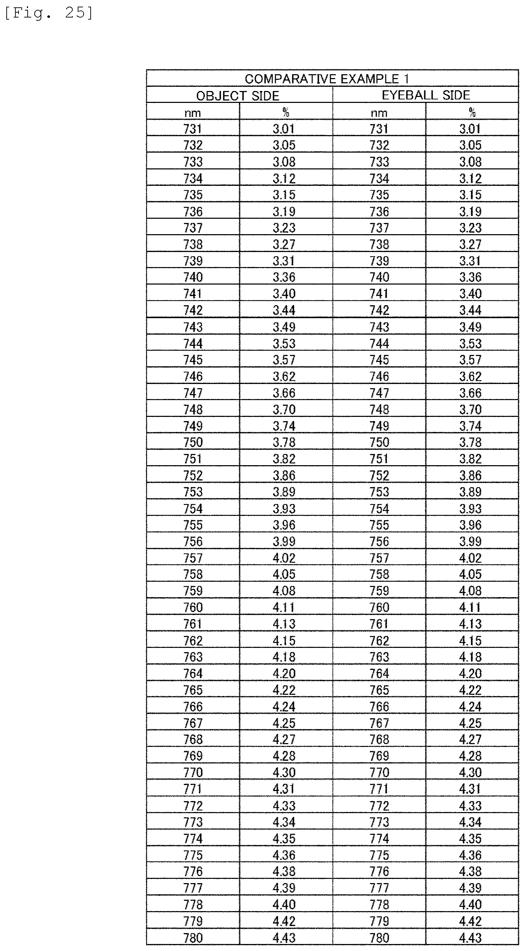

Fig. 25 illustrates the reflectance of the object-side surface and the reflectance of the eyeball-side surface at each wavelength of the spectacle lens of Comparative Example 1. Description of Embodiments

Definitions of terms and/or measurement methods of the present invention will be described hereinbelow.

The "object-side surface" is the surface positioned on the object side when spectacles having spectacle lenses are worn by a wearer. The "eyeball-side surface" is the surface on the other side, namely the surface positioned on the eyeball side when spectacles having spectacle lenses are worn by a wearer.

The reflectance measured for the surface of the spectacle lens is a reflectance for light normally incident on the surface. The incident angle of light during reflectance measurement can be set by a reflectance measurement device. With regard to the incident angle of light entering the surface to be measured, the incident angle of perpendicular incidence light is, strictly speaking, 0°. However, from the viewpoint of the measurement optical system, some reflectance measurement devices may use incident light with an incident angle of approximately 0° to 5° as perpendicular incidence light. Such cases are also intended to be included in the term "perpendicular incidence" as used in the present invention and in the present specification.

The reflectance can be measured, for example, at a pitch of 1 to 5 nm.

The average reflectance in a certain wavelength band is an arithmetic average of the reflectances obtained in the wavelength band.

In addition, some reflectance measurement devices may be affected by multiple reflections between a surface to be measured and an opposing surface. In such a case, multiple reflection may be suppressed by applying a treatment (for example, a black coating treatment or the like) for absorbing or scattering light rays to the opposing surfaces.

Hereinafter, the "maximum value" will be described.

Depending on the combination of the lens substrate and the hard coat layer described later, reflectance ripples having a period of approximately 5 to 30 nm may occur due to the reflectivity difference between the lens substrate and the hard coat layer and the thickness of the hard coat layer. In the present invention and in the present specification, the term "maximum value" in the wavelength band of 380 nm to 780 nm refers to the largest value among the reflectance values (extreme values or reflectance extreme value) at convex points in the upward direction within the 380 nm to 780 nm wavelength band, the point being one that is also macroscopically convex upward.

In order to find out extreme values, arithmetic processing may be performed. As one example, since the period of the reflectance ripples caused by the hard coat layer is typically about 5 to 30 nm, it is acceptable to apply an arithmetic moving average over a wavelength range of approximately 5 to 30 nm before and after a given point in order to smooth the ripple waveform to some extent and thereby identify the extreme values and maximum values.

In addition, the maximum value may be obtained from the envelope connecting the peak values of the ripples. A specific example of a method of obtaining the maximum value from the envelope connecting the peak values of the ripple will be described below. For the examples and comparative examples described below, the maximum values were determined by the following method.

An upwardly convex point (extreme value) is identified within a certain wavelength interval, and the maximum value is found on the basis of the line connecting these extreme values (that is, the envelope of the spectral reflectance). Variables are defined as follows.

Let a single wavelength for evaluating the extreme value be denoted as $\lambda 0$, and let the evaluation wavelength interval be denoted as $\Delta\lambda$, then the wavelength shorter than $\lambda 0$ is defined as $\lambda s = \lambda 0 - \Delta\lambda$, and the longer wavelength is defined as λl=λ0+Δλ.

The reflectance at the wavelength is R(A).

A sign function SING(x) is defined such that SING(x)=+1 in a case where x is positive, SING(x)=-1 in a case where x is negative, and SING(x)=0 in a case where x is zero.

In the above, in a case where λ0 is the maximum within the range of ±Δλ, the point is convex. Therefore, R(λ0) at the wavelength λ0 is determined to be the extreme value when the following expression is satisfied:

$$\mathrm{SING}(R(\lambda 0)-R(\lambda s))-\mathrm{SING}(R(\lambda l)-R(\lambda 0))>0.$$

The wavelength λ0 thus obtained is a point that is convex including a ripple.

In addition, the wavelength interval Δλ at this time is preferably shorter than the ripple period confirmed on the surface to be measured, and more preferably λ0±1 nm is λs and λ1. For the examples and comparative examples described below, λ0±1 nm was set to λs and λl.

Next, an envelope connecting the obtained convex points is taken.

A point at which the reflectance is highest obtained from the envelope is confirmed, and if the point is a point that is a macro-convex point, the point is a maximum value. The reflectance of this maximum value is not an average reflectance value from which the ripple is removed, but an actual measurement of the reflectance.

In addition, in a case where the numerical analysis described above results in the point of highest reflectance being located at one end of the obtained envelope, that point shall be compared with the original reflectance waveform obtained prior to the numerical analysis to confirm whether the point is macro-convex.

Fig. 1 illustrates a specific example of an envelope for obtaining a maximum value. Fig. 1 illustrates an envelope for some wavelength bands of the wavelength band between 380 nm and 780 nm for illustration. In Fig. 1(a), the extreme value marked with a circle is the maximum value. In Fig. 1(b), the extreme value at the right end of the envelope is the highest reflectance on the envelope, but this point does not correspond to the maximum value because it is not a macro-convex shape if the longer wavelength band is included.

In the above numerical analysis, since if the measurement data contains significant noise, peak detection may be erroneous, the measurement noise may be smoothed.

In addition, in a case where there is no extreme value or maximum value in the above definition, it is determined that there is no maximum value.

Excluding light that has been transmitted without being reflected even once, the values of X, Y, and Z when the integrated ghost light intensity caused by multiple reflections is evaluated in terms of the tristimulus values X, Y, and Z are obtained as follows.

The ghost light intensity is defined by the following equation:

Ghost light intensity = T1* T2* R1* R2* Ti$^{3}$* ((1-r$^{n}$)/(1-r))

In the Expressions, where

Ti: Internal transmittance (%) of the lens substrate of the spectacle lens,
R1: Surface reflectance (%) of the surface 1,
R2: Surface reflectance (%) of the surface 2,
T1: Surface transmittance (%) of the surface 1,
T2: Surface transmittance (%) of the surface 2, and

$$r=(R1*R2)*Ti^{2}.$$

Here, n represents the number of multiple reflections occurring inside of the spectacle lens. Since multiple reflections occur, n is infinite ($\infty$). Each surface reflectance is considered to be less than 100%. Thus, since |r|<1 is satisfied, the ghost light intensity is given by: Ghost light intensity = T1*T2*R1*R2*Ti$^{3}$*(1/(1-(R1*R2)*Ti$^{2}$).

Light losses at 380 nm to 780 nm of each surface of the surfaces 1 and 2 are considered negligible. Thus, since for each surface of the surface 1 and the surface 2, T1+R1= 100% and T2+R2=100% are satisfied, as a result, the ghost light intensity is obtained by the following equation:

Ghost light intensity = (1-R1)(1-R2) R1*R2*Ti$^{3}$/(1-R1*R2*Ti$^{2}$)

The ghost light intensity is calculated at each wavelength from the above Expression, and from the obtained spectral characteristic, an XYZ stimulus value can be calculated by the D65-CIE2° visual field XYZ color system of International Commission on Illumination (CIE) 1931 color system (XYZ color system).

R1, R2, and Ti can be measured by a common spectrometer.

The surface reflectances R1 and R2 can be directly measured by using, for example, a lens reflectance measurement device USPM-RU manufactured by Olympus Corporation or a spectrophotometer UH4150 manufactured by Hitachi High-Tech Corporation.

An example of a method of calculating an internal transmittance Ti can be given as follows.

After measuring the surface reflectance R0 of the lens substrate and the total light transmittance T of both surfaces of the lens substrate, Ti is calculated from the following expression.

[Math. 1]

$$\mathsf{Ti} = \frac{-(1-Ro)^2 \pm \sqrt{(1-Ro)^4 - 4T^2Ro^2}}{2TRo^2}$$

Ti is a parameter that depends on the thickness of the lens substrate. An absorption coefficient $\alpha$ is obtained using a parallel flat plate of the same thickness d made of the same material as that of the lens substrate instead of the lens substrate included in the spectacle lens to be measured, Ti is calculated from Lambert-Beer's law (Ti=exp ($\alpha$d)), and the Ti may be used as the value of the internal transmittance of the lens substrate.

The above calculation method is a general method. The method mentioned here is only an example, and other methods may also be employed.

In addition, if the lens substrate is not stained and contains no additive that absorbs visible light, the internal transmittance Ti is 100%, so that the ghost light intensity can be determined by the following expression:

```
Ghost light intensity = (1-R1)(1-R2) R1* R2/(1-R1* R2)
```

The ghost light intensity may be calculated at each wavelength from the above Expression, and from the obtained spectral characteristic, an XYZ stimulus value may be calculated by the D65-CIE2° visual field XYZ color system of International Commission on Illumination (CIE) 1931 color system (XYZ color system).

The "film thickness" described in the present specification is a physical film thickness. The film thickness can be determined by a known film thickness measurement method. For example, the film thickness can be determined by converting the optical film thickness measured with an optical film thickness measuring device into the physical film thickness.

[Spectacle Lens]

Hereinafter, a spectacle lens according to one aspect of the present invention will be described in more detail.

<Multilayer Film>

The spectacle lens has a multilayer film on each of the object-side surface and the object-side surface of the lens substrate. The multilayer film may be located directly on the surface of the lens substrate or indirectly on the surface of the lens substrate via one or more other layers. Examples of the layer that can be formed between the lens substrate and the multilayer film may include a polarizing layer, a light control layer and a hard coat layer. By providing the hard coat layer, the durability (strength) of the spectacle lens can be enhanced. The hard coat layer may be, for example, a cured layer generated by curing a curable composition. For the details on the hard coat layer, see, for example, paragraphs 0025 to 0028 and 0030 of Japanese Patent Application Publication No. 2012-128135. In addition, a primer layer for improving adhesive property may be formed between the lens substrate and the multilayer film. For the details on the primer layer, see, for example, paragraphs 0029 and 0030 of Japanese Patent Application Publication No. 2012-128135.

The multilayer film can have a laminated structure in which high-refractive index layers and low-refractive index layers are alternately laminated. In the present invention and the present specification, the terms "high" and "low" in relation to the high-refractive index layer and the low-refractive index layer are used as relative expressions with respect to the refractive index of the lens substrate included in the spectacle lens. The high-refractive index layer means a layer having a higher refractive index than the lens substrate. The low-refractive index layer means a layer having a lower refractive index than the lens substrate. The multilayer film may include three or more layers having different refractive indices. In the present invention and this specification, the "refractive index" refers to the refractive index with respect to light having a wavelength of 500 nm. The lens substrate of the spectacle lens generally has a refractive index of about 1.50 to 1.76, the low-refractive index layer can be a layer having a refractive index of 1.50 or less, and the high-refractive index layer can be a layer having a refractive index of 1.76 or more.

The refractive index of the high-refractive index layer can be, for example, 2.00 or more and 2.40 or less, and 2.00 or more and 2.20 or less.

With respect to the low-refractive index layer, in the multilayer film on the surface 2 side, it is preferable that the refractive index of one or more low-refractive index layers is 1.20 or more and 1.38 or less. Hereinafter, a low-refractive index layer having a refractive index of 1.20 or more and 1.38 or less is referred to as an "ultra-low-refractive index layer". The number of layers of the ultra-low-refractive index layers included in the multilayer film on the surface 1 side and the multilayer film on the surface 2 side can be 0 or more and 2 or less, preferably 0 or more and 1 or less, more preferably 1 layer for the surface 2, and more preferably 0 layer for the surface 1. In an aspect, the low-refractive index layer can be located on the outermost layer of the multilayer film on the surface 2 side.

The multilayer film including the ultra-low-refractive index layer may also include one or more low-refractive index layers other than the ultra-low-refractive index layer. The refractive index of such a low-refractive index layer can be, for example, 1.44 or more and 1.49 or less.

In addition, the multilayer film not including the ultra-low-refractive index layer can include one or more layers having a refractive index of 1.44 or more and 1.49 or less as the low-refractive index layer.

However, as described above, since the notations "high" and "low" regarding the high-refractive index layer and the low-refractive index layer are relative notations with respect to the refractive index of the lens substrate, the refractive indexes of the high-refractive index layer and the low-refractive index layer are not limited to the above ranges.

A high-refractive index material constituting the high-refractive index layer and a low-refractive index material constituting the low-refractive index layer may respectively be an inorganic material, an organic material or an inorganic/organic composite material and is preferably an inorganic material from the viewpoint of film-forming properties and the like. That is, the multilayer film is preferably an inorganic multilayer film. Specifically, examples of the high-refractive index material configuring the high-refractive index layer may include one or a mixture of two or more oxides selected from the group consisting of zirconium oxides (for example, $ZrO_2$), tantalum oxides (for example, $Ta_2O_5$), titanium oxides (such as $TiO_2$), aluminum oxides ($Al_2O_3$), yttrium oxides (such as $Y_2O_3$), hafnium oxides (such as $HfO_2$) and niobium oxides (such as $Nb_2O_5$). Examples of the low-refractive index material configuring the low-refractive index layer may include one or a mixture of two or more oxides or fluorides selected from the group consisting of silicon oxides (such as $SiO_2$), magnesium fluorides (such as $MgF_2$) and barium fluorides (such as $BaF_2$). In these examples, the oxides and fluorides are indicated by stoichiometric composition, but the oxides and fluorides including oxygen or fluoride in an amount less than or more than the stoichiometric amount may also be used for the high-refractive index material or the low-refractive index material.

Preferably, the high-refractive index layer is a film containing the high-refractive index material as a main component, and the low-refractive index layer is a film containing the low-refractive index material as a main component. The main component as used herein is the component that accounts for the most proportion of the film, and is the component that usually accounts for about 50% by mass to 100% by mass, and even about 90% by mass to 100% by mass relative to the mass of the film. The film (for example, a vapor deposition film) can be formed by performing film formation using a film forming material (for example, a vacuum deposition source, a sputtering target, and the like) containing the high-refractive index material or the low-refractive index material as a main component. The same as above applies to the main component with respect to the film forming material. In some cases, the film or the film forming material contains unavoidable impurities. The film or the film forming material may contain other components such as inorganic substances and known additives to assist in film forming within a range of not diminishing the function of the main component.

As a method of forming a multilayer film, a known film forming method can be used. From the viewpoint of ease of film formation, film formation is preferably performed by vapor deposition. That is, each layer included in the multilayer film is preferably a vapor deposition film. The vapor deposition film means a film formed by vapor deposition. The "vapor deposition" in the present invention and the present specification includes a dry method, for example, a vacuum vapor deposition method, an ion plating method, a sputtering method, and the like. In the vacuum vapor deposition method, an ion beam assist method of simultaneously irradiating an ion beam during vapor deposition may be used. As the sputtering method, a direct current (DC) method, a radio frequency (RF) method, or the like may be used. With regard to the ultra-low-refractive index layer, the present inventors have newly found that simultaneous deposition of the vacuum vapor deposition method and the DC sputtering method is preferred for deposition of the ultra-low-refractive index layer. The refractive index of the ultra-low-refractive index layer can be controlled by adjusting the current value at the time of film formation by the vacuum vapor deposition method, the gas flow rate at the time of film formation by the DC sputtering method, the input power, and the like.

The multilayer film on the surface 1 side and the multilayer film on the surface 2 side can be, for example, a multilayer film in which a high-refractive index layer and a low-refractive index layer are alternately laminated in a total number of seven or more layers. The total number of layers of the high-refractive index layer and the low-refractive index layer can be, for example, 11 or less. The film thickness of the high-refractive index layer and the film thickness of the low-refractive index layer can be decided according to the layer configuration. Specifically, the combination of the layers to be included in the multilayer film and the film thickness of each layer can be decided by optical simulation by a known method based on the refractive indices of the film forming materials for forming the high-refractive index layer and the low-refractive index layer and the physical properties wished to be imparted to the spectacle lens by providing the multilayer film.

The ultra-low-refractive index layer can be a layer containing silicon oxide, and preferably a layer containing silicon oxide as a main component. The multilayer film including such an ultra-low-refractive index layer can include one or more layers including a silicon oxide other than the ultra-low-refractive index layer as a low-refractive index layer. Such a low-refractive index layer is preferably a layer containing silicon oxide as a main component.

Examples of the high-refractive index layer included in the multilayer film include a layer containing a zirconium oxide, a layer containing a niobium oxide, and a layer containing a tantalum oxide, and these layers are preferably layers containing the above oxide as a main component.

In the multilayer film, the high-refractive index layer and the low-refractive index layer may be in direct contact with each other, and at least one laminated structure may be included in which a conductive oxide layer described below exists between the high-refractive index layer and the low-refractive index layer.

The film thickness of each layer of the high-refractive index layer and the low-refractive index layer included in the multilayer film can be, for example, 1 to 500 nm, and the total thickness of the multilayer film can be, for example, 100 to 900 nm(in a case where the conductive oxide layer is included, the thickness of the conductive oxide layer is also included).

In addition to the high-refractive index layer and the low-refractive index layer described above, the multilayer film may further include one or more layers containing a conductive oxide (also referred to as a "conductive oxide layer") at any position within the multilayer film. The conductive oxide layer can be a layer mainly composed of a conductive oxide, and is preferably a vapor deposition film of a conductive oxide formed by deposition using a deposition source mainly composed of a conductive oxide.

From the viewpoint of transparency of the spectacle lens, preferred examples of the conductive oxide layer include a tin-doped indium oxide (ITO) layer having a film thickness of 10 nm or less, a tin oxide layer having a film thickness of 10 nm or less, and a titanium oxide layer having a film thickness of 10 nm or less. The term "tin-doped indium oxide (ITO) layer" refers to a layer mainly composed of ITO. This also applies to the tin oxide layer and the titanium oxide layer. In the present invention and specification, the tin-doped indium oxide (ITO) layer having a film thickness of 10 nm or less, the tin oxide layer having a film thickness of 10 nm or less, and the titanium oxide layer having a film thickness of 10 nm or less that are included in the multilayer film shall not be regarded as the "high-refractive index layer" or the "low-refractive index layer". In other words, even if one or more of these layers are included in the multilayer film, these layers are not regarded as the "high-refractive index layer" or "low-refractive index layer". The film thickness of the conductive oxide layer having a thickness of 10 nm or less may be, for example, 0.1 nm or more.

Another functional film may be formed on the multilayer film. Such a functional film may be various functional films such as a water repellent or hydrophilic anti-fouling film and anti-fogging film. A known technique can be applied for these functional films.

<Various Physical Properties of Spectacle Lens Surface>

<Reflection Characteristics>

In the spectacle lens, the maximum value of the reflectivity in the wavelength band of 380 nm to 780 nm on one of the object-side surface and the eyeball-side surface exceeds 2.00%. The other surface has a maximum value of reflectivity of 2.00% or less in a wavelength band of 380 nm to 780 nm or has no maximum value in a wavelength band of 380 nm to 780 nm.

A spectacle lens surface having a maximum value exceeding 2.00% in a wavelength band of 380 nm to 780 nm is referred to as "surface 1". In the surface 1, the maximum value can be, for example, 2.10% or more, 2.50% or more, 3.00% or more, 3.50% or more, or 4.00% or more. In addition, the maximum value can be, for example, 10.00% or less, 9.00% or less, 8.00% or less, 7.00% or less, or 6.00% or less.

The other surface of the surface 1 of the spectacle lens is called a "surface 2". The maximum value in the wavelength band between 380 nm and 780 nm can be 2.00% or less, 1.50% or less, 1.00% or less, 0.80% or less, or 0.60% or less. The maximum value of the surface 2 in the wavelength band of 380 nm to 780 nm can be, for example, 0.10% or more or 0.20% or more.

The surface 1 is an object-side surface of a spectacle lens in an aspect, and an eyeball-side surface of a spectacle lens in another aspect. Thus, in an aspect, the surface 2 is the eyeball-side surface of the spectacle lens and in another aspect, the object-side surface of the spectacle lens. From the viewpoint of suppressing the amount of reflected light incident on the eyeball-side surface of the spectacle lens from the rear of the spectacle wearer, reflected on the surface, and incident on the eye of the spectacle wearer to be low, it is preferable that the reflectance of the eyeball-side surface of the spectacle lens is low. From this point, it is preferable that the eyeball-side surface of the spectacle lens is the surface 2.

From the viewpoint of reducing the ghost light intensity of XYZ tristimulus values, the spectacle lens satisfies all of Expressions 1 to 3 below. By designing the multilayer film on the surface 1 side and the multilayer film on the surface 2 side, the spectacle lens that satisfies Expressions 1 to 3 can be obtained.

$$\text{Expression 1: } Rb1*Rb2<2.0$$

$$\text{Expression 2: } Rg1*Rg2<2.0$$

$$\text{Expression 3: } Rr1*Rr2<2.0$$

In the Expressions, where,

$Rb1$: An average reflectance in the wavelength band of 420 nm to 440 nm on the surface 1,
$Rb2$: An average reflectance in the wavelength band of 420 nm to 440 nm on the surface 2,
$Rg1$: An average reflectance in the wavelength band of 530 nm to 540 nm on the surface 1,
$Rg2$: An average reflectance in the wavelength band of 530 nm to 540 nm on the surface 2,
$Rr1$: An average reflectance in the wavelength bands of 440 nm to 460 nm and 560 nm to 580 nm on the surface 1, and
$Rr2$: An average reflectance in the wavelength bands of 440 nm to 460 nm and 560 nm to 580 nm on the surface 2.

$Rb2$, $Rg2$, and $Rr2$ are each 2.00% or less.

$Rb1$, $Rb2$, $Rg1$, $Rg2$, $Rr1$ and $Rr2$ units are "%" in the present invention and in the present specification, "Rbl*Rb2", "Rg1*Rg2", and "Rg1*Rg2" are designated in the absence of units.

Each value of "Rb1*Rb2", "Rg1*Rg2", and "Rg1*Rg2" is less than 2.0, preferably 1.8 or less, more preferably in the order of 1.6 or less, 1.4 or less, 1.2 or less, 1.0 or less. It is more preferred that all values of "Rb1*Rb2", "Rg1*Rg2", and "Rg1*Rg2" are 1.8 or less, even more preferred that they are 1.6 or less, even more preferred that they are 1.4 or less, even more preferred that they are 1.2 or less, even more preferred that they are 1.0 or less. In addition, each value of "Rb1*Rb2", "Rg1*Rg2", and "Rg1*Rg2" can be 0.0, or 0.0 or more, or 0.1 or more.

(XYZ Stimulus Value of Ghost Light)

In the spectacle lens, the reflection characteristics of the surface 1 and the reflection characteristics of the surface 2 satisfy Expressions 1 to 3. By controlling the reflection characteristics in this way, the ghost light intensity of XYZ tristimulus values can be reduced.

In the spectacle lens, when the light that has been transmitted without being reflected even once is excluded and the integrated ghost light intensity caused by multiple reflections is evaluated in terms of the tristimulus values X, Y, and Z (i.e., the XYZ stimulus values of the ghost light), it is preferable that each of the values X, Y, and Z is 1.50 E-02 or less, more preferably that one or more of the values X, Y, and Z is 5.00 E-03 or less, even more preferably that two or more of the values X, Y, and Z are 5.00 E-03 or less, and most preferably that all of the values X, Y, and Z are 5.00 E-03 or less. Thus, the spectacle lens having the low ghost light intensity is preferable because it is excellent in visibility.

Each value of X, Y, and Z can be, for example, 5.00 E-06 or more; however, since lower values are more preferable from the viewpoint of improving the visibility of the spectacle lens, each value may also be lower than the range exemplified here.

From the viewpoint of improving the appearance quality of the spectacle lens, it is preferable that the reflection color of one surface of the spectacle lens and the reflection color of the other surface of the spectacle lens are not greatly different from each other. However, in the spectacle lens disclosed in Japanese Patent No. 6073355 (PTL 1) described above, the reflection of the other surface takes a minimum value in the vicinity of a wavelength at which one surface of the spectacle lens takes a maximum value of the reflection, thereby reducing the ghost light intensity. Therefore, a large difference is likely to occur in the reflection color between the one surface and the other surface of the spectacle lens.

On the other hand, in the spectacle lens, since the reflection characteristics of the surface 1 and the reflection characteristics of the surface 2 satisfy Expressions 1 to 3, it is possible to reduce the ghost light intensity of the XYZ tristimulus values without greatly differing the reflection colors of the surface 1 and the surface 2.

Further, in the above-described spectacle lens, the reflection characteristics of the surface 1 and the reflection characteristics of the surface 2 are controlled to satisfy Expressions 1 to 3 while performing reflection adjustment to a blue light cut function and a color matching personal preference, thereby reducing the ghost light intensity of tristimulus values of XYZ while achieving a desired function and a color matching personal preference.

(Principal Wavelength)

The "principal wavelength" is an index obtained by quantifying the wavelength of the color of light felt by the human eye, and in the present invention and the present specification, the "principal wavelength" refers to a value measured from the measurement target surface side of the spectacle lens in accordance with Annex JA of JIS Z 8781-3:2016.

As described above, in the spectacle lens, the ghost light intensity of the tristimulus values of XYZ can be reduced without greatly differing the reflection colors of the surface 1 and the surface 2. In such a spectacle lens, the difference in the principal wavelength between the surface 1 and the surface 2 is preferably 70 nm or less, more preferably 60 nm or less, still more preferably 50 nm or less, and more preferably 40 nm or less, 30 nm or less, 20 nm or less, or 10 nm or less in this order. The difference in the principal wavelength between the surface 1 and the surface 2 can be 0 nm or more, more than 0 nm, or 1 nm or more. The smaller the difference in the principal wavelength between the surfaces 1 and 2 is, the better the appearance quality of the spectacle lens.

The difference between the principal wavelengths of the surface 1 and the surface 2 is the absolute value of the difference between the principal wavelengths of the surface 1 and the surface 2. Either the principal wavelength of the surface 1 and the principal wavelength of the surface 2 may be greater than the other. The principal wavelength of the surface 1 and the principal wavelength of the surface 2 can be, for example, 420 nm or more and 650 nm or less, but are not limited to this range.

<Lens Substrate>

The lens substrate of the spectacle lens can be a plastic lens substrate or a glass lens substrate. For example, the glass lens substrate can be a lens substrate made of inorganic glass. The lens substrate is preferably a plastic lens substrate because it is lightweight and resistant to breakage. Examples of plastic lens substrates include styrene resins including (meth)acrylic resins, polycarbonate resins, allyl resins, allyl carbonate resins such as diethylene glycol bisallyl carbonate resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and cured products (generally referred to as transparent resins) obtained by curing a curable composition containing a (thio)epoxy compound having one or more disulfide bonds in the molecule. The curable composition can also be referred to as a polymerizable composition. The lens substrate may contain a known additive. Examples of the additive may include an ultraviolet absorber. The lens substrate containing an ultraviolet absorber can reduce the amount of ultraviolet light entering from the object-side surface and then entering the eye of a spectacle wearer.

As the lens substrate, an undyed substrate (colorless lens) may be used or a dyed substrate (dyed lens) may be used. The refractive index of the lens substrate may be, for example, about 1.50 to 1.76. However, the refractive index of the lens substrate is not limited to the above range, and may be within the above range or may be above or below outside of the above range. In addition, the lens substrate may be a lens with optical power (so-called prescription lens) or a lens without optical power (so-called non-prescription lens).

This spectacle lens can be various lenses including a monofocal lens, a multifocal lens and a progressive power lens. The type of the lens is normally determined by the surface shapes of both surfaces of the lens substrate. The surface of the lens substrate may be a convex surface, a concave surface, or a flat surface. In a general lens substrate and spectacle lens, the object-side surface is a convex surface and the eyeball-side surface is a concave surface. However, the present invention is not limited thereto.

[Spectacles]

Another aspect of the present invention relates to spectacles having the spectacle lens according to the above-mentioned aspect of the present invention. Details of the spectacle lens included in the spectacles are as described above. The spectacles can realize good visibility by including the spectacle lens. The configuration of the spectacles such as a frame is not especially limited, and a known technique may be applied.

Example

Hereinafter, the present invention will be described in more detail by way of examples. However, the present invention is not limited to embodiments shown in examples.

[Method of Forming Multilayer Film]

In Examples 1 to 4 and Comparative Example 1, on both the eyeball side and the object side, the multilayer vapor deposition film was formed by sequentially laminating the first layer, second layer, and so on, using the deposition sources listed in the upper rows to the lower rows of the tables shown below, in order from the lens substrate side (hard coat side) toward the surface side of the spectacle lens, such that the outermost layer on the surface side of the spectacle lens was formed using the deposition source shown in the lowermost row of each table. In the examples and the comparative examples, the deposition sources containing the oxides indicated in the table excluding impurities that could be unavoidably contaminated were used, and each layer having the thickness indicated in the table was sequentially formed. The film thickness is a physical thickness, and the unit is nanometers (nm). In the following tables, a layer described as an "ultra-low-refractive index layer" is a layer having a refractive index of 1.20 or more and 1.38 or less as measured by a method described later.

In Examples 1 to 4 and Comparative Example 1, a multilayer vapor deposition film having the layer structure shown in the table below was formed on each hard coat surface on the convex surface side (object side) and the concave surface side (eyeball side) of a plastic lens substrate (colorless lens) in which both surfaces were optically finished and previously provided with a hard coat (indicated as "HC" in the table below), the object-side surface being a convex surface and the eyeball-side surface being a concave surface.

Each layer not corresponding to the ultra-low-refractive index layer was formed by an ion beam assist method using oxygen gas and argon gas as assist gases.

The layer confirmed to be the ultra-low-refractive index layer in Examples 1 to 4 was formed by simultaneous film formation of a vacuum vapor deposition method and a DC sputtering method using oxygen gas and argon gas. The current value at the time of film formation by the ion beam assist method was set to 250 mA, and the gas flow rate at the time of film formation by the DC sputtering method was oxygen gas: 500 sccm and argon gas: 1000 sccm, and the input power was set to 500 W.

Hereinafter, a layer that does not correspond to the ultra-low-refractive index layer and is formed using a $SiO_2$ vapor deposition source will be referred to as a "$SiO_2$ layer", and a layer formed using a $ZrO_2$ vapor deposition source will be referred to as a "$ZrO_2$ layer". The layer formed using the $SnO_2$ vapor deposition source is a conductive oxide layer. A layer that is confirmed to be an ultra-low-refractive index layer and is formed using a $SiO_2$ vapor deposition source is referred to as a "$SiO_2$ ultra-low-refractive index layer".

[Refractive Index of Each Layer]

The refractive index of each layer was determined by the following method.

A single-layer film was formed on the glass substrate under the same film forming conditions as those of each layer of the multilayer film to obtain a laminate of the glass substrate and the single-layer film.

The surface reflectance of the surface of the laminate on which the single-layer film was formed was measured with a lens Reflectance measurement device USPM-RU manufactured by Olympus Corporation, and the refractive index was obtained by optical thin film analysis of the obtained spectral reflectance. The refractive index of each layer other than the ultra-low-refractive index layer in the multilayer films prepared in examples and comparative examples was the following value.

$SiO_2$ layer: 1.47
$ZrO_2$ layer: 2.08

The refractive index of the $SiO_2$ ultra-low-refractive index layer in the multilayer film prepared in Examples 1 to 4 was 1.23 as determined by the above method.

[Reflection Characteristics of Spectacle Lens Surface]

Normal incidence reflection characteristics at the optical center were measured on each of the object-side surface and the eyeball-side surface of each of the spectacle lenses of Examples 1 to 4 and Comparative Example 1. The measurement was performed using a lens reflectance measurement device USPM-RU manufactured by Olympus Corporation (Measurement pitch: 1 nm, setting measurement conditions to normal incidence).

Figs. 2 to 25 show the reflectance of the object-side surface and the reflectance of the eyeball-side surface at each wavelength of each of the spectacle lenses of Examples 1 to 4 and Comparative Example 1 measured as described above.

From the measurement results of the reflection characteristics, the maximum value was determined by the method described above.

Further, principal wavelengths Rb1, Rb2, Rg1, Rg2, Rr1, and Rr2 were obtained from the measurement results of the reflection characteristics. From the obtained Rb1, Rb2, Rg1, Rg2, Rr1, and Rr2, the values on the left side of Expressions 1 to 3 were obtained.

[XYZ Stimulus Value of Ghost Light]

For each of the spectacle lenses of Examples 1 to 4 and Comparative Example 1, the values of X, Y, and Z were obtained by evaluating, in terms of the tristimulus values X, Y, and Z, the integrated ghost light intensity caused by multiple reflections, excluding light that was transmitted without being reflected even once, using the method described above.

As shown in the table below, each of the spectacle lenses of Examples 1 to 4 meets Expressions 1 to 3 and the spectacle lens of Comparative Example 1 does not meet Expressions 1 and 3.

From the XYZ stimulus values of the ghost light intensity shown in the table below, it can be confirmed that the ghost light intensity at the tristimulus values of XYZ is low in each of the spectacle lenses of Examples 1 to 4, whereas the ghost light intensity at the X and Z stimulus values is high in Comparative Example 1.

[Table 1]

| Example 1: Layer Configuration of Multilayer Film | | | |
|---|---|---|---|
| Object side | | Eyeball side | |
| Lens substrate | | Lens substrate | |
| HC | 3000 | HC | 3000 |
| $SiO_2$ | 30 | $SiO_2$ | 168 |
| $ZrO_2$ | 5 | $ZrO_2$ | 18 |
| $SiO_2$ | 370 | $SiO_2$ | 25 |
| $ZrO_2$ | 20 | $ZrO_2$ | 103 |
| $SiO_2$ | 30 | $SiO_2$ | 26 |
| $ZrO_2$ | 50 | $ZrO_2$ | 16 |
| $SnO_2$ | 5 | $SiO_2$ ultra-low-refractive index layer | 107 |
| $SiO_2$ | 105 | | |

[Table 2]

| Example 1: Reflection Characteristics | | |
|---|---|---|
| | Object side | Eyeball side |
| Wavelength(nm) | 438 | 438 |
| Maximum value(%) | 4.58 | 0.39 |

| Object side(%) | | Eyeball side(%) | |
|---|---|---|---|
| Rb | 4.4 | Rb | 0.3 |
| Rg | 0.5 | Rg | 0.0 |
| Rr | 2.2 | Rr | 0.2 |

| Both surface | |
|---|---|
| Rb1*Rb2 | 1.4 |
| Rg1*Rg2 | 0.0 |
| Rr1*Rr2 | 0.4 |

[Table 3]

| Example 1: XYZ Stimulus Values of Ghost Light | | |
|---|---|---|
| X | Y | Z |
| 2.00E-03 | 4.06E-04 | 1.03E-02 |

[Table 4]

| Example 1: Principal Wavelength | | | |
|---|---|---|---|
| | Object side | Eyeball side | Difference |
| Principal wavelength(mm) | 461 | 454 | 6 |

[Table 5]

| Example 2: Layer Configuration of Multilayer Film | | | |
|---|---|---|---|
| Object side | | Eyeball side | |
| Lens substrate | | Lens substrate | |
| HC | 3000 | HC | 3000 |
| $SiO_2$ | 30 | $SiO_2$ | 47 |
| $ZrO_2$ | 5 | $ZrO_2$ | 2 |
| $SiO_2$ | 370 | $SiO_2$ | 433 |
| $ZrO_2$ | 20 | $ZrO_2$ | 7 |
| $SiO_2$ | 30 | $SiO_2$ | 79 |
| $ZrO_2$ | 50 | $ZrO_2$ | 8 |
| $SnO_2$ | 5 | $SiO_2$ ultra-low-refractive index layer | 119 |
| $SiO_2$ | 105 | | |

[Table 6]

| Example 2: Reflection Characteristics | | |
|---|---|---|
| | Object side | Eyeball side |
| Wavelength(nm) | 438 | 441 |
| Maximum value(%) | 4.58 | 0.51 |

| Object side(%) | | Eyeball side(%) | |
|---|---|---|---|
| Rb | 4.4 | Rb | 0.4 |
| Rg | 0.5 | Rg | 0.0 |
| Rr | 2.2 | Rr | 0.2 |

| Both surface | |
|---|---|
| Rbl*Rb2 | 1.6 |
| Rg1*Rg2 | 0.0 |
| Rr1*Rr2 | 0.5 |

[Table 7]

| Example 2: XYZ Stimulus Values of Ghost Light | | |
|---|---|---|
| X | Y | Z |
| 2.64E-03 | 5.55E-04 | 1.31E-02 |

[Table 8]

| Example 2: Principal Wavelength | | | |
|---|---|---|---|
| | Object side | Eyeball side | Difference |
| Principal wavelength(nm) | 461 | 451 | 10 |

[Table 9]

| Example 3: Layer Configuration of Multilayer Film | | | |
|---|---|---|---|
| Object side | | Eyeball side | |
| Lens substrate | | Lens substrate | |
| HC | 3000 | HC | 3000 |
| $SiO_2$ | 30 | $SiO_2$ | 213 |
| $ZrO_2$ | 5 | $ZrO_2$ | 16 |
| $SiO_2$ | 370 | $SiO_2$ | 25 |
| $ZrO_2$ | 20 | $ZrO_2$ | 94 |
| $SiO_2$ | 30 | $SiO_2$ | 22 |
| $ZrO_2$ | 50 | $ZrO_2$ | 21 |
| $SnO_2$ | 5 | $SiO_2$ ultra-low-refractive | 98 |
| $SiO_2$ | 105 | index layer | |

[Table 10]

| Example 3: Reflection Characteristics | | |
|---|---|---|
| | Object side | Eyeball side |
| Wavelength(nm) | 438 | 520 |
| Maximum value(%) | 4.58 | 0.39 |

| Object side(%) | | Eyeball side(%) | |
|---|---|---|---|
| Rb | 4.4 | Rb | 0.0 |
| Rg | 0.5 | Rg | 0.3 |
| Rr | 2.2 | Rr | 0.1 |

| Both surface | |
|---|---|
| Rb1*Rb2 | 0.1 |
| Rg1*Rg2 | 0.2 |
| Rr1*Rr2 | 0.3 |

[Table 11]

| Example 3: XYZ stimulus Values of Ghost Light | | |
|---|---|---|
| X | Y | Z |
| 1.02E-03 | 1.34E-03 | 3.07E-03 |

[Table 12]

| Example 3: Principal Wavelength | | | |
|---|---|---|---|
| | Object side | Eyeball side | Difference |
| Principal wavelength(nm) | 461 | 522 | 61 |

[Table 13]

| Example 4: Layer Configuration of Multilayer Film | | | |
|---|---|---|---|
| Object side | | Eyeball side | |
| Lens substrate | | Lens substrate | |
| HC | 3000 | HC | 3000 |
| $SiO_2$ | 52 | $SiO_2$ | 213 |
| $ZrO_2$ | 4 | $ZrO_2$ | 16 |
| $SiO_2$ | 360 | $SiO_2$ | 25 |
| $ZrO_2$ | 34 | $ZrO_2$ | 94 |
| $SiO_2$ | 30 | $SiO_2$ | 22 |
| $ZrO_2$ | 44 | $ZrO_2$ | 21 |
| $SnO_2$ | 5 | $SiO_2$ ultra-low-refractive index layer | 98 |
| $SiO_2$ | 98 | | |

[Table 14]

| Example 4: Reflection Characteristics | | |
|---|---|---|
| | Object side | Eyeball side |
| Wavelength(nm) | 542 | 520 |
| Maximum value(%) | 2.25 | 0.39 |

| Object side(%) | | Eyeball side(%) | |
|---|---|---|---|
| Rb | 0.3 | Rb | 0.0 |
| Rg | 2.1 | Rg | 0.3 |
| Rr | 0.8 | Rr | 0.1 |

| Both surface | |
|---|---|
| Rb1*Rb2 | 0.0 |
| Rg1*Rg2 | 0.7 |
| Rr1*Rr2 | 0.1 |

[Table 15]

| Example 4: XYZ Stimulus Values of Ghost Light | | |
|---|---|---|
| X | Y | Z |
| 1.51E-03 | 3.90E-03 | 6.94E-04 |

[Table 16]

| Example 4: Principal Wavelength | | | |
|---|---|---|---|
| | Object side | Eyeball side | Difference |
| Principal wavelength(nm) | 546 | 522 | 25 |

[Table 17]

| Comparative Example 1: Layer Configuration of Multilayer Film | | | |
|---|---|---|---|
| Object side | | Eyeball side | |
| Lens substrate | | Lens substrate | |
| HC | 3000 | HC | 3000 |
| $SiO_2$ | 30 | $SiO_2$ | 30 |
| $ZrO_2$ | 5 | $ZrO_2$ | 5 |
| $SiO_2$ | 370 | $SiO_2$ | 370 |
| $ZrO_2$ | 20 | $ZrO_2$ | 20 |
| $SiO_2$ | 30 | $SiO_2$ | 30 |
| $ZrO_2$ | 50 | $ZrO_2$ | 50 |
| $SnO_2$ | 5 | $SnO_2$ | 5 |
| $SiO_2$ | 105 | $SiO_2$ | 105 |

[Table 18]

| Comparative Example 1: Reflection Characteristics | | |
|---|---|---|
| | Object side | Eyeball side |
| Wavelength(nm) | 438 | 438 |
| Maximum value(%) | 4.58 | 4.58 |

| Object side(%) | | Eyeball side(%) | |
|---|---|---|---|
| Rb | 4.4 | Rb | 4.4 |
| Rg | 0.5 | Rg | 0.5 |
| Rr | 2.2 | Rr | 2.2 |

| Both surface | |
|---|---|
| Rb1*Rb2 | 19.2 |
| Rg1*Rg2 | 0.3 |
| Rr1*Rr2 | 4.9 |

[Table 19]

| Comparative Example 1: XYZ Stimulus Values of Ghost Light | | |
|---|---|---|
| X | Y | Z |
| 2.47E-02 | 5.39E-03 | 1.21E-01 |

[Table 20]

| Comparative Example 1: Principal Wavelength | | | |
|---|---|---|---|
| Object side | Object side | Eyeball side | Difference |
| Principal wavelength(nm) | 528 | 528 | 0 |

Various aspects described in the present specification may be combined in any combination of two or more.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

Industrial Applicability

The present invention is useful in the manufacturing fields of spectacle lenses and spectacles.

**Claims**

1. A spectacle lens comprising:

    a lens substrate; and
    multilayer films respectively located on an object-side surface and an object-side surface of the lens substrate, wherein
    a maximum value in a wavelength band of 380 nm to 780 nm on the object-side surface or an eyeball-side surface of the spectacle lens exceeds 2.00%,
    when a surface where the maximum value exceeds 2.00% is defined as a surface 1, and the other surface is defined as a surface 2,
    Rb1 is an average reflectance in the wavelength band of 420 nm to 440 nm on the surface 1,
    Rb2 is an average reflectance in the wavelength band of 420 nm to 440 nm on the surface 2,
    Rg1 is an average reflectance in a wavelength band of 530 nm to 540 nm on the surface 1,
    Rg2 is an average reflectance in the wavelength band of 530 nm to 540 nm on the surface 2,
    Rr1 is an average reflectance in a wavelength bands of 440 nm to 460 nm and 560 nm to 580 nm on the surface 1, and
    Rr2 is an average reflectance in the wavelength band of 440 nm to 460 nm and 560 nm to 580 nm on the surface 2,
    Rb2, Rg2, and Rr2 are each 2.00% or less, and
    the spectacle lens satisfies all of Expressions 1 to 3 below:

$$\text{Expression 1: } Rb1*Rb2<2.0$$

$$\text{Expression 2: } Rg1*Rg2<2.0$$

$$\text{Expression 3: } Rr1*Rr2<2.0.$$

2. The spectacle lens according to claim 1, wherein a difference in principal wavelength between the surface 1 and the surface 2 is 70 nm or less.

3. The spectacle lens according to claim 1, wherein excluding light that has been transmitted without being reflected even once, when an integrated ghost light intensity caused by multiple reflections is evaluated in terms of tristimulus values X, Y, and Z, each of the values X, Y, and Z is 1.50 E-02 or less.

4. The spectacle lens according to claim 3, wherein each of the values X, Y, and Z is 5.00 E-03 or less.

5. The spectacle lens according to claim 1, wherein the multilayer film on the surface 2 side includes one or more layers having a refractive index of 1.20 or more and 1.38 or less.

6. The spectacle lens according to claim 5, wherein the multilayer film on the surface 2 side includes one or more layers having a refractive index of 2.00 or more and 2.40 or less.

7. The spectacle lens according to claim 6, wherein the multilayer film on the surface 2 side includes one or more layers having a refractive index of 1.44 or more and 1.49 or less.

8. The spectacle lens according to claim 7, wherein a total number of layers of a high-refractive index layer and a low-refractive index layer of the multilayer film on the surface 2 side is 7 or more.

9. The spectacle lens according to claim 1, wherein the difference in principal wavelength between the surface 1 and the surface 2 is 70 nm or less,

   excluding light that has been transmitted without being reflected even once, when an integrated ghost light intensity caused by multiple reflections is evaluated in terms of tristimulus values X, Y, and Z, each of the values X, Y, and Z is 1.50 E-02 or less,
   the multilayer film on the surface 2 side includes one or more layers having a refractive index of 1.20 or more and 1.38 or less, one or more layers having a refractive index of 2.00 or more and 2.40 or less, and one or more layers having a refractive index of 1.44 or more and 1.49 or less, and
   a total number of layers of a high-refractive index layer and a low-refractive index layer of the multilayer film on the surface 2 side is 7 or more.

10. The spectacle lens according to claim 9, wherein each of the values X, Y, and Z is 5.00 E-03 or less.

11. Spectacles comprising:
    the spectacle lens according to any one of claims 1 to 10.

[Fig. 1]

(a)

(b)

[Fig. 2]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 380 | 13.64 | 380 | 0.27 | 380 | 13.64 | 380 | 0.48 |
| 381 | 12.99 | 381 | 0.24 | 381 | 12.99 | 381 | 0.48 |
| 382 | 12.31 | 382 | 0.20 | 382 | 12.31 | 382 | 0.46 |
| 383 | 11.62 | 383 | 0.17 | 383 | 11.62 | 383 | 0.44 |
| 384 | 10.96 | 384 | 0.13 | 384 | 10.96 | 384 | 0.40 |
| 385 | 10.35 | 385 | 0.10 | 385 | 10.35 | 385 | 0.36 |
| 386 | 9.80 | 386 | 0.07 | 386 | 9.80 | 386 | 0.31 |
| 387 | 9.33 | 387 | 0.04 | 387 | 9.33 | 387 | 0.26 |
| 388 | 8.91 | 388 | 0.03 | 388 | 8.91 | 388 | 0.22 |
| 389 | 8.55 | 389 | 0.02 | 389 | 8.55 | 389 | 0.19 |
| 390 | 8.21 | 390 | 0.01 | 390 | 8.21 | 390 | 0.16 |
| 391 | 7.89 | 391 | 0.01 | 391 | 7.89 | 391 | 0.15 |
| 392 | 7.55 | 392 | 0.01 | 392 | 7.55 | 392 | 0.14 |
| 393 | 7.20 | 393 | 0.00 | 393 | 7.20 | 393 | 0.14 |
| 394 | 6.83 | 394 | 0.00 | 394 | 6.83 | 394 | 0.14 |
| 395 | 6.45 | 395 | 0.00 | 395 | 6.45 | 395 | 0.13 |
| 396 | 6.07 | 396 | 0.00 | 396 | 6.07 | 396 | 0.12 |
| 397 | 5.72 | 397 | 0.01 | 397 | 5.72 | 397 | 0.11 |
| 398 | 5.40 | 398 | 0.01 | 398 | 5.40 | 398 | 0.09 |
| 399 | 5.13 | 399 | 0.02 | 399 | 5.13 | 399 | 0.07 |
| 400 | 4.93 | 400 | 0.03 | 400 | 4.93 | 400 | 0.06 |
| 401 | 4.77 | 401 | 0.04 | 401 | 4.77 | 401 | 0.05 |
| 402 | 4.67 | 402 | 0.06 | 402 | 4.67 | 402 | 0.04 |
| 403 | 4.59 | 403 | 0.07 | 403 | 4.59 | 403 | 0.04 |
| 404 | 4.54 | 404 | 0.07 | 404 | 4.54 | 404 | 0.05 |
| 405 | 4.49 | 405 | 0.08 | 405 | 4.49 | 405 | 0.06 |
| 406 | 4.43 | 406 | 0.09 | 406 | 4.43 | 406 | 0.08 |
| 407 | 4.36 | 407 | 0.09 | 407 | 4.36 | 407 | 0.09 |
| 408 | 4.28 | 408 | 0.09 | 408 | 4.28 | 408 | 0.10 |
| 409 | 4.18 | 409 | 0.09 | 409 | 4.18 | 409 | 0.11 |
| 410 | 4.08 | 410 | 0.10 | 410 | 4.08 | 410 | 0.12 |
| 411 | 3.99 | 411 | 0.11 | 411 | 3.99 | 411 | 0.12 |
| 412 | 3.92 | 412 | 0.12 | 412 | 3.92 | 412 | 0.12 |
| 413 | 3.88 | 413 | 0.13 | 413 | 3.88 | 413 | 0.12 |
| 414 | 3.86 | 414 | 0.15 | 414 | 3.86 | 414 | 0.12 |
| 415 | 3.89 | 415 | 0.17 | 415 | 3.89 | 415 | 0.13 |
| 416 | 3.94 | 416 | 0.20 | 416 | 3.94 | 416 | 0.14 |
| 417 | 4.01 | 417 | 0.22 | 417 | 4.01 | 417 | 0.16 |
| 418 | 4.10 | 418 | 0.24 | 418 | 4.10 | 418 | 0.19 |
| 419 | 4.18 | 419 | 0.26 | 419 | 4.18 | 419 | 0.21 |
| 420 | 4.25 | 420 | 0.27 | 420 | 4.25 | 420 | 0.24 |
| 421 | 4.31 | 421 | 0.28 | 421 | 4.31 | 421 | 0.27 |
| 422 | 4.34 | 422 | 0.28 | 422 | 4.34 | 422 | 0.30 |
| 423 | 4.36 | 423 | 0.28 | 423 | 4.36 | 423 | 0.32 |
| 424 | 4.35 | 424 | 0.27 | 424 | 4.35 | 424 | 0.33 |
| 425 | 4.33 | 425 | 0.26 | 425 | 4.33 | 425 | 0.34 |
| 426 | 4.30 | 426 | 0.26 | 426 | 4.30 | 426 | 0.34 |
| 427 | 4.27 | 427 | 0.26 | 427 | 4.27 | 427 | 0.34 |
| 428 | 4.25 | 428 | 0.26 | 428 | 4.25 | 428 | 0.34 |
| 429 | 4.24 | 429 | 0.27 | 429 | 4.24 | 429 | 0.34 |
| 430 | 4.26 | 430 | 0.28 | 430 | 4.26 | 430 | 0.33 |

[Fig. 3]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 431 | 4.29 | 431 | 0.29 | 431 | 4.29 | 431 | 0.34 |
| 432 | 4.34 | 432 | 0.31 | 432 | 4.34 | 432 | 0.35 |
| 433 | 4.39 | 433 | 0.33 | 433 | 4.39 | 433 | 0.36 |
| 434 | 4.45 | 434 | 0.35 | 434 | 4.45 | 434 | 0.38 |
| 435 | 4.51 | 435 | 0.36 | 435 | 4.51 | 435 | 0.41 |
| 436 | 4.55 | 436 | 0.38 | 436 | 4.55 | 436 | 0.43 |
| 437 | 4.58 | 437 | 0.39 | 437 | 4.58 | 437 | 0.46 |
| 438 | 4.58 | 438 | 0.39 | 438 | 4.58 | 438 | 0.48 |
| 439 | 4.56 | 439 | 0.39 | 439 | 4.56 | 439 | 0.50 |
| 440 | 4.52 | 440 | 0.38 | 440 | 4.52 | 440 | 0.51 |
| 441 | 4.45 | 441 | 0.37 | 441 | 4.45 | 441 | 0.51 |
| 442 | 4.38 | 442 | 0.36 | 442 | 4.38 | 442 | 0.51 |
| 443 | 4.29 | 443 | 0.35 | 443 | 4.29 | 443 | 0.50 |
| 444 | 4.21 | 444 | 0.33 | 444 | 4.21 | 444 | 0.49 |
| 445 | 4.12 | 445 | 0.32 | 445 | 4.12 | 445 | 0.47 |
| 446 | 4.05 | 446 | 0.31 | 446 | 4.05 | 446 | 0.46 |
| 447 | 3.98 | 447 | 0.31 | 447 | 3.98 | 447 | 0.44 |
| 448 | 3.93 | 448 | 0.31 | 448 | 3.93 | 448 | 0.43 |
| 449 | 3.89 | 449 | 0.31 | 449 | 3.89 | 449 | 0.42 |
| 450 | 3.86 | 450 | 0.32 | 450 | 3.86 | 450 | 0.42 |
| 451 | 3.84 | 451 | 0.33 | 451 | 3.84 | 451 | 0.42 |
| 452 | 3.82 | 452 | 0.34 | 452 | 3.82 | 452 | 0.43 |
| 453 | 3.80 | 453 | 0.35 | 453 | 3.80 | 453 | 0.43 |
| 454 | 3.77 | 454 | 0.36 | 454 | 3.77 | 454 | 0.45 |
| 455 | 3.72 | 455 | 0.36 | 455 | 3.72 | 455 | 0.46 |
| 456 | 3.66 | 456 | 0.37 | 456 | 3.66 | 456 | 0.47 |
| 457 | 3.59 | 457 | 0.37 | 457 | 3.59 | 457 | 0.47 |
| 458 | 3.50 | 458 | 0.36 | 458 | 3.50 | 458 | 0.47 |
| 459 | 3.40 | 459 | 0.35 | 459 | 3.40 | 459 | 0.47 |
| 460 | 3.28 | 460 | 0.34 | 460 | 3.28 | 460 | 0.46 |
| 461 | 3.16 | 461 | 0.33 | 461 | 3.16 | 461 | 0.45 |
| 462 | 3.04 | 462 | 0.31 | 462 | 3.04 | 462 | 0.43 |
| 463 | 2.91 | 463 | 0.29 | 463 | 2.91 | 463 | 0.41 |
| 464 | 2.80 | 464 | 0.28 | 464 | 2.80 | 464 | 0.39 |
| 465 | 2.69 | 465 | 0.26 | 465 | 2.69 | 465 | 0.37 |
| 466 | 2.59 | 466 | 0.25 | 466 | 2.59 | 466 | 0.34 |
| 467 | 2.50 | 467 | 0.24 | 467 | 2.50 | 467 | 0.33 |
| 468 | 2.43 | 468 | 0.23 | 468 | 2.43 | 468 | 0.31 |
| 469 | 2.36 | 469 | 0.23 | 469 | 2.36 | 469 | 0.30 |
| 470 | 2.30 | 470 | 0.23 | 470 | 2.30 | 470 | 0.29 |
| 471 | 2.25 | 471 | 0.23 | 471 | 2.25 | 471 | 0.29 |
| 472 | 2.20 | 472 | 0.23 | 472 | 2.20 | 472 | 0.28 |
| 473 | 2.15 | 473 | 0.24 | 473 | 2.15 | 473 | 0.28 |
| 474 | 2.10 | 474 | 0.24 | 474 | 2.10 | 474 | 0.29 |
| 475 | 2.04 | 475 | 0.24 | 475 | 2.04 | 475 | 0.29 |
| 476 | 1.97 | 476 | 0.24 | 476 | 1.97 | 476 | 0.29 |
| 477 | 1.90 | 477 | 0.24 | 477 | 1.90 | 477 | 0.29 |
| 478 | 1.82 | 478 | 0.24 | 478 | 1.82 | 478 | 0.29 |
| 479 | 1.73 | 479 | 0.24 | 479 | 1.73 | 479 | 0.28 |
| 480 | 1.64 | 480 | 0.23 | 480 | 1.64 | 480 | 0.27 |

[Fig. 4]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 481 | 1.55 | 481 | 0.22 | 481 | 1.55 | 481 | 0.26 |
| 482 | 1.46 | 482 | 0.20 | 482 | 1.46 | 482 | 0.25 |
| 483 | 1.37 | 483 | 0.19 | 483 | 1.37 | 483 | 0.23 |
| 484 | 1.29 | 484 | 0.18 | 484 | 1.29 | 484 | 0.21 |
| 485 | 1.21 | 485 | 0.16 | 485 | 1.21 | 485 | 0.20 |
| 486 | 1.14 | 486 | 0.15 | 486 | 1.14 | 486 | 0.18 |
| 487 | 1.08 | 487 | 0.14 | 487 | 1.08 | 487 | 0.16 |
| 488 | 1.03 | 488 | 0.13 | 488 | 1.03 | 488 | 0.15 |
| 489 | 0.99 | 489 | 0.12 | 489 | 0.99 | 489 | 0.14 |
| 490 | 0.95 | 490 | 0.11 | 490 | 0.95 | 490 | 0.13 |
| 491 | 0.92 | 491 | 0.11 | 491 | 0.92 | 491 | 0.12 |
| 492 | 0.90 | 492 | 0.10 | 492 | 0.90 | 492 | 0.12 |
| 493 | 0.88 | 493 | 0.10 | 493 | 0.88 | 493 | 0.12 |
| 494 | 0.86 | 494 | 0.10 | 494 | 0.86 | 494 | 0.12 |
| 495 | 0.84 | 495 | 0.10 | 495 | 0.84 | 495 | 0.12 |
| 496 | 0.81 | 496 | 0.10 | 496 | 0.81 | 496 | 0.12 |
| 497 | 0.79 | 497 | 0.10 | 497 | 0.79 | 497 | 0.12 |
| 498 | 0.76 | 498 | 0.10 | 498 | 0.76 | 498 | 0.12 |
| 499 | 0.73 | 499 | 0.10 | 499 | 0.73 | 499 | 0.12 |
| 500 | 0.69 | 500 | 0.10 | 500 | 0.69 | 500 | 0.12 |
| 501 | 0.66 | 501 | 0.10 | 501 | 0.66 | 501 | 0.11 |
| 502 | 0.62 | 502 | 0.10 | 502 | 0.62 | 502 | 0.11 |
| 503 | 0.59 | 503 | 0.09 | 503 | 0.59 | 503 | 0.10 |
| 504 | 0.55 | 504 | 0.09 | 504 | 0.55 | 504 | 0.09 |
| 505 | 0.52 | 505 | 0.08 | 505 | 0.52 | 505 | 0.09 |
| 506 | 0.50 | 506 | 0.07 | 506 | 0.50 | 506 | 0.08 |
| 507 | 0.48 | 507 | 0.07 | 507 | 0.48 | 507 | 0.07 |
| 508 | 0.46 | 508 | 0.06 | 508 | 0.46 | 508 | 0.06 |
| 509 | 0.45 | 509 | 0.05 | 509 | 0.45 | 509 | 0.05 |
| 510 | 0.44 | 510 | 0.04 | 510 | 0.44 | 510 | 0.05 |
| 511 | 0.44 | 511 | 0.04 | 511 | 0.44 | 511 | 0.04 |
| 512 | 0.45 | 512 | 0.03 | 512 | 0.45 | 512 | 0.04 |
| 513 | 0.46 | 513 | 0.03 | 513 | 0.46 | 513 | 0.04 |
| 514 | 0.47 | 514 | 0.02 | 514 | 0.47 | 514 | 0.04 |
| 515 | 0.48 | 515 | 0.02 | 515 | 0.48 | 515 | 0.04 |
| 516 | 0.49 | 516 | 0.02 | 516 | 0.49 | 516 | 0.04 |
| 517 | 0.50 | 517 | 0.02 | 517 | 0.50 | 517 | 0.04 |
| 518 | 0.51 | 518 | 0.02 | 518 | 0.51 | 518 | 0.04 |
| 519 | 0.52 | 519 | 0.02 | 519 | 0.52 | 519 | 0.04 |
| 520 | 0.52 | 520 | 0.02 | 520 | 0.52 | 520 | 0.05 |
| 521 | 0.52 | 521 | 0.02 | 521 | 0.52 | 521 | 0.05 |
| 522 | 0.52 | 522 | 0.02 | 522 | 0.52 | 522 | 0.05 |
| 523 | 0.52 | 523 | 0.02 | 523 | 0.52 | 523 | 0.05 |
| 524 | 0.51 | 524 | 0.02 | 524 | 0.51 | 524 | 0.05 |
| 525 | 0.50 | 525 | 0.02 | 525 | 0.50 | 525 | 0.04 |
| 526 | 0.50 | 526 | 0.02 | 526 | 0.50 | 526 | 0.04 |
| 527 | 0.49 | 527 | 0.01 | 527 | 0.49 | 527 | 0.04 |
| 528 | 0.48 | 528 | 0.01 | 528 | 0.48 | 528 | 0.04 |
| 529 | 0.48 | 529 | 0.01 | 529 | 0.48 | 529 | 0.03 |
| 530 | 0.48 | 530 | 0.01 | 530 | 0.48 | 530 | 0.03 |

[Fig. 5]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 531 | 0.48 | 531 | 0.01 | 531 | 0.48 | 531 | 0.02 |
| 532 | 0.48 | 532 | 0.01 | 532 | 0.48 | 532 | 0.02 |
| 533 | 0.49 | 533 | 0.01 | 533 | 0.49 | 533 | 0.02 |
| 534 | 0.50 | 534 | 0.00 | 534 | 0.50 | 534 | 0.02 |
| 535 | 0.51 | 535 | 0.00 | 535 | 0.51 | 535 | 0.02 |
| 536 | 0.53 | 536 | 0.00 | 536 | 0.53 | 536 | 0.01 |
| 537 | 0.54 | 537 | 0.00 | 537 | 0.54 | 537 | 0.02 |
| 538 | 0.56 | 538 | 0.00 | 538 | 0.56 | 538 | 0.02 |
| 539 | 0.58 | 539 | 0.00 | 539 | 0.58 | 539 | 0.02 |
| 540 | 0.59 | 540 | 0.00 | 540 | 0.59 | 540 | 0.02 |
| 541 | 0.61 | 541 | 0.00 | 541 | 0.61 | 541 | 0.02 |
| 542 | 0.62 | 542 | 0.00 | 542 | 0.62 | 542 | 0.02 |
| 543 | 0.64 | 543 | 0.00 | 543 | 0.64 | 543 | 0.03 |
| 544 | 0.64 | 544 | 0.00 | 544 | 0.64 | 544 | 0.03 |
| 545 | 0.65 | 545 | 0.00 | 545 | 0.65 | 545 | 0.03 |
| 546 | 0.65 | 546 | 0.00 | 546 | 0.65 | 546 | 0.03 |
| 547 | 0.65 | 547 | 0.00 | 547 | 0.65 | 547 | 0.03 |
| 548 | 0.65 | 548 | 0.00 | 548 | 0.65 | 548 | 0.03 |
| 549 | 0.64 | 549 | 0.00 | 549 | 0.64 | 549 | 0.03 |
| 550 | 0.63 | 550 | 0.00 | 550 | 0.63 | 550 | 0.03 |
| 551 | 0.62 | 551 | 0.00 | 551 | 0.62 | 551 | 0.03 |
| 552 | 0.61 | 552 | 0.00 | 552 | 0.61 | 552 | 0.02 |
| 553 | 0.60 | 553 | 0.00 | 553 | 0.60 | 553 | 0.02 |
| 554 | 0.59 | 554 | 0.00 | 554 | 0.59 | 554 | 0.02 |
| 555 | 0.58 | 555 | 0.00 | 555 | 0.58 | 555 | 0.02 |
| 556 | 0.57 | 556 | 0.00 | 556 | 0.57 | 556 | 0.01 |
| 557 | 0.56 | 557 | 0.00 | 557 | 0.56 | 557 | 0.01 |
| 558 | 0.55 | 558 | 0.00 | 558 | 0.55 | 558 | 0.01 |
| 559 | 0.54 | 559 | 0.00 | 559 | 0.54 | 559 | 0.01 |
| 560 | 0.54 | 560 | 0.01 | 560 | 0.54 | 560 | 0.01 |
| 561 | 0.54 | 561 | 0.01 | 561 | 0.54 | 561 | 0.01 |
| 562 | 0.54 | 562 | 0.01 | 562 | 0.54 | 562 | 0.01 |
| 563 | 0.54 | 563 | 0.01 | 563 | 0.54 | 563 | 0.01 |
| 564 | 0.54 | 564 | 0.01 | 564 | 0.54 | 564 | 0.01 |
| 565 | 0.54 | 565 | 0.01 | 565 | 0.54 | 565 | 0.01 |
| 566 | 0.54 | 566 | 0.02 | 566 | 0.54 | 566 | 0.01 |
| 567 | 0.55 | 567 | 0.02 | 567 | 0.55 | 567 | 0.01 |
| 568 | 0.55 | 568 | 0.02 | 568 | 0.55 | 568 | 0.01 |
| 569 | 0.55 | 569 | 0.03 | 569 | 0.55 | 569 | 0.01 |
| 570 | 0.55 | 570 | 0.03 | 570 | 0.55 | 570 | 0.01 |
| 571 | 0.55 | 571 | 0.03 | 571 | 0.55 | 571 | 0.02 |
| 572 | 0.55 | 572 | 0.03 | 572 | 0.55 | 572 | 0.02 |
| 573 | 0.55 | 573 | 0.03 | 573 | 0.55 | 573 | 0.02 |
| 574 | 0.54 | 574 | 0.04 | 574 | 0.54 | 574 | 0.02 |
| 575 | 0.53 | 575 | 0.04 | 575 | 0.53 | 575 | 0.01 |
| 576 | 0.52 | 576 | 0.04 | 576 | 0.52 | 576 | 0.01 |
| 577 | 0.51 | 577 | 0.04 | 577 | 0.51 | 577 | 0.01 |
| 578 | 0.50 | 578 | 0.04 | 578 | 0.50 | 578 | 0.01 |
| 579 | 0.49 | 579 | 0.04 | 579 | 0.49 | 579 | 0.01 |
| 580 | 0.47 | 580 | 0.04 | 580 | 0.47 | 580 | 0.01 |

[Fig. 6]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 581 | 0.45 | 581 | 0.03 | 581 | 0.45 | 581 | 0.01 |
| 582 | 0.44 | 582 | 0.03 | 582 | 0.44 | 582 | 0.00 |
| 583 | 0.42 | 583 | 0.03 | 583 | 0.42 | 583 | 0.00 |
| 584 | 0.40 | 584 | 0.03 | 584 | 0.40 | 584 | 0.00 |
| 585 | 0.38 | 585 | 0.03 | 585 | 0.38 | 585 | 0.00 |
| 586 | 0.37 | 586 | 0.03 | 586 | 0.37 | 586 | 0.00 |
| 587 | 0.35 | 587 | 0.03 | 587 | 0.35 | 587 | 0.00 |
| 588 | 0.34 | 588 | 0.03 | 588 | 0.34 | 588 | 0.00 |
| 589 | 0.32 | 589 | 0.03 | 589 | 0.32 | 589 | 0.00 |
| 590 | 0.31 | 590 | 0.03 | 590 | 0.31 | 590 | 0.01 |
| 591 | 0.30 | 591 | 0.03 | 591 | 0.30 | 591 | 0.01 |
| 592 | 0.29 | 592 | 0.03 | 592 | 0.29 | 592 | 0.01 |
| 593 | 0.28 | 593 | 0.03 | 593 | 0.28 | 593 | 0.01 |
| 594 | 0.27 | 594 | 0.03 | 594 | 0.27 | 594 | 0.01 |
| 595 | 0.26 | 595 | 0.03 | 595 | 0.26 | 595 | 0.01 |
| 596 | 0.26 | 596 | 0.03 | 596 | 0.26 | 596 | 0.02 |
| 597 | 0.25 | 597 | 0.03 | 597 | 0.25 | 597 | 0.02 |
| 598 | 0.25 | 598 | 0.04 | 598 | 0.25 | 598 | 0.02 |
| 599 | 0.25 | 599 | 0.04 | 599 | 0.25 | 599 | 0.02 |
| 600 | 0.24 | 600 | 0.04 | 600 | 0.24 | 600 | 0.02 |
| 601 | 0.24 | 601 | 0.04 | 601 | 0.24 | 601 | 0.02 |
| 602 | 0.24 | 602 | 0.05 | 602 | 0.24 | 602 | 0.02 |
| 603 | 0.24 | 603 | 0.05 | 603 | 0.24 | 603 | 0.02 |
| 604 | 0.24 | 604 | 0.05 | 604 | 0.24 | 604 | 0.02 |
| 605 | 0.24 | 605 | 0.05 | 605 | 0.24 | 605 | 0.02 |
| 606 | 0.23 | 606 | 0.05 | 606 | 0.23 | 606 | 0.02 |
| 607 | 0.23 | 607 | 0.05 | 607 | 0.23 | 607 | 0.02 |
| 608 | 0.23 | 608 | 0.05 | 608 | 0.23 | 608 | 0.02 |
| 609 | 0.23 | 609 | 0.06 | 609 | 0.23 | 609 | 0.02 |
| 610 | 0.23 | 610 | 0.06 | 610 | 0.23 | 610 | 0.02 |
| 611 | 0.23 | 611 | 0.06 | 611 | 0.23 | 611 | 0.02 |
| 612 | 0.23 | 612 | 0.05 | 612 | 0.23 | 612 | 0.02 |
| 613 | 0.23 | 613 | 0.05 | 613 | 0.23 | 613 | 0.02 |
| 614 | 0.23 | 614 | 0.05 | 614 | 0.23 | 614 | 0.02 |
| 615 | 0.23 | 615 | 0.05 | 615 | 0.23 | 615 | 0.03 |
| 616 | 0.23 | 616 | 0.05 | 616 | 0.23 | 616 | 0.03 |
| 617 | 0.22 | 617 | 0.05 | 617 | 0.22 | 617 | 0.03 |
| 618 | 0.22 | 618 | 0.04 | 618 | 0.22 | 618 | 0.04 |
| 619 | 0.22 | 619 | 0.04 | 619 | 0.22 | 619 | 0.04 |
| 620 | 0.22 | 620 | 0.04 | 620 | 0.22 | 620 | 0.04 |
| 621 | 0.22 | 621 | 0.04 | 621 | 0.22 | 621 | 0.05 |
| 622 | 0.22 | 622 | 0.04 | 622 | 0.22 | 622 | 0.06 |
| 623 | 0.22 | 623 | 0.03 | 623 | 0.22 | 623 | 0.06 |
| 624 | 0.23 | 624 | 0.03 | 624 | 0.23 | 624 | 0.07 |
| 625 | 0.23 | 625 | 0.03 | 625 | 0.23 | 625 | 0.07 |
| 626 | 0.23 | 626 | 0.03 | 626 | 0.23 | 626 | 0.08 |
| 627 | 0.23 | 627 | 0.03 | 627 | 0.23 | 627 | 0.09 |
| 628 | 0.23 | 628 | 0.03 | 628 | 0.23 | 628 | 0.09 |
| 629 | 0.24 | 629 | 0.02 | 629 | 0.24 | 629 | 0.10 |
| 630 | 0.24 | 630 | 0.02 | 630 | 0.24 | 630 | 0.10 |

[Fig. 7]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 631 | 0.25 | 631 | 0.02 | 631 | 0.25 | 631 | 0.11 |
| 632 | 0.25 | 632 | 0.02 | 632 | 0.25 | 632 | 0.11 |
| 633 | 0.26 | 633 | 0.02 | 633 | 0.26 | 633 | 0.11 |
| 634 | 0.27 | 634 | 0.02 | 634 | 0.27 | 634 | 0.12 |
| 635 | 0.28 | 635 | 0.02 | 635 | 0.28 | 635 | 0.12 |
| 636 | 0.29 | 636 | 0.02 | 636 | 0.29 | 636 | 0.12 |
| 637 | 0.30 | 637 | 0.03 | 637 | 0.30 | 637 | 0.12 |
| 638 | 0.31 | 638 | 0.03 | 638 | 0.31 | 638 | 0.12 |
| 639 | 0.32 | 639 | 0.03 | 639 | 0.32 | 639 | 0.13 |
| 640 | 0.34 | 640 | 0.03 | 640 | 0.34 | 640 | 0.13 |
| 641 | 0.36 | 641 | 0.03 | 641 | 0.36 | 641 | 0.13 |
| 642 | 0.37 | 642 | 0.03 | 642 | 0.37 | 642 | 0.13 |
| 643 | 0.39 | 643 | 0.03 | 643 | 0.39 | 643 | 0.13 |
| 644 | 0.42 | 644 | 0.03 | 644 | 0.42 | 644 | 0.13 |
| 645 | 0.44 | 645 | 0.03 | 645 | 0.44 | 645 | 0.13 |
| 646 | 0.46 | 646 | 0.03 | 646 | 0.46 | 646 | 0.14 |
| 647 | 0.48 | 647 | 0.03 | 647 | 0.48 | 647 | 0.14 |
| 648 | 0.51 | 648 | 0.04 | 648 | 0.51 | 648 | 0.14 |
| 649 | 0.54 | 649 | 0.04 | 649 | 0.54 | 649 | 0.15 |
| 650 | 0.56 | 650 | 0.04 | 650 | 0.56 | 650 | 0.15 |
| 651 | 0.59 | 651 | 0.04 | 651 | 0.59 | 651 | 0.16 |
| 652 | 0.62 | 652 | 0.04 | 652 | 0.62 | 652 | 0.16 |
| 653 | 0.65 | 653 | 0.04 | 653 | 0.65 | 653 | 0.17 |
| 654 | 0.67 | 654 | 0.04 | 654 | 0.67 | 654 | 0.18 |
| 655 | 0.70 | 655 | 0.04 | 655 | 0.70 | 655 | 0.19 |
| 656 | 0.73 | 656 | 0.04 | 656 | 0.73 | 656 | 0.20 |
| 657 | 0.76 | 657 | 0.04 | 657 | 0.76 | 657 | 0.21 |
| 658 | 0.79 | 658 | 0.04 | 658 | 0.79 | 658 | 0.22 |
| 659 | 0.81 | 659 | 0.04 | 659 | 0.81 | 659 | 0.23 |
| 660 | 0.84 | 660 | 0.04 | 660 | 0.84 | 660 | 0.24 |
| 661 | 0.87 | 661 | 0.04 | 661 | 0.87 | 661 | 0.25 |
| 662 | 0.89 | 662 | 0.04 | 662 | 0.89 | 662 | 0.26 |
| 663 | 0.91 | 663 | 0.04 | 663 | 0.91 | 663 | 0.28 |
| 664 | 0.94 | 664 | 0.04 | 664 | 0.94 | 664 | 0.29 |
| 665 | 0.96 | 665 | 0.03 | 665 | 0.96 | 665 | 0.30 |
| 666 | 0.98 | 666 | 0.03 | 666 | 0.98 | 666 | 0.31 |
| 667 | 1.01 | 667 | 0.03 | 667 | 1.01 | 667 | 0.32 |
| 668 | 1.03 | 668 | 0.03 | 668 | 1.03 | 668 | 0.33 |
| 669 | 1.05 | 669 | 0.03 | 669 | 1.05 | 669 | 0.33 |
| 670 | 1.07 | 670 | 0.03 | 670 | 1.07 | 670 | 0.34 |
| 671 | 1.09 | 671 | 0.03 | 671 | 1.09 | 671 | 0.35 |
| 672 | 1.11 | 672 | 0.03 | 672 | 1.11 | 672 | 0.36 |
| 673 | 1.13 | 673 | 0.03 | 673 | 1.13 | 673 | 0.36 |
| 674 | 1.15 | 674 | 0.03 | 674 | 1.15 | 674 | 0.37 |
| 675 | 1.17 | 675 | 0.03 | 675 | 1.17 | 675 | 0.37 |
| 676 | 1.20 | 676 | 0.03 | 676 | 1.20 | 676 | 0.38 |
| 677 | 1.22 | 677 | 0.03 | 677 | 1.22 | 677 | 0.38 |
| 678 | 1.25 | 678 | 0.03 | 678 | 1.25 | 678 | 0.38 |
| 679 | 1.27 | 679 | 0.03 | 679 | 1.27 | 679 | 0.38 |
| 680 | 1.30 | 680 | 0.04 | 680 | 1.30 | 680 | 0.39 |

[Fig. 8]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 681 | 1.33 | 681 | 0.04 | 681 | 1.33 | 681 | 0.39 |
| 682 | 1.36 | 682 | 0.04 | 682 | 1.36 | 682 | 0.39 |
| 683 | 1.39 | 683 | 0.04 | 683 | 1.39 | 683 | 0.39 |
| 684 | 1.43 | 684 | 0.04 | 684 | 1.43 | 684 | 0.40 |
| 685 | 1.46 | 685 | 0.04 | 685 | 1.46 | 685 | 0.40 |
| 686 | 1.50 | 686 | 0.05 | 686 | 1.50 | 686 | 0.40 |
| 687 | 1.54 | 687 | 0.05 | 687 | 1.54 | 687 | 0.41 |
| 688 | 1.58 | 688 | 0.05 | 688 | 1.58 | 688 | 0.41 |
| 689 | 1.62 | 689 | 0.06 | 689 | 1.62 | 689 | 0.42 |
| 690 | 1.66 | 690 | 0.06 | 690 | 1.66 | 690 | 0.42 |
| 691 | 1.70 | 691 | 0.06 | 691 | 1.70 | 691 | 0.43 |
| 692 | 1.75 | 692 | 0.07 | 692 | 1.75 | 692 | 0.44 |
| 693 | 1.79 | 693 | 0.07 | 693 | 1.79 | 693 | 0.45 |
| 694 | 1.84 | 694 | 0.08 | 694 | 1.84 | 694 | 0.46 |
| 695 | 1.88 | 695 | 0.08 | 695 | 1.88 | 695 | 0.47 |
| 696 | 1.93 | 696 | 0.09 | 696 | 1.93 | 696 | 0.48 |
| 697 | 1.98 | 697 | 0.10 | 697 | 1.98 | 697 | 0.49 |
| 698 | 2.02 | 698 | 0.10 | 698 | 2.02 | 698 | 0.50 |
| 699 | 2.07 | 699 | 0.11 | 699 | 2.07 | 699 | 0.52 |
| 700 | 2.11 | 700 | 0.12 | 700 | 2.11 | 700 | 0.53 |
| 701 | 2.15 | 701 | 0.12 | 701 | 2.15 | 701 | 0.55 |
| 702 | 2.20 | 702 | 0.13 | 702 | 2.20 | 702 | 0.56 |
| 703 | 2.24 | 703 | 0.14 | 703 | 2.24 | 703 | 0.57 |
| 704 | 2.28 | 704 | 0.14 | 704 | 2.28 | 704 | 0.59 |
| 705 | 2.31 | 705 | 0.15 | 705 | 2.31 | 705 | 0.60 |
| 706 | 2.35 | 706 | 0.16 | 706 | 2.35 | 706 | 0.62 |
| 707 | 2.39 | 707 | 0.16 | 707 | 2.39 | 707 | 0.63 |
| 708 | 2.42 | 708 | 0.17 | 708 | 2.42 | 708 | 0.65 |
| 709 | 2.45 | 709 | 0.18 | 709 | 2.45 | 709 | 0.66 |
| 710 | 2.48 | 710 | 0.18 | 710 | 2.48 | 710 | 0.67 |
| 711 | 2.51 | 711 | 0.19 | 711 | 2.51 | 711 | 0.69 |
| 712 | 2.54 | 712 | 0.20 | 712 | 2.54 | 712 | 0.70 |
| 713 | 2.57 | 713 | 0.20 | 713 | 2.57 | 713 | 0.71 |
| 714 | 2.59 | 714 | 0.21 | 714 | 2.59 | 714 | 0.72 |
| 715 | 2.62 | 715 | 0.22 | 715 | 2.62 | 715 | 0.73 |
| 716 | 2.64 | 716 | 0.22 | 716 | 2.64 | 716 | 0.74 |
| 717 | 2.66 | 717 | 0.23 | 717 | 2.66 | 717 | 0.74 |
| 718 | 2.68 | 718 | 0.23 | 718 | 2.68 | 718 | 0.75 |
| 719 | 2.71 | 719 | 0.24 | 719 | 2.71 | 719 | 0.76 |
| 720 | 2.73 | 720 | 0.24 | 720 | 2.73 | 720 | 0.76 |
| 721 | 2.75 | 721 | 0.25 | 721 | 2.75 | 721 | 0.76 |
| 722 | 2.77 | 722 | 0.25 | 722 | 2.77 | 722 | 0.77 |
| 723 | 2.80 | 723 | 0.26 | 723 | 2.80 | 723 | 0.77 |
| 724 | 2.82 | 724 | 0.26 | 724 | 2.82 | 724 | 0.77 |
| 725 | 2.84 | 725 | 0.27 | 725 | 2.84 | 725 | 0.78 |
| 726 | 2.87 | 726 | 0.27 | 726 | 2.87 | 726 | 0.78 |
| 727 | 2.90 | 727 | 0.28 | 727 | 2.90 | 727 | 0.78 |
| 728 | 2.92 | 728 | 0.28 | 728 | 2.92 | 728 | 0.78 |
| 729 | 2.95 | 729 | 0.29 | 729 | 2.95 | 729 | 0.78 |
| 730 | 2.98 | 730 | 0.29 | 730 | 2.98 | 730 | 0.79 |

[Fig. 9]

| EXAMPLE 1 | | | | EXAMPLE 2 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 731 | 3.01 | 731 | 0.30 | 731 | 3.01 | 731 | 0.79 |
| 732 | 3.05 | 732 | 0.31 | 732 | 3.05 | 732 | 0.79 |
| 733 | 3.08 | 733 | 0.31 | 733 | 3.08 | 733 | 0.80 |
| 734 | 3.12 | 734 | 0.32 | 734 | 3.12 | 734 | 0.80 |
| 735 | 3.15 | 735 | 0.33 | 735 | 3.15 | 735 | 0.80 |
| 736 | 3.19 | 736 | 0.34 | 736 | 3.19 | 736 | 0.81 |
| 737 | 3.23 | 737 | 0.35 | 737 | 3.23 | 737 | 0.82 |
| 738 | 3.27 | 738 | 0.36 | 738 | 3.27 | 738 | 0.82 |
| 739 | 3.31 | 739 | 0.37 | 739 | 3.31 | 739 | 0.83 |
| 740 | 3.36 | 740 | 0.38 | 740 | 3.36 | 740 | 0.84 |
| 741 | 3.40 | 741 | 0.39 | 741 | 3.40 | 741 | 0.85 |
| 742 | 3.44 | 742 | 0.40 | 742 | 3.44 | 742 | 0.86 |
| 743 | 3.49 | 743 | 0.42 | 743 | 3.49 | 743 | 0.87 |
| 744 | 3.53 | 744 | 0.43 | 744 | 3.53 | 744 | 0.88 |
| 745 | 3.57 | 745 | 0.45 | 745 | 3.57 | 745 | 0.90 |
| 746 | 3.62 | 746 | 0.46 | 746 | 3.62 | 746 | 0.91 |
| 747 | 3.66 | 747 | 0.48 | 747 | 3.66 | 747 | 0.92 |
| 748 | 3.70 | 748 | 0.49 | 748 | 3.70 | 748 | 0.94 |
| 749 | 3.74 | 749 | 0.51 | 749 | 3.74 | 749 | 0.95 |
| 750 | 3.78 | 750 | 0.53 | 750 | 3.78 | 750 | 0.97 |
| 751 | 3.82 | 751 | 0.55 | 751 | 3.82 | 751 | 0.98 |
| 752 | 3.86 | 752 | 0.57 | 752 | 3.86 | 752 | 1.00 |
| 753 | 3.89 | 753 | 0.58 | 753 | 3.89 | 753 | 1.01 |
| 754 | 3.93 | 754 | 0.60 | 754 | 3.93 | 754 | 1.03 |
| 755 | 3.96 | 755 | 0.62 | 755 | 3.96 | 755 | 1.04 |
| 756 | 3.99 | 756 | 0.64 | 756 | 3.99 | 756 | 1.06 |
| 757 | 4.02 | 757 | 0.66 | 757 | 4.02 | 757 | 1.07 |
| 758 | 4.05 | 758 | 0.68 | 758 | 4.05 | 758 | 1.08 |
| 759 | 4.08 | 759 | 0.70 | 759 | 4.08 | 759 | 1.10 |
| 760 | 4.11 | 760 | 0.72 | 760 | 4.11 | 760 | 1.11 |
| 761 | 4.13 | 761 | 0.74 | 761 | 4.13 | 761 | 1.12 |
| 762 | 4.15 | 762 | 0.76 | 762 | 4.15 | 762 | 1.13 |
| 763 | 4.18 | 763 | 0.77 | 763 | 4.18 | 763 | 1.14 |
| 764 | 4.20 | 764 | 0.79 | 764 | 4.20 | 764 | 1.15 |
| 765 | 4.22 | 765 | 0.81 | 765 | 4.22 | 765 | 1.16 |
| 766 | 4.24 | 766 | 0.83 | 766 | 4.24 | 766 | 1.17 |
| 767 | 4.25 | 767 | 0.85 | 767 | 4.25 | 767 | 1.18 |
| 768 | 4.27 | 768 | 0.87 | 768 | 4.27 | 768 | 1.19 |
| 769 | 4.28 | 769 | 0.88 | 769 | 4.28 | 769 | 1.19 |
| 770 | 4.30 | 770 | 0.90 | 770 | 4.30 | 770 | 1.20 |
| 771 | 4.31 | 771 | 0.92 | 771 | 4.31 | 771 | 1.20 |
| 772 | 4.33 | 772 | 0.93 | 772 | 4.33 | 772 | 1.21 |
| 773 | 4.34 | 773 | 0.95 | 773 | 4.34 | 773 | 1.21 |
| 774 | 4.35 | 774 | 0.97 | 774 | 4.35 | 774 | 1.21 |
| 775 | 4.36 | 775 | 0.98 | 775 | 4.36 | 775 | 1.22 |
| 776 | 4.38 | 776 | 1.00 | 776 | 4.38 | 776 | 1.22 |
| 777 | 4.39 | 777 | 1.01 | 777 | 4.39 | 777 | 1.22 |
| 778 | 4.40 | 778 | 1.03 | 778 | 4.40 | 778 | 1.22 |
| 779 | 4.42 | 779 | 1.04 | 779 | 4.42 | 779 | 1.22 |
| 780 | 4.43 | 780 | 1.05 | 780 | 4.43 | 780 | 1.22 |

[Fig. 10]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 380 | 13.64 | 380 | 0.30 | 380 | 15.36 | 380 | 0.30 |
| 381 | 12.99 | 381 | 0.29 | 381 | 14.76 | 381 | 0.29 |
| 382 | 12.31 | 382 | 0.28 | 382 | 14.13 | 382 | 0.28 |
| 383 | 11.62 | 383 | 0.27 | 383 | 13.45 | 383 | 0.27 |
| 384 | 10.96 | 384 | 0.26 | 384 | 12.74 | 384 | 0.26 |
| 385 | 10.35 | 385 | 0.24 | 385 | 12.00 | 385 | 0.24 |
| 386 | 9.80 | 386 | 0.22 | 386 | 11.25 | 386 | 0.22 |
| 387 | 9.33 | 387 | 0.19 | 387 | 10.52 | 387 | 0.19 |
| 388 | 8.91 | 388 | 0.16 | 388 | 9.84 | 388 | 0.16 |
| 389 | 8.55 | 389 | 0.13 | 389 | 9.21 | 389 | 0.13 |
| 390 | 8.21 | 390 | 0.11 | 390 | 8.64 | 390 | 0.11 |
| 391 | 7.89 | 391 | 0.08 | 391 | 8.13 | 391 | 0.08 |
| 392 | 7.55 | 392 | 0.07 | 392 | 7.68 | 392 | 0.07 |
| 393 | 7.20 | 393 | 0.05 | 393 | 7.26 | 393 | 0.05 |
| 394 | 6.83 | 394 | 0.05 | 394 | 6.86 | 394 | 0.05 |
| 395 | 6.45 | 395 | 0.05 | 395 | 6.47 | 395 | 0.05 |
| 396 | 6.07 | 396 | 0.04 | 396 | 6.06 | 396 | 0.04 |
| 397 | 5.72 | 397 | 0.04 | 397 | 5.64 | 397 | 0.04 |
| 398 | 5.40 | 398 | 0.04 | 398 | 5.21 | 398 | 0.04 |
| 399 | 5.13 | 399 | 0.04 | 399 | 4.78 | 399 | 0.04 |
| 400 | 4.93 | 400 | 0.04 | 400 | 4.36 | 400 | 0.04 |
| 401 | 4.77 | 401 | 0.03 | 401 | 3.96 | 401 | 0.03 |
| 402 | 4.67 | 402 | 0.03 | 402 | 3.59 | 402 | 0.03 |
| 403 | 4.59 | 403 | 0.02 | 403 | 3.27 | 403 | 0.02 |
| 404 | 4.54 | 404 | 0.01 | 404 | 2.98 | 404 | 0.01 |
| 405 | 4.49 | 405 | 0.01 | 405 | 2.74 | 405 | 0.01 |
| 406 | 4.43 | 406 | 0.00 | 406 | 2.53 | 406 | 0.00 |
| 407 | 4.36 | 407 | 0.00 | 407 | 2.35 | 407 | 0.00 |
| 408 | 4.28 | 408 | 0.00 | 408 | 2.19 | 408 | 0.00 |
| 409 | 4.18 | 409 | 0.00 | 409 | 2.04 | 409 | 0.00 |
| 410 | 4.08 | 410 | 0.01 | 410 | 1.89 | 410 | 0.01 |
| 411 | 3.99 | 411 | 0.01 | 411 | 1.74 | 411 | 0.01 |
| 412 | 3.92 | 412 | 0.01 | 412 | 1.59 | 412 | 0.01 |
| 413 | 3.88 | 413 | 0.01 | 413 | 1.43 | 413 | 0.01 |
| 414 | 3.86 | 414 | 0.01 | 414 | 1.28 | 414 | 0.01 |
| 415 | 3.89 | 415 | 0.01 | 415 | 1.12 | 415 | 0.01 |
| 416 | 3.94 | 416 | 0.01 | 416 | 0.98 | 416 | 0.01 |
| 417 | 4.01 | 417 | 0.01 | 417 | 0.86 | 417 | 0.01 |
| 418 | 4.10 | 418 | 0.01 | 418 | 0.75 | 418 | 0.01 |
| 419 | 4.18 | 419 | 0.00 | 419 | 0.67 | 419 | 0.00 |
| 420 | 4.25 | 420 | 0.00 | 420 | 0.60 | 420 | 0.00 |
| 421 | 4.31 | 421 | 0.01 | 421 | 0.54 | 421 | 0.01 |
| 422 | 4.34 | 422 | 0.01 | 422 | 0.50 | 422 | 0.01 |
| 423 | 4.36 | 423 | 0.01 | 423 | 0.47 | 423 | 0.01 |
| 424 | 4.35 | 424 | 0.02 | 424 | 0.44 | 424 | 0.02 |
| 425 | 4.33 | 425 | 0.02 | 425 | 0.41 | 425 | 0.02 |
| 426 | 4.30 | 426 | 0.03 | 426 | 0.38 | 426 | 0.03 |
| 427 | 4.27 | 427 | 0.03 | 427 | 0.34 | 427 | 0.03 |
| 428 | 4.25 | 428 | 0.04 | 428 | 0.31 | 428 | 0.04 |
| 429 | 4.24 | 429 | 0.04 | 429 | 0.27 | 429 | 0.04 |
| 430 | 4.26 | 430 | 0.04 | 430 | 0.23 | 430 | 0.04 |

[Fig. 11]

| EXAMPLE 3 | | | | EXAMPLE 4 | | | |
| OBJECT SIDE | | EYEBALL SIDE | | OBJECT SIDE | | EYEBALL SIDE | |
| nm | % | nm | % | nm | % | nm | % |
|---|---|---|---|---|---|---|---|
| 431 | 4.29 | 431 | 0.04 | 431 | 0.19 | 431 | 0.04 |
| 432 | 4.34 | 432 | 0.04 | 432 | 0.16 | 432 | 0.04 |
| 433 | 4.39 | 433 | 0.04 | 433 | 0.13 | 433 | 0.04 |
| 434 | 4.45 | 434 | 0.04 | 434 | 0.10 | 434 | 0.04 |
| 435 | 4.51 | 435 | 0.04 | 435 | 0.08 | 435 | 0.04 |
| 436 | 4.55 | 436 | 0.03 | 436 | 0.07 | 436 | 0.03 |
| 437 | 4.58 | 437 | 0.03 | 437 | 0.06 | 437 | 0.03 |
| 438 | 4.58 | 438 | 0.03 | 438 | 0.05 | 438 | 0.03 |
| 439 | 4.56 | 439 | 0.03 | 439 | 0.05 | 439 | 0.03 |
| 440 | 4.52 | 440 | 0.04 | 440 | 0.05 | 440 | 0.04 |
| 441 | 4.45 | 441 | 0.04 | 441 | 0.04 | 441 | 0.04 |
| 442 | 4.38 | 442 | 0.05 | 442 | 0.04 | 442 | 0.05 |
| 443 | 4.29 | 443 | 0.06 | 443 | 0.04 | 443 | 0.06 |
| 444 | 4.21 | 444 | 0.07 | 444 | 0.03 | 444 | 0.07 |
| 445 | 4.12 | 445 | 0.08 | 445 | 0.03 | 445 | 0.08 |
| 446 | 4.05 | 446 | 0.08 | 446 | 0.02 | 446 | 0.08 |
| 447 | 3.98 | 447 | 0.09 | 447 | 0.02 | 447 | 0.09 |
| 448 | 3.93 | 448 | 0.10 | 448 | 0.02 | 448 | 0.10 |
| 449 | 3.89 | 449 | 0.10 | 449 | 0.02 | 449 | 0.10 |
| 450 | 3.86 | 450 | 0.11 | 450 | 0.02 | 450 | 0.11 |
| 451 | 3.84 | 451 | 0.11 | 451 | 0.02 | 451 | 0.11 |
| 452 | 3.82 | 452 | 0.11 | 452 | 0.02 | 452 | 0.11 |
| 453 | 3.80 | 453 | 0.11 | 453 | 0.02 | 453 | 0.11 |
| 454 | 3.77 | 454 | 0.10 | 454 | 0.03 | 454 | 0.10 |
| 455 | 3.72 | 455 | 0.10 | 455 | 0.03 | 455 | 0.10 |
| 456 | 3.66 | 456 | 0.10 | 456 | 0.04 | 456 | 0.10 |
| 457 | 3.59 | 457 | 0.10 | 457 | 0.04 | 457 | 0.10 |
| 458 | 3.50 | 458 | 0.10 | 458 | 0.04 | 458 | 0.10 |
| 459 | 3.40 | 459 | 0.10 | 459 | 0.05 | 459 | 0.10 |
| 460 | 3.28 | 460 | 0.10 | 460 | 0.06 | 460 | 0.10 |
| 461 | 3.16 | 461 | 0.11 | 461 | 0.07 | 461 | 0.11 |
| 462 | 3.04 | 462 | 0.12 | 462 | 0.09 | 462 | 0.12 |
| 463 | 2.91 | 463 | 0.13 | 463 | 0.10 | 463 | 0.13 |
| 464 | 2.80 | 464 | 0.14 | 464 | 0.13 | 464 | 0.14 |
| 465 | 2.69 | 465 | 0.15 | 465 | 0.15 | 465 | 0.15 |
| 466 | 2.59 | 466 | 0.16 | 466 | 0.18 | 466 | 0.16 |
| 467 | 2.50 | 467 | 0.18 | 467 | 0.21 | 467 | 0.18 |
| 468 | 2.43 | 468 | 0.19 | 468 | 0.24 | 468 | 0.19 |
| 469 | 2.36 | 469 | 0.20 | 469 | 0.28 | 469 | 0.20 |
| 470 | 2.30 | 470 | 0.21 | 470 | 0.31 | 470 | 0.21 |
| 471 | 2.25 | 471 | 0.21 | 471 | 0.34 | 471 | 0.21 |
| 472 | 2.20 | 472 | 0.21 | 472 | 0.36 | 472 | 0.21 |
| 473 | 2.15 | 473 | 0.21 | 473 | 0.39 | 473 | 0.21 |
| 474 | 2.10 | 474 | 0.21 | 474 | 0.41 | 474 | 0.21 |
| 475 | 2.04 | 475 | 0.21 | 475 | 0.43 | 475 | 0.21 |
| 476 | 1.97 | 476 | 0.21 | 476 | 0.45 | 476 | 0.21 |
| 477 | 1.90 | 477 | 0.20 | 477 | 0.47 | 477 | 0.20 |
| 478 | 1.82 | 478 | 0.20 | 478 | 0.49 | 478 | 0.20 |
| 479 | 1.73 | 479 | 0.20 | 479 | 0.51 | 479 | 0.20 |
| 480 | 1.64 | 480 | 0.20 | 480 | 0.54 | 480 | 0.20 |

[Fig. 12]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 481 | 1.55 | 481 | 0.20 | 481 | 0.57 | 481 | 0.20 |
| 482 | 1.46 | 482 | 0.20 | 482 | 0.60 | 482 | 0.20 |
| 483 | 1.37 | 483 | 0.21 | 483 | 0.64 | 483 | 0.21 |
| 484 | 1.29 | 484 | 0.22 | 484 | 0.69 | 484 | 0.22 |
| 485 | 1.21 | 485 | 0.23 | 485 | 0.74 | 485 | 0.23 |
| 486 | 1.14 | 486 | 0.24 | 486 | 0.79 | 486 | 0.24 |
| 487 | 1.08 | 487 | 0.25 | 487 | 0.85 | 487 | 0.25 |
| 488 | 1.03 | 488 | 0.27 | 488 | 0.91 | 488 | 0.27 |
| 489 | 0.99 | 489 | 0.28 | 489 | 0.97 | 489 | 0.28 |
| 490 | 0.95 | 490 | 0.29 | 490 | 1.03 | 490 | 0.29 |
| 491 | 0.92 | 491 | 0.30 | 491 | 1.08 | 491 | 0.30 |
| 492 | 0.90 | 492 | 0.31 | 492 | 1.13 | 492 | 0.31 |
| 493 | 0.88 | 493 | 0.32 | 493 | 1.18 | 493 | 0.32 |
| 494 | 0.86 | 494 | 0.33 | 494 | 1.22 | 494 | 0.33 |
| 495 | 0.84 | 495 | 0.33 | 495 | 1.25 | 495 | 0.33 |
| 496 | 0.81 | 496 | 0.33 | 496 | 1.28 | 496 | 0.33 |
| 497 | 0.79 | 497 | 0.33 | 497 | 1.31 | 497 | 0.33 |
| 498 | 0.76 | 498 | 0.32 | 498 | 1.33 | 498 | 0.32 |
| 499 | 0.73 | 499 | 0.32 | 499 | 1.35 | 499 | 0.32 |
| 500 | 0.69 | 500 | 0.31 | 500 | 1.37 | 500 | 0.31 |
| 501 | 0.66 | 501 | 0.30 | 501 | 1.39 | 501 | 0.30 |
| 502 | 0.62 | 502 | 0.30 | 502 | 1.41 | 502 | 0.30 |
| 503 | 0.59 | 503 | 0.29 | 503 | 1.44 | 503 | 0.29 |
| 504 | 0.55 | 504 | 0.29 | 504 | 1.47 | 504 | 0.29 |
| 505 | 0.52 | 505 | 0.29 | 505 | 1.50 | 505 | 0.29 |
| 506 | 0.50 | 506 | 0.29 | 506 | 1.54 | 506 | 0.29 |
| 507 | 0.48 | 507 | 0.29 | 507 | 1.58 | 507 | 0.29 |
| 508 | 0.46 | 508 | 0.30 | 508 | 1.63 | 508 | 0.30 |
| 509 | 0.45 | 509 | 0.30 | 509 | 1.69 | 509 | 0.30 |
| 510 | 0.44 | 510 | 0.31 | 510 | 1.74 | 510 | 0.31 |
| 511 | 0.44 | 511 | 0.32 | 511 | 1.79 | 511 | 0.32 |
| 512 | 0.45 | 512 | 0.33 | 512 | 1.85 | 512 | 0.33 |
| 513 | 0.46 | 513 | 0.35 | 513 | 1.90 | 513 | 0.35 |
| 514 | 0.47 | 514 | 0.36 | 514 | 1.95 | 514 | 0.36 |
| 515 | 0.48 | 515 | 0.37 | 515 | 1.99 | 515 | 0.37 |
| 516 | 0.49 | 516 | 0.37 | 516 | 2.03 | 516 | 0.37 |
| 517 | 0.50 | 517 | 0.38 | 517 | 2.06 | 517 | 0.38 |
| 518 | 0.51 | 518 | 0.39 | 518 | 2.08 | 518 | 0.39 |
| 519 | 0.52 | 519 | 0.39 | 519 | 2.10 | 519 | 0.39 |
| 520 | 0.52 | 520 | 0.39 | 520 | 2.11 | 520 | 0.39 |
| 521 | 0.52 | 521 | 0.39 | 521 | 2.11 | 521 | 0.39 |
| 522 | 0.52 | 522 | 0.38 | 522 | 2.11 | 522 | 0.38 |
| 523 | 0.52 | 523 | 0.38 | 523 | 2.10 | 523 | 0.38 |
| 524 | 0.51 | 524 | 0.37 | 524 | 2.10 | 524 | 0.37 |
| 525 | 0.50 | 525 | 0.36 | 525 | 2.09 | 525 | 0.36 |
| 526 | 0.50 | 526 | 0.35 | 526 | 2.08 | 526 | 0.35 |
| 527 | 0.49 | 527 | 0.34 | 527 | 2.07 | 527 | 0.34 |
| 528 | 0.48 | 528 | 0.33 | 528 | 2.07 | 528 | 0.33 |
| 529 | 0.48 | 529 | 0.32 | 529 | 2.07 | 529 | 0.32 |
| 530 | 0.48 | 530 | 0.32 | 530 | 2.07 | 530 | 0.32 |

[Fig. 13]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 531 | 0.48 | 531 | 0.31 | 531 | 2.08 | 531 | 0.31 |
| 532 | 0.48 | 532 | 0.31 | 532 | 2.09 | 532 | 0.31 |
| 533 | 0.49 | 533 | 0.30 | 533 | 2.11 | 533 | 0.30 |
| 534 | 0.50 | 534 | 0.30 | 534 | 2.12 | 534 | 0.30 |
| 535 | 0.51 | 535 | 0.30 | 535 | 2.14 | 535 | 0.30 |
| 536 | 0.53 | 536 | 0.31 | 536 | 2.16 | 536 | 0.31 |
| 537 | 0.54 | 537 | 0.31 | 537 | 2.18 | 537 | 0.31 |
| 538 | 0.56 | 538 | 0.32 | 538 | 2.20 | 538 | 0.32 |
| 539 | 0.58 | 539 | 0.32 | 539 | 2.22 | 539 | 0.32 |
| 540 | 0.59 | 540 | 0.33 | 540 | 2.23 | 540 | 0.33 |
| 541 | 0.61 | 541 | 0.33 | 541 | 2.24 | 541 | 0.33 |
| 542 | 0.62 | 542 | 0.34 | 542 | 2.25 | 542 | 0.34 |
| 543 | 0.64 | 543 | 0.34 | 543 | 2.24 | 543 | 0.34 |
| 544 | 0.64 | 544 | 0.35 | 544 | 2.24 | 544 | 0.35 |
| 545 | 0.65 | 545 | 0.35 | 545 | 2.22 | 545 | 0.35 |
| 546 | 0.65 | 546 | 0.35 | 546 | 2.20 | 546 | 0.35 |
| 547 | 0.65 | 547 | 0.35 | 547 | 2.18 | 547 | 0.35 |
| 548 | 0.65 | 548 | 0.34 | 548 | 2.15 | 548 | 0.34 |
| 549 | 0.64 | 549 | 0.34 | 549 | 2.11 | 549 | 0.34 |
| 550 | 0.63 | 550 | 0.33 | 550 | 2.08 | 550 | 0.33 |
| 551 | 0.62 | 551 | 0.32 | 551 | 2.04 | 551 | 0.32 |
| 552 | 0.61 | 552 | 0.31 | 552 | 2.00 | 552 | 0.31 |
| 553 | 0.60 | 553 | 0.30 | 553 | 1.96 | 553 | 0.30 |
| 554 | 0.59 | 554 | 0.29 | 554 | 1.92 | 554 | 0.29 |
| 555 | 0.58 | 555 | 0.28 | 555 | 1.88 | 555 | 0.28 |
| 556 | 0.57 | 556 | 0.27 | 556 | 1.85 | 556 | 0.27 |
| 557 | 0.56 | 557 | 0.26 | 557 | 1.82 | 557 | 0.26 |
| 558 | 0.55 | 558 | 0.25 | 558 | 1.79 | 558 | 0.25 |
| 559 | 0.54 | 559 | 0.24 | 559 | 1.77 | 559 | 0.24 |
| 560 | 0.54 | 560 | 0.23 | 560 | 1.75 | 560 | 0.23 |
| 561 | 0.54 | 561 | 0.22 | 561 | 1.73 | 561 | 0.22 |
| 562 | 0.54 | 562 | 0.22 | 562 | 1.71 | 562 | 0.22 |
| 563 | 0.54 | 563 | 0.21 | 563 | 1.70 | 563 | 0.21 |
| 564 | 0.54 | 564 | 0.21 | 564 | 1.69 | 564 | 0.21 |
| 565 | 0.54 | 565 | 0.21 | 565 | 1.67 | 565 | 0.21 |
| 566 | 0.54 | 566 | 0.21 | 566 | 1.66 | 566 | 0.21 |
| 567 | 0.55 | 567 | 0.21 | 567 | 1.65 | 567 | 0.21 |
| 568 | 0.55 | 568 | 0.21 | 568 | 1.64 | 568 | 0.21 |
| 569 | 0.55 | 569 | 0.21 | 569 | 1.62 | 569 | 0.21 |
| 570 | 0.55 | 570 | 0.21 | 570 | 1.60 | 570 | 0.21 |
| 571 | 0.55 | 571 | 0.21 | 571 | 1.58 | 571 | 0.21 |
| 572 | 0.55 | 572 | 0.21 | 572 | 1.55 | 572 | 0.21 |
| 573 | 0.55 | 573 | 0.21 | 573 | 1.53 | 573 | 0.21 |
| 574 | 0.54 | 574 | 0.21 | 574 | 1.49 | 574 | 0.21 |
| 575 | 0.53 | 575 | 0.21 | 575 | 1.46 | 575 | 0.21 |
| 576 | 0.52 | 576 | 0.21 | 576 | 1.42 | 576 | 0.21 |
| 577 | 0.51 | 577 | 0.21 | 577 | 1.38 | 577 | 0.21 |
| 578 | 0.50 | 578 | 0.21 | 578 | 1.34 | 578 | 0.21 |
| 579 | 0.49 | 579 | 0.20 | 579 | 1.29 | 579 | 0.20 |
| 580 | 0.47 | 580 | 0.19 | 580 | 1.24 | 580 | 0.19 |

[Fig. 14]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 581 | 0.45 | 581 | 0.19 | 581 | 1.20 | 581 | 0.19 |
| 582 | 0.44 | 582 | 0.18 | 582 | 1.15 | 582 | 0.18 |
| 583 | 0.42 | 583 | 0.17 | 583 | 1.11 | 583 | 0.17 |
| 584 | 0.40 | 584 | 0.16 | 584 | 1.06 | 584 | 0.16 |
| 585 | 0.38 | 585 | 0.15 | 585 | 1.02 | 585 | 0.15 |
| 586 | 0.37 | 586 | 0.14 | 586 | 0.98 | 586 | 0.14 |
| 587 | 0.35 | 587 | 0.14 | 587 | 0.94 | 587 | 0.14 |
| 588 | 0.34 | 588 | 0.13 | 588 | 0.90 | 588 | 0.13 |
| 589 | 0.32 | 589 | 0.12 | 589 | 0.87 | 589 | 0.12 |
| 590 | 0.31 | 590 | 0.11 | 590 | 0.84 | 590 | 0.11 |
| 591 | 0.30 | 591 | 0.10 | 591 | 0.81 | 591 | 0.10 |
| 592 | 0.29 | 592 | 0.09 | 592 | 0.78 | 592 | 0.09 |
| 593 | 0.28 | 593 | 0.09 | 593 | 0.76 | 593 | 0.09 |
| 594 | 0.27 | 594 | 0.08 | 594 | 0.74 | 594 | 0.08 |
| 595 | 0.26 | 595 | 0.08 | 595 | 0.72 | 595 | 0.08 |
| 596 | 0.26 | 596 | 0.07 | 596 | 0.70 | 596 | 0.07 |
| 597 | 0.25 | 597 | 0.07 | 597 | 0.68 | 597 | 0.07 |
| 598 | 0.25 | 598 | 0.07 | 598 | 0.66 | 598 | 0.07 |
| 599 | 0.25 | 599 | 0.07 | 599 | 0.64 | 599 | 0.07 |
| 600 | 0.24 | 600 | 0.06 | 600 | 0.63 | 600 | 0.06 |
| 601 | 0.24 | 601 | 0.06 | 601 | 0.61 | 601 | 0.06 |
| 602 | 0.24 | 602 | 0.06 | 602 | 0.59 | 602 | 0.06 |
| 603 | 0.24 | 603 | 0.06 | 603 | 0.57 | 603 | 0.06 |
| 604 | 0.24 | 604 | 0.06 | 604 | 0.54 | 604 | 0.06 |
| 605 | 0.24 | 605 | 0.06 | 605 | 0.52 | 605 | 0.06 |
| 606 | 0.23 | 606 | 0.06 | 606 | 0.50 | 606 | 0.06 |
| 607 | 0.23 | 607 | 0.06 | 607 | 0.47 | 607 | 0.06 |
| 608 | 0.23 | 608 | 0.06 | 608 | 0.45 | 608 | 0.06 |
| 609 | 0.23 | 609 | 0.05 | 609 | 0.42 | 609 | 0.05 |
| 610 | 0.23 | 610 | 0.05 | 610 | 0.39 | 610 | 0.05 |
| 611 | 0.23 | 611 | 0.05 | 611 | 0.37 | 611 | 0.05 |
| 612 | 0.23 | 612 | 0.05 | 612 | 0.34 | 612 | 0.05 |
| 613 | 0.23 | 613 | 0.04 | 613 | 0.31 | 613 | 0.04 |
| 614 | 0.23 | 614 | 0.04 | 614 | 0.29 | 614 | 0.04 |
| 615 | 0.23 | 615 | 0.04 | 615 | 0.26 | 615 | 0.04 |
| 616 | 0.23 | 616 | 0.03 | 616 | 0.24 | 616 | 0.03 |
| 617 | 0.22 | 617 | 0.03 | 617 | 0.22 | 617 | 0.03 |
| 618 | 0.22 | 618 | 0.03 | 618 | 0.20 | 618 | 0.03 |
| 619 | 0.22 | 619 | 0.02 | 619 | 0.18 | 619 | 0.02 |
| 620 | 0.22 | 620 | 0.02 | 620 | 0.16 | 620 | 0.02 |
| 621 | 0.22 | 621 | 0.02 | 621 | 0.14 | 621 | 0.02 |
| 622 | 0.22 | 622 | 0.01 | 622 | 0.13 | 622 | 0.01 |
| 623 | 0.22 | 623 | 0.01 | 623 | 0.12 | 623 | 0.01 |
| 624 | 0.23 | 624 | 0.01 | 624 | 0.10 | 624 | 0.01 |
| 625 | 0.23 | 625 | 0.01 | 625 | 0.10 | 625 | 0.01 |
| 626 | 0.23 | 626 | 0.00 | 626 | 0.09 | 626 | 0.00 |
| 627 | 0.23 | 627 | 0.00 | 627 | 0.08 | 627 | 0.00 |
| 628 | 0.23 | 628 | 0.00 | 628 | 0.07 | 628 | 0.00 |
| 629 | 0.24 | 629 | 0.00 | 629 | 0.07 | 629 | 0.00 |
| 630 | 0.24 | 630 | 0.00 | 630 | 0.06 | 630 | 0.00 |

[Fig. 15]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 631 | 0.25 | 631 | 0.00 | 631 | 0.06 | 631 | 0.00 |
| 632 | 0.25 | 632 | 0.00 | 632 | 0.06 | 632 | 0.00 |
| 633 | 0.26 | 633 | 0.00 | 633 | 0.05 | 633 | 0.00 |
| 634 | 0.27 | 634 | 0.00 | 634 | 0.05 | 634 | 0.00 |
| 635 | 0.28 | 635 | 0.00 | 635 | 0.05 | 635 | 0.00 |
| 636 | 0.29 | 636 | 0.00 | 636 | 0.04 | 636 | 0.00 |
| 637 | 0.30 | 637 | 0.00 | 637 | 0.04 | 637 | 0.00 |
| 638 | 0.31 | 638 | 0.00 | 638 | 0.04 | 638 | 0.00 |
| 639 | 0.32 | 639 | 0.00 | 639 | 0.03 | 639 | 0.00 |
| 640 | 0.34 | 640 | 0.01 | 640 | 0.03 | 640 | 0.01 |
| 641 | 0.36 | 641 | 0.01 | 641 | 0.03 | 641 | 0.01 |
| 642 | 0.37 | 642 | 0.01 | 642 | 0.03 | 642 | 0.01 |
| 643 | 0.39 | 643 | 0.01 | 643 | 0.02 | 643 | 0.01 |
| 644 | 0.42 | 644 | 0.01 | 644 | 0.02 | 644 | 0.01 |
| 645 | 0.44 | 645 | 0.01 | 645 | 0.02 | 645 | 0.01 |
| 646 | 0.46 | 646 | 0.01 | 646 | 0.02 | 646 | 0.01 |
| 647 | 0.48 | 647 | 0.01 | 647 | 0.02 | 647 | 0.01 |
| 648 | 0.51 | 648 | 0.01 | 648 | 0.03 | 648 | 0.01 |
| 649 | 0.54 | 649 | 0.01 | 649 | 0.03 | 649 | 0.01 |
| 650 | 0.56 | 650 | 0.01 | 650 | 0.03 | 650 | 0.01 |
| 651 | 0.59 | 651 | 0.01 | 651 | 0.04 | 651 | 0.01 |
| 652 | 0.62 | 652 | 0.02 | 652 | 0.04 | 652 | 0.02 |
| 653 | 0.65 | 653 | 0.02 | 653 | 0.05 | 653 | 0.02 |
| 654 | 0.67 | 654 | 0.02 | 654 | 0.06 | 654 | 0.02 |
| 655 | 0.70 | 655 | 0.02 | 655 | 0.07 | 655 | 0.02 |
| 656 | 0.73 | 656 | 0.03 | 656 | 0.08 | 656 | 0.03 |
| 657 | 0.76 | 657 | 0.03 | 657 | 0.09 | 657 | 0.03 |
| 658 | 0.79 | 658 | 0.04 | 658 | 0.11 | 658 | 0.04 |
| 659 | 0.81 | 659 | 0.04 | 659 | 0.12 | 659 | 0.04 |
| 660 | 0.84 | 660 | 0.05 | 660 | 0.13 | 660 | 0.05 |
| 661 | 0.87 | 661 | 0.05 | 661 | 0.15 | 661 | 0.05 |
| 662 | 0.89 | 662 | 0.06 | 662 | 0.16 | 662 | 0.06 |
| 663 | 0.91 | 663 | 0.07 | 663 | 0.18 | 663 | 0.07 |
| 664 | 0.94 | 664 | 0.08 | 664 | 0.20 | 664 | 0.08 |
| 665 | 0.96 | 665 | 0.08 | 665 | 0.21 | 665 | 0.08 |
| 666 | 0.98 | 666 | 0.09 | 666 | 0.23 | 666 | 0.09 |
| 667 | 1.01 | 667 | 0.10 | 667 | 0.24 | 667 | 0.10 |
| 668 | 1.03 | 668 | 0.11 | 668 | 0.26 | 668 | 0.11 |
| 669 | 1.05 | 669 | 0.12 | 669 | 0.27 | 669 | 0.12 |
| 670 | 1.07 | 670 | 0.13 | 670 | 0.29 | 670 | 0.13 |
| 671 | 1.09 | 671 | 0.14 | 671 | 0.30 | 671 | 0.14 |
| 672 | 1.11 | 672 | 0.14 | 672 | 0.32 | 672 | 0.14 |
| 673 | 1.13 | 673 | 0.15 | 673 | 0.33 | 673 | 0.15 |
| 674 | 1.15 | 674 | 0.16 | 674 | 0.34 | 674 | 0.16 |
| 675 | 1.17 | 675 | 0.17 | 675 | 0.35 | 675 | 0.17 |
| 676 | 1.20 | 676 | 0.18 | 676 | 0.37 | 676 | 0.18 |
| 677 | 1.22 | 677 | 0.19 | 677 | 0.38 | 677 | 0.19 |
| 678 | 1.25 | 678 | 0.19 | 678 | 0.39 | 678 | 0.19 |
| 679 | 1.27 | 679 | 0.20 | 679 | 0.40 | 679 | 0.20 |
| 680 | 1.30 | 680 | 0.21 | 680 | 0.42 | 680 | 0.21 |

[Fig. 16]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 681 | 1.33 | 681 | 0.21 | 681 | 0.43 | 681 | 0.21 |
| 682 | 1.36 | 682 | 0.22 | 682 | 0.44 | 682 | 0.22 |
| 683 | 1.39 | 683 | 0.23 | 683 | 0.46 | 683 | 0.23 |
| 684 | 1.43 | 684 | 0.23 | 684 | 0.47 | 684 | 0.23 |
| 685 | 1.46 | 685 | 0.24 | 685 | 0.49 | 685 | 0.24 |
| 686 | 1.50 | 686 | 0.24 | 686 | 0.51 | 686 | 0.24 |
| 687 | 1.54 | 687 | 0.25 | 687 | 0.53 | 687 | 0.25 |
| 688 | 1.58 | 688 | 0.25 | 688 | 0.55 | 688 | 0.25 |
| 689 | 1.62 | 689 | 0.26 | 689 | 0.57 | 689 | 0.26 |
| 690 | 1.66 | 690 | 0.27 | 690 | 0.59 | 690 | 0.27 |
| 691 | 1.70 | 691 | 0.27 | 691 | 0.61 | 691 | 0.27 |
| 692 | 1.75 | 692 | 0.28 | 692 | 0.64 | 692 | 0.28 |
| 693 | 1.79 | 693 | 0.29 | 693 | 0.66 | 693 | 0.29 |
| 694 | 1.84 | 694 | 0.30 | 694 | 0.69 | 694 | 0.30 |
| 695 | 1.88 | 695 | 0.31 | 695 | 0.72 | 695 | 0.31 |
| 696 | 1.93 | 696 | 0.31 | 696 | 0.75 | 696 | 0.31 |
| 697 | 1.98 | 697 | 0.33 | 697 | 0.78 | 697 | 0.33 |
| 698 | 2.02 | 698 | 0.34 | 698 | 0.81 | 698 | 0.34 |
| 699 | 2.07 | 699 | 0.35 | 699 | 0.84 | 699 | 0.35 |
| 700 | 2.11 | 700 | 0.36 | 700 | 0.87 | 700 | 0.36 |
| 701 | 2.15 | 701 | 0.38 | 701 | 0.90 | 701 | 0.38 |
| 702 | 2.20 | 702 | 0.39 | 702 | 0.93 | 702 | 0.39 |
| 703 | 2.24 | 703 | 0.41 | 703 | 0.97 | 703 | 0.41 |
| 704 | 2.28 | 704 | 0.42 | 704 | 1.00 | 704 | 0.42 |
| 705 | 2.31 | 705 | 0.44 | 705 | 1.03 | 705 | 0.44 |
| 706 | 2.35 | 706 | 0.46 | 706 | 1.06 | 706 | 0.46 |
| 707 | 2.39 | 707 | 0.48 | 707 | 1.09 | 707 | 0.48 |
| 708 | 2.42 | 708 | 0.50 | 708 | 1.12 | 708 | 0.50 |
| 709 | 2.45 | 709 | 0.52 | 709 | 1.15 | 709 | 0.52 |
| 710 | 2.48 | 710 | 0.54 | 710 | 1.18 | 710 | 0.54 |
| 711 | 2.51 | 711 | 0.56 | 711 | 1.20 | 711 | 0.56 |
| 712 | 2.54 | 712 | 0.58 | 712 | 1.23 | 712 | 0.58 |
| 713 | 2.57 | 713 | 0.60 | 713 | 1.25 | 713 | 0.60 |
| 714 | 2.59 | 714 | 0.62 | 714 | 1.28 | 714 | 0.62 |
| 715 | 2.62 | 715 | 0.64 | 715 | 1.30 | 715 | 0.64 |
| 716 | 2.64 | 716 | 0.67 | 716 | 1.32 | 716 | 0.67 |
| 717 | 2.66 | 717 | 0.69 | 717 | 1.34 | 717 | 0.69 |
| 718 | 2.68 | 718 | 0.71 | 718 | 1.36 | 718 | 0.71 |
| 719 | 2.71 | 719 | 0.73 | 719 | 1.38 | 719 | 0.73 |
| 720 | 2.73 | 720 | 0.75 | 720 | 1.40 | 720 | 0.75 |
| 721 | 2.75 | 721 | 0.77 | 721 | 1.42 | 721 | 0.77 |
| 722 | 2.77 | 722 | 0.79 | 722 | 1.43 | 722 | 0.79 |
| 723 | 2.80 | 723 | 0.81 | 723 | 1.45 | 723 | 0.81 |
| 724 | 2.82 | 724 | 0.82 | 724 | 1.47 | 724 | 0.82 |
| 725 | 2.84 | 725 | 0.84 | 725 | 1.48 | 725 | 0.84 |
| 726 | 2.87 | 726 | 0.86 | 726 | 1.50 | 726 | 0.86 |
| 727 | 2.90 | 727 | 0.88 | 727 | 1.52 | 727 | 0.88 |
| 728 | 2.92 | 728 | 0.89 | 728 | 1.54 | 728 | 0.89 |
| 729 | 2.95 | 729 | 0.91 | 729 | 1.56 | 729 | 0.91 |
| 730 | 2.98 | 730 | 0.92 | 730 | 1.58 | 730 | 0.92 |

[Fig. 17]

| EXAMPLE 3 | | | | EXAMPLE 4 | | | |
|---|---|---|---|---|---|---|---|
| OBJECT SIDE | | EYEBALL SIDE | | OBJECT SIDE | | EYEBALL SIDE | |
| nm | % | nm | % | nm | % | nm | % |
| 731 | 3.01 | 731 | 0.94 | 731 | 1.60 | 731 | 0.94 |
| 732 | 3.05 | 732 | 0.95 | 732 | 1.62 | 732 | 0.95 |
| 733 | 3.08 | 733 | 0.96 | 733 | 1.64 | 733 | 0.96 |
| 734 | 3.12 | 734 | 0.98 | 734 | 1.66 | 734 | 0.98 |
| 735 | 3.15 | 735 | 0.99 | 735 | 1.69 | 735 | 0.99 |
| 736 | 3.19 | 736 | 1.00 | 736 | 1.72 | 736 | 1.00 |
| 737 | 3.23 | 737 | 1.02 | 737 | 1.74 | 737 | 1.02 |
| 738 | 3.27 | 738 | 1.03 | 738 | 1.77 | 738 | 1.03 |
| 739 | 3.31 | 739 | 1.05 | 739 | 1.80 | 739 | 1.05 |
| 740 | 3.36 | 740 | 1.06 | 740 | 1.83 | 740 | 1.06 |
| 741 | 3.40 | 741 | 1.08 | 741 | 1.86 | 741 | 1.08 |
| 742 | 3.44 | 742 | 1.09 | 742 | 1.90 | 742 | 1.09 |
| 743 | 3.49 | 743 | 1.11 | 743 | 1.93 | 743 | 1.11 |
| 744 | 3.53 | 744 | 1.12 | 744 | 1.97 | 744 | 1.12 |
| 745 | 3.57 | 745 | 1.14 | 745 | 2.00 | 745 | 1.14 |
| 746 | 3.62 | 746 | 1.16 | 746 | 2.04 | 746 | 1.16 |
| 747 | 3.66 | 747 | 1.18 | 747 | 2.08 | 747 | 1.18 |
| 748 | 3.70 | 748 | 1.20 | 748 | 2.11 | 748 | 1.20 |
| 749 | 3.74 | 749 | 1.22 | 749 | 2.15 | 749 | 1.22 |
| 750 | 3.78 | 750 | 1.25 | 750 | 2.19 | 750 | 1.25 |
| 751 | 3.82 | 751 | 1.27 | 751 | 2.22 | 751 | 1.27 |
| 752 | 3.86 | 752 | 1.30 | 752 | 2.26 | 752 | 1.30 |
| 753 | 3.89 | 753 | 1.32 | 753 | 2.29 | 753 | 1.32 |
| 754 | 3.93 | 754 | 1.35 | 754 | 2.33 | 754 | 1.35 |
| 755 | 3.96 | 755 | 1.38 | 755 | 2.36 | 755 | 1.38 |
| 756 | 3.99 | 756 | 1.41 | 756 | 2.40 | 756 | 1.41 |
| 757 | 4.02 | 757 | 1.44 | 757 | 2.43 | 757 | 1.44 |
| 758 | 4.05 | 758 | 1.47 | 758 | 2.46 | 758 | 1.47 |
| 759 | 4.08 | 759 | 1.50 | 759 | 2.49 | 759 | 1.50 |
| 760 | 4.11 | 760 | 1.53 | 760 | 2.52 | 760 | 1.53 |
| 761 | 4.13 | 761 | 1.56 | 761 | 2.55 | 761 | 1.56 |
| 762 | 4.15 | 762 | 1.59 | 762 | 2.57 | 762 | 1.59 |
| 763 | 4.18 | 763 | 1.63 | 763 | 2.60 | 763 | 1.63 |
| 764 | 4.20 | 764 | 1.66 | 764 | 2.63 | 764 | 1.66 |
| 765 | 4.22 | 765 | 1.70 | 765 | 2.65 | 765 | 1.70 |
| 766 | 4.24 | 766 | 1.73 | 766 | 2.67 | 766 | 1.73 |
| 767 | 4.25 | 767 | 1.76 | 767 | 2.69 | 767 | 1.76 |
| 768 | 4.27 | 768 | 1.80 | 768 | 2.72 | 768 | 1.80 |
| 769 | 4.28 | 769 | 1.83 | 769 | 2.74 | 769 | 1.83 |
| 770 | 4.30 | 770 | 1.87 | 770 | 2.75 | 770 | 1.87 |
| 771 | 4.31 | 771 | 1.90 | 771 | 2.77 | 771 | 1.90 |
| 772 | 4.33 | 772 | 1.93 | 772 | 2.79 | 772 | 1.93 |
| 773 | 4.34 | 773 | 1.97 | 773 | 2.81 | 773 | 1.97 |
| 774 | 4.35 | 774 | 2.00 | 774 | 2.82 | 774 | 2.00 |
| 775 | 4.36 | 775 | 2.03 | 775 | 2.84 | 775 | 2.03 |
| 776 | 4.38 | 776 | 2.06 | 776 | 2.85 | 776 | 2.06 |
| 777 | 4.39 | 777 | 2.09 | 777 | 2.87 | 777 | 2.09 |
| 778 | 4.40 | 778 | 2.13 | 778 | 2.88 | 778 | 2.13 |
| 779 | 4.42 | 779 | 2.15 | 779 | 2.90 | 779 | 2.15 |
| 780 | 4.43 | 780 | 2.18 | 780 | 2.92 | 780 | 2.18 |

[Fig. 18]

| COMPARATIVE EXAMPLE 1 | | | |
|---|---|---|---|
| OBJECT SIDE | | EYEBALL SIDE | |
| nm | % | nm | % |
| 380 | 13.64 | 380 | 13.64 |
| 381 | 12.99 | 381 | 12.99 |
| 382 | 12.31 | 382 | 12.31 |
| 383 | 11.62 | 383 | 11.62 |
| 384 | 10.96 | 384 | 10.96 |
| 385 | 10.35 | 385 | 10.35 |
| 386 | 9.80 | 386 | 9.80 |
| 387 | 9.33 | 387 | 9.33 |
| 388 | 8.91 | 388 | 8.91 |
| 389 | 8.55 | 389 | 8.55 |
| 390 | 8.21 | 390 | 8.21 |
| 391 | 7.89 | 391 | 7.89 |
| 392 | 7.55 | 392 | 7.55 |
| 393 | 7.20 | 393 | 7.20 |
| 394 | 6.83 | 394 | 6.83 |
| 395 | 6.45 | 395 | 6.45 |
| 396 | 6.07 | 396 | 6.07 |
| 397 | 5.72 | 397 | 5.72 |
| 398 | 5.40 | 398 | 5.40 |
| 399 | 5.13 | 399 | 5.13 |
| 400 | 4.93 | 400 | 4.93 |
| 401 | 4.77 | 401 | 4.77 |
| 402 | 4.67 | 402 | 4.67 |
| 403 | 4.59 | 403 | 4.59 |
| 404 | 4.54 | 404 | 4.54 |
| 405 | 4.49 | 405 | 4.49 |
| 406 | 4.43 | 406 | 4.43 |
| 407 | 4.36 | 407 | 4.36 |
| 408 | 4.28 | 408 | 4.28 |
| 409 | 4.18 | 409 | 4.18 |
| 410 | 4.08 | 410 | 4.08 |
| 411 | 3.99 | 411 | 3.99 |
| 412 | 3.92 | 412 | 3.92 |
| 413 | 3.88 | 413 | 3.88 |
| 414 | 3.86 | 414 | 3.86 |
| 415 | 3.89 | 415 | 3.89 |
| 416 | 3.94 | 416 | 3.94 |
| 417 | 4.01 | 417 | 4.01 |
| 418 | 4.10 | 418 | 4.10 |
| 419 | 4.18 | 419 | 4.18 |
| 420 | 4.25 | 420 | 4.25 |
| 421 | 4.31 | 421 | 4.31 |
| 422 | 4.34 | 422 | 4.34 |
| 423 | 4.36 | 423 | 4.36 |
| 424 | 4.35 | 424 | 4.35 |
| 425 | 4.33 | 425 | 4.33 |
| 426 | 4.30 | 426 | 4.30 |
| 427 | 4.27 | 427 | 4.27 |
| 428 | 4.25 | 428 | 4.25 |
| 429 | 4.24 | 429 | 4.24 |
| 430 | 4.26 | 430 | 4.26 |

[Fig. 19]

| COMPARATIVE EXAMPLE 1 | | | |
|---|---|---|---|
| OBJECT SIDE | | EYEBALL SIDE | |
| nm | % | nm | % |
| 431 | 4.29 | 431 | 4.29 |
| 432 | 4.34 | 432 | 4.34 |
| 433 | 4.39 | 433 | 4.39 |
| 434 | 4.45 | 434 | 4.45 |
| 435 | 4.51 | 435 | 4.51 |
| 436 | 4.55 | 436 | 4.55 |
| 437 | 4.58 | 437 | 4.58 |
| 438 | 4.58 | 438 | 4.58 |
| 439 | 4.56 | 439 | 4.56 |
| 440 | 4.52 | 440 | 4.52 |
| 441 | 4.45 | 441 | 4.45 |
| 442 | 4.38 | 442 | 4.38 |
| 443 | 4.29 | 443 | 4.29 |
| 444 | 4.21 | 444 | 4.21 |
| 445 | 4.12 | 445 | 4.12 |
| 446 | 4.05 | 446 | 4.05 |
| 447 | 3.98 | 447 | 3.98 |
| 448 | 3.93 | 448 | 3.93 |
| 449 | 3.89 | 449 | 3.89 |
| 450 | 3.86 | 450 | 3.86 |
| 451 | 3.84 | 451 | 3.84 |
| 452 | 3.82 | 452 | 3.82 |
| 453 | 3.80 | 453 | 3.80 |
| 454 | 3.77 | 454 | 3.77 |
| 455 | 3.72 | 455 | 3.72 |
| 456 | 3.66 | 456 | 3.66 |
| 457 | 3.59 | 457 | 3.59 |
| 458 | 3.50 | 458 | 3.50 |
| 459 | 3.40 | 459 | 3.40 |
| 460 | 3.28 | 460 | 3.28 |
| 461 | 3.16 | 461 | 3.16 |
| 462 | 3.04 | 462 | 3.04 |
| 463 | 2.91 | 463 | 2.91 |
| 464 | 2.80 | 464 | 2.80 |
| 465 | 2.69 | 465 | 2.69 |
| 466 | 2.59 | 466 | 2.59 |
| 467 | 2.50 | 467 | 2.50 |
| 468 | 2.43 | 468 | 2.43 |
| 469 | 2.36 | 469 | 2.36 |
| 470 | 2.30 | 470 | 2.30 |
| 471 | 2.25 | 471 | 2.25 |
| 472 | 2.20 | 472 | 2.20 |
| 473 | 2.15 | 473 | 2.15 |
| 474 | 2.10 | 474 | 2.10 |
| 475 | 2.04 | 475 | 2.04 |
| 476 | 1.97 | 476 | 1.97 |
| 477 | 1.90 | 477 | 1.90 |
| 478 | 1.82 | 478 | 1.82 |
| 479 | 1.73 | 479 | 1.73 |
| 480 | 1.64 | 480 | 1.64 |

[Fig. 20]

| COMPARATIVE EXAMPLE 1 | | | |
|---|---|---|---|
| OBJECT SIDE | | EYEBALL SIDE | |
| nm | % | nm | % |
| 481 | 1.55 | 481 | 1.55 |
| 482 | 1.46 | 482 | 1.46 |
| 483 | 1.37 | 483 | 1.37 |
| 484 | 1.29 | 484 | 1.29 |
| 485 | 1.21 | 485 | 1.21 |
| 486 | 1.14 | 486 | 1.14 |
| 487 | 1.08 | 487 | 1.08 |
| 488 | 1.03 | 488 | 1.03 |
| 489 | 0.99 | 489 | 0.99 |
| 490 | 0.95 | 490 | 0.95 |
| 491 | 0.92 | 491 | 0.92 |
| 492 | 0.90 | 492 | 0.90 |
| 493 | 0.88 | 493 | 0.88 |
| 494 | 0.86 | 494 | 0.86 |
| 495 | 0.84 | 495 | 0.84 |
| 496 | 0.81 | 496 | 0.81 |
| 497 | 0.79 | 497 | 0.79 |
| 498 | 0.76 | 498 | 0.76 |
| 499 | 0.73 | 499 | 0.73 |
| 500 | 0.69 | 500 | 0.69 |
| 501 | 0.66 | 501 | 0.66 |
| 502 | 0.62 | 502 | 0.62 |
| 503 | 0.59 | 503 | 0.59 |
| 504 | 0.55 | 504 | 0.55 |
| 505 | 0.52 | 505 | 0.52 |
| 506 | 0.50 | 506 | 0.50 |
| 507 | 0.48 | 507 | 0.48 |
| 508 | 0.46 | 508 | 0.46 |
| 509 | 0.45 | 509 | 0.45 |
| 510 | 0.44 | 510 | 0.44 |
| 511 | 0.44 | 511 | 0.44 |
| 512 | 0.45 | 512 | 0.45 |
| 513 | 0.46 | 513 | 0.46 |
| 514 | 0.47 | 514 | 0.47 |
| 515 | 0.48 | 515 | 0.48 |
| 516 | 0.49 | 516 | 0.49 |
| 517 | 0.50 | 517 | 0.50 |
| 518 | 0.51 | 518 | 0.51 |
| 519 | 0.52 | 519 | 0.52 |
| 520 | 0.52 | 520 | 0.52 |
| 521 | 0.52 | 521 | 0.52 |
| 522 | 0.52 | 522 | 0.52 |
| 523 | 0.52 | 523 | 0.52 |
| 524 | 0.51 | 524 | 0.51 |
| 525 | 0.50 | 525 | 0.50 |
| 526 | 0.50 | 526 | 0.50 |
| 527 | 0.49 | 527 | 0.49 |
| 528 | 0.48 | 528 | 0.48 |
| 529 | 0.48 | 529 | 0.48 |
| 530 | 0.48 | 530 | 0.48 |

[Fig. 21]

| COMPARATIVE EXAMPLE 1 | | | |
|---|---|---|---|
| OBJECT SIDE | | EYEBALL SIDE | |
| nm | % | nm | % |
| 531 | 0.48 | 531 | 0.48 |
| 532 | 0.48 | 532 | 0.48 |
| 533 | 0.49 | 533 | 0.49 |
| 534 | 0.50 | 534 | 0.50 |
| 535 | 0.51 | 535 | 0.51 |
| 536 | 0.53 | 536 | 0.53 |
| 537 | 0.54 | 537 | 0.54 |
| 538 | 0.56 | 538 | 0.56 |
| 539 | 0.58 | 539 | 0.58 |
| 540 | 0.59 | 540 | 0.59 |
| 541 | 0.61 | 541 | 0.61 |
| 542 | 0.62 | 542 | 0.62 |
| 543 | 0.64 | 543 | 0.64 |
| 544 | 0.64 | 544 | 0.64 |
| 545 | 0.65 | 545 | 0.65 |
| 546 | 0.65 | 546 | 0.65 |
| 547 | 0.65 | 547 | 0.65 |
| 548 | 0.65 | 548 | 0.65 |
| 549 | 0.64 | 549 | 0.64 |
| 550 | 0.63 | 550 | 0.63 |
| 551 | 0.62 | 551 | 0.62 |
| 552 | 0.61 | 552 | 0.61 |
| 553 | 0.60 | 553 | 0.60 |
| 554 | 0.59 | 554 | 0.59 |
| 555 | 0.58 | 555 | 0.58 |
| 556 | 0.57 | 556 | 0.57 |
| 557 | 0.56 | 557 | 0.56 |
| 558 | 0.55 | 558 | 0.55 |
| 559 | 0.54 | 559 | 0.54 |
| 560 | 0.54 | 560 | 0.54 |
| 561 | 0.54 | 561 | 0.54 |
| 562 | 0.54 | 562 | 0.54 |
| 563 | 0.54 | 563 | 0.54 |
| 564 | 0.54 | 564 | 0.54 |
| 565 | 0.54 | 565 | 0.54 |
| 566 | 0.54 | 566 | 0.54 |
| 567 | 0.55 | 567 | 0.55 |
| 568 | 0.55 | 568 | 0.55 |
| 569 | 0.55 | 569 | 0.55 |
| 570 | 0.55 | 570 | 0.55 |
| 571 | 0.55 | 571 | 0.55 |
| 572 | 0.55 | 572 | 0.55 |
| 573 | 0.55 | 573 | 0.55 |
| 574 | 0.54 | 574 | 0.54 |
| 575 | 0.53 | 575 | 0.53 |
| 576 | 0.52 | 576 | 0.52 |
| 577 | 0.51 | 577 | 0.51 |
| 578 | 0.50 | 578 | 0.50 |
| 579 | 0.49 | 579 | 0.49 |
| 580 | 0.47 | 580 | 0.47 |

[Fig. 22]

| COMPARATIVE EXAMPLE 1 | | | |
|---|---|---|---|
| OBJECT SIDE | | EYEBALL SIDE | |
| nm | % | nm | % |
| 581 | 0.45 | 581 | 0.45 |
| 582 | 0.44 | 582 | 0.44 |
| 583 | 0.42 | 583 | 0.42 |
| 584 | 0.40 | 584 | 0.40 |
| 585 | 0.38 | 585 | 0.38 |
| 586 | 0.37 | 586 | 0.37 |
| 587 | 0.35 | 587 | 0.35 |
| 588 | 0.34 | 588 | 0.34 |
| 589 | 0.32 | 589 | 0.32 |
| 590 | 0.31 | 590 | 0.31 |
| 591 | 0.30 | 591 | 0.30 |
| 592 | 0.29 | 592 | 0.29 |
| 593 | 0.28 | 593 | 0.28 |
| 594 | 0.27 | 594 | 0.27 |
| 595 | 0.26 | 595 | 0.26 |
| 596 | 0.26 | 596 | 0.26 |
| 597 | 0.25 | 597 | 0.25 |
| 598 | 0.25 | 598 | 0.25 |
| 599 | 0.25 | 599 | 0.25 |
| 600 | 0.24 | 600 | 0.24 |
| 601 | 0.24 | 601 | 0.24 |
| 602 | 0.24 | 602 | 0.24 |
| 603 | 0.24 | 603 | 0.24 |
| 604 | 0.24 | 604 | 0.24 |
| 605 | 0.24 | 605 | 0.24 |
| 606 | 0.23 | 606 | 0.23 |
| 607 | 0.23 | 607 | 0.23 |
| 608 | 0.23 | 608 | 0.23 |
| 609 | 0.23 | 609 | 0.23 |
| 610 | 0.23 | 610 | 0.23 |
| 611 | 0.23 | 611 | 0.23 |
| 612 | 0.23 | 612 | 0.23 |
| 613 | 0.23 | 613 | 0.23 |
| 614 | 0.23 | 614 | 0.23 |
| 615 | 0.23 | 615 | 0.23 |
| 616 | 0.23 | 616 | 0.23 |
| 617 | 0.22 | 617 | 0.22 |
| 618 | 0.22 | 618 | 0.22 |
| 619 | 0.22 | 619 | 0.22 |
| 620 | 0.22 | 620 | 0.22 |
| 621 | 0.22 | 621 | 0.22 |
| 622 | 0.22 | 622 | 0.22 |
| 623 | 0.22 | 623 | 0.22 |
| 624 | 0.23 | 624 | 0.23 |
| 625 | 0.23 | 625 | 0.23 |
| 626 | 0.23 | 626 | 0.23 |
| 627 | 0.23 | 627 | 0.23 |
| 628 | 0.23 | 628 | 0.23 |
| 629 | 0.24 | 629 | 0.24 |
| 630 | 0.24 | 630 | 0.24 |

[Fig. 23]

| COMPARATIVE EXAMPLE 1 | | | |
|---|---|---|---|
| OBJECT SIDE | | EYEBALL SIDE | |
| nm | % | nm | % |
| 631 | 0.25 | 631 | 0.25 |
| 632 | 0.25 | 632 | 0.25 |
| 633 | 0.26 | 633 | 0.26 |
| 634 | 0.27 | 634 | 0.27 |
| 635 | 0.28 | 635 | 0.28 |
| 636 | 0.29 | 636 | 0.29 |
| 637 | 0.30 | 637 | 0.30 |
| 638 | 0.31 | 638 | 0.31 |
| 639 | 0.32 | 639 | 0.32 |
| 640 | 0.34 | 640 | 0.34 |
| 641 | 0.36 | 641 | 0.36 |
| 642 | 0.37 | 642 | 0.37 |
| 643 | 0.39 | 643 | 0.39 |
| 644 | 0.42 | 644 | 0.42 |
| 645 | 0.44 | 645 | 0.44 |
| 646 | 0.46 | 646 | 0.46 |
| 647 | 0.48 | 647 | 0.48 |
| 648 | 0.51 | 648 | 0.51 |
| 649 | 0.54 | 649 | 0.54 |
| 650 | 0.56 | 650 | 0.56 |
| 651 | 0.59 | 651 | 0.59 |
| 652 | 0.62 | 652 | 0.62 |
| 653 | 0.65 | 653 | 0.65 |
| 654 | 0.67 | 654 | 0.67 |
| 655 | 0.70 | 655 | 0.70 |
| 656 | 0.73 | 656 | 0.73 |
| 657 | 0.76 | 657 | 0.76 |
| 658 | 0.79 | 658 | 0.79 |
| 659 | 0.81 | 659 | 0.81 |
| 660 | 0.84 | 660 | 0.84 |
| 661 | 0.87 | 661 | 0.87 |
| 662 | 0.89 | 662 | 0.89 |
| 663 | 0.91 | 663 | 0.91 |
| 664 | 0.94 | 664 | 0.94 |
| 665 | 0.96 | 665 | 0.96 |
| 666 | 0.98 | 666 | 0.98 |
| 667 | 1.01 | 667 | 1.01 |
| 668 | 1.03 | 668 | 1.03 |
| 669 | 1.05 | 669 | 1.05 |
| 670 | 1.07 | 670 | 1.07 |
| 671 | 1.09 | 671 | 1.09 |
| 672 | 1.11 | 672 | 1.11 |
| 673 | 1.13 | 673 | 1.13 |
| 674 | 1.15 | 674 | 1.15 |
| 675 | 1.17 | 675 | 1.17 |
| 676 | 1.20 | 676 | 1.20 |
| 677 | 1.22 | 677 | 1.22 |
| 678 | 1.25 | 678 | 1.25 |
| 679 | 1.27 | 679 | 1.27 |
| 680 | 1.30 | 680 | 1.30 |

[Fig. 24]

| COMPARATIVE EXAMPLE 1 | | | |
|---|---|---|---|
| OBJECT SIDE | | EYEBALL SIDE | |
| nm | % | nm | % |
| 681 | 1.33 | 681 | 1.33 |
| 682 | 1.36 | 682 | 1.36 |
| 683 | 1.39 | 683 | 1.39 |
| 684 | 1.43 | 684 | 1.43 |
| 685 | 1.46 | 685 | 1.46 |
| 686 | 1.50 | 686 | 1.50 |
| 687 | 1.54 | 687 | 1.54 |
| 688 | 1.58 | 688 | 1.58 |
| 689 | 1.62 | 689 | 1.62 |
| 690 | 1.66 | 690 | 1.66 |
| 691 | 1.70 | 691 | 1.70 |
| 692 | 1.75 | 692 | 1.75 |
| 693 | 1.79 | 693 | 1.79 |
| 694 | 1.84 | 694 | 1.84 |
| 695 | 1.88 | 695 | 1.88 |
| 696 | 1.93 | 696 | 1.93 |
| 697 | 1.98 | 697 | 1.98 |
| 698 | 2.02 | 698 | 2.02 |
| 699 | 2.07 | 699 | 2.07 |
| 700 | 2.11 | 700 | 2.11 |
| 701 | 2.15 | 701 | 2.15 |
| 702 | 2.20 | 702 | 2.20 |
| 703 | 2.24 | 703 | 2.24 |
| 704 | 2.28 | 704 | 2.28 |
| 705 | 2.31 | 705 | 2.31 |
| 706 | 2.35 | 706 | 2.35 |
| 707 | 2.39 | 707 | 2.39 |
| 708 | 2.42 | 708 | 2.42 |
| 709 | 2.45 | 709 | 2.45 |
| 710 | 2.48 | 710 | 2.48 |
| 711 | 2.51 | 711 | 2.51 |
| 712 | 2.54 | 712 | 2.54 |
| 713 | 2.57 | 713 | 2.57 |
| 714 | 2.59 | 714 | 2.59 |
| 715 | 2.62 | 715 | 2.62 |
| 716 | 2.64 | 716 | 2.64 |
| 717 | 2.66 | 717 | 2.66 |
| 718 | 2.68 | 718 | 2.68 |
| 719 | 2.71 | 719 | 2.71 |
| 720 | 2.73 | 720 | 2.73 |
| 721 | 2.75 | 721 | 2.75 |
| 722 | 2.77 | 722 | 2.77 |
| 723 | 2.80 | 723 | 2.80 |
| 724 | 2.82 | 724 | 2.82 |
| 725 | 2.84 | 725 | 2.84 |
| 726 | 2.87 | 726 | 2.87 |
| 727 | 2.90 | 727 | 2.90 |
| 728 | 2.92 | 728 | 2.92 |
| 729 | 2.95 | 729 | 2.95 |
| 730 | 2.98 | 730 | 2.98 |

[Fig. 25]

| COMPARATIVE EXAMPLE 1 | | | |
|---|---|---|---|
| OBJECT SIDE | | EYEBALL SIDE | |
| nm | % | nm | % |
| 731 | 3.01 | 731 | 3.01 |
| 732 | 3.05 | 732 | 3.05 |
| 733 | 3.08 | 733 | 3.08 |
| 734 | 3.12 | 734 | 3.12 |
| 735 | 3.15 | 735 | 3.15 |
| 736 | 3.19 | 736 | 3.19 |
| 737 | 3.23 | 737 | 3.23 |
| 738 | 3.27 | 738 | 3.27 |
| 739 | 3.31 | 739 | 3.31 |
| 740 | 3.36 | 740 | 3.36 |
| 741 | 3.40 | 741 | 3.40 |
| 742 | 3.44 | 742 | 3.44 |
| 743 | 3.49 | 743 | 3.49 |
| 744 | 3.53 | 744 | 3.53 |
| 745 | 3.57 | 745 | 3.57 |
| 746 | 3.62 | 746 | 3.62 |
| 747 | 3.66 | 747 | 3.66 |
| 748 | 3.70 | 748 | 3.70 |
| 749 | 3.74 | 749 | 3.74 |
| 750 | 3.78 | 750 | 3.78 |
| 751 | 3.82 | 751 | 3.82 |
| 752 | 3.86 | 752 | 3.86 |
| 753 | 3.89 | 753 | 3.89 |
| 754 | 3.93 | 754 | 3.93 |
| 755 | 3.96 | 755 | 3.96 |
| 756 | 3.99 | 756 | 3.99 |
| 757 | 4.02 | 757 | 4.02 |
| 758 | 4.05 | 758 | 4.05 |
| 759 | 4.08 | 759 | 4.08 |
| 760 | 4.11 | 760 | 4.11 |
| 761 | 4.13 | 761 | 4.13 |
| 762 | 4.15 | 762 | 4.15 |
| 763 | 4.18 | 763 | 4.18 |
| 764 | 4.20 | 764 | 4.20 |
| 765 | 4.22 | 765 | 4.22 |
| 766 | 4.24 | 766 | 4.24 |
| 767 | 4.25 | 767 | 4.25 |
| 768 | 4.27 | 768 | 4.27 |
| 769 | 4.28 | 769 | 4.28 |
| 770 | 4.30 | 770 | 4.30 |
| 771 | 4.31 | 771 | 4.31 |
| 772 | 4.33 | 772 | 4.33 |
| 773 | 4.34 | 773 | 4.34 |
| 774 | 4.35 | 774 | 4.35 |
| 775 | 4.36 | 775 | 4.36 |
| 776 | 4.38 | 776 | 4.38 |
| 777 | 4.39 | 777 | 4.39 |
| 778 | 4.40 | 778 | 4.40 |
| 779 | 4.42 | 779 | 4.42 |
| 780 | 4.43 | 780 | 4.43 |

## INTERNATIONAL SEARCH REPORT

| International application No. |
| --- |
| **PCT/JP2024/013022** |

| A. | CLASSIFICATION OF SUBJECT MATTER |
| --- | --- |

*G02C 7/00*(2006.01)i; *G02B 1/115*(2015.01)i; *G02C 7/02*(2006.01)i; *G02C 7/10*(2006.01)i
FI:  G02C7/00; G02B1/115; G02C7/02; G02C7/10

According to International Patent Classification (IPC) or to both national classification and IPC

| B. | FIELDS SEARCHED |
| --- | --- |

Minimum documentation searched (classification system followed by classification symbols)

G02C7/00; G02B1/115; G02C7/02; G02C7/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 6073355 B2 (NIKON-ESSILOR CO., LTD.) 01 February 2017 (2017-02-01) paragraphs [0005]-[0019], [0053]-[0067], [0085]-[0118], fig. 1-2, 5A-11B | 1-11 |
| Y | WO 2018/181911 A1 (HOYA LENS THAILAND LTD.) 04 October 2018 (2018-10-04) paragraph [0023], example 1, fig. 1 | 1-11 |
| Y | WO 2016/088763 A1 (HOYA LENS THAILAND LTD.) 09 June 2016 (2016-06-09) paragraphs [0031]-[0032] | 2, 9-10 |
| Y | WO 2019/103105 A1 (HOYA LENS THAILAND LTD.) 31 May 2019 (2019-05-31) paragraph [0031] | 2, 9-10 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/013022**

| Patent document cited in search report | | | Publication date (day/month/year) | Patent family member(s) | | | Publication date (day/month/year) |
|---|---|---|---|---|---|---|---|
| JP | 6073355 | B2 | 01 February 2017 | US | 2015/0234209 | A1 | |
| | | | | paragraphs [0007]-[0022], [0084]-[0098], [0130]-[0170], fig. 1-2, 5A-11B | | | |
| | | | | WO | 2014/069250 | A1 | |
| | | | | EP | 2916148 | A1 | |
| | | | | AU | 2013339455 | A1 | |
| | | | | CA | 2889496 | A1 | |
| | | | | KR | 10-2015-0059789 | A | |
| | | | | CN | 104838305 | A | |
| | | | | TW | 201432288 | A | |
| WO | 2018/181911 | A1 | 04 October 2018 | US | 2020/0018993 | A1 | |
| | | | | paragraph [0034], example 1, fig. 1 | | | |
| | | | | EP | 3605203 | A1 | |
| | | | | KR | 10-2019-0136050 | A | |
| | | | | CN | 110832388 | A | |
| WO | 2016/088763 | A1 | 09 June 2016 | US | 2017/0299896 | A1 | |
| | | | | paragraphs [0041]-[0043] | | | |
| | | | | EP | 3229060 | A1 | |
| | | | | CA | 2969346 | A1 | |
| | | | | AU | 2015356057 | A1 | |
| | | | | KR | 10-2017-0080630 | A | |
| | | | | CN | 107003545 | A | |
| WO | 2019/103105 | A1 | 31 May 2019 | US | 2019/0219841 | A1 | |
| | | | | paragraphs [0078]-[0081] | | | |
| | | | | EP | 3514612 | A1 | |
| | | | | KR | 10-2019-0069402 | A | |
| | | | | CN | 110140079 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6073355 B

- JP 2012128135 A